(19) **Europäisches Patentamt / European Patent Office / Office européen des brevets**

(11) **EP 4 615 055 A1**

(12) **EUROPEAN PATENT APPLICATION**
published in accordance with Art. 153(4) EPC

(43) Date of publication:
**10.09.2025 Bulletin 2025/37**

(21) Application number: **23885120.8**

(22) Date of filing: **03.11.2023**

(51) International Patent Classification (IPC):
***H04W 36/00*** (2009.01)

(52) Cooperative Patent Classification (CPC):
**H04W 24/02; H04W 36/00; H04W 36/08**

(86) International application number:
**PCT/CN2023/129757**

(87) International publication number:
**WO 2024/094196 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.11.2022 CN 202211379058**

(71) Applicant: **Huawei Technologies Co., Ltd.
Shenzhen, Guangdong 518129 (CN)**

(72) Inventors:
• **YUAN, Shitong
Shenzhen, Guangdong 518129 (CN)**
• **FAN, Bo
Shenzhen, Guangdong 518129 (CN)**

(74) Representative: **Epping - Hermann - Fischer
Patentanwaltsgesellschaft mbH
Schloßschmidstraße 5
80639 München (DE)**

(54) **RESOURCE MEASUREMENT METHOD, MEASUREMENT GAP CONFIGURATION METHOD, AND RELATED APPARATUS**

(57) Embodiments of this application disclose a resource measurement method, a measurement gap configuration method, and a related apparatus, so that a terminal device measures a target measurement resource in a first measurement resource set configured by a network device, thereby helping the terminal device obtain measurement results of more cells. The method in embodiments of this application includes: A terminal device receives first configuration information from a network device, where the first configuration information is used to configure a first measurement resource set, and the first measurement resource set includes an identifier of at least one neighbor cell of the terminal device, a global identifier of a target measurement resource of the at least one neighbor cell, and a local identifier of the target measurement resource of the at least one neighbor cell. The terminal device measures the target measurement resource in the first measurement resource set, to obtain a first measurement result.

FIG. 4A

## Description

This application claims priority to Chinese Patent Application No. 202211379058.2, filed with the China National Intellectual Property Administration on November 4, 2022 and entitled "RESOURCE MEASUREMENT METHOD, MEASUREMENT GAP CONFIGURATION METHOD, AND RELATED APPARATUS", which is incorporated herein by reference in its entirety.

## TECHNICAL FIELD

This application relates to the field of communication technologies, and in particular, to a resource measurement method, a measurement gap configuration method, and a related apparatus.

## BACKGROUND

A Release 16 (Release 16, R16) standard and a standard earlier than R16 support only measurement of a resource of a serving cell of a terminal device, for example, a synchronization signal block (synchronization signal physical broadcasting channel, SSB) resource or a channel state information reference signal (channel state information reference signal, CSI-RS) resource of the serving cell, for layer 1 (Layer 1, L 1) measurement.

An R17 standard further supports measurement of a reference signal of a non-serving cell associated with the terminal device for cross-cell beam management. For example, when the terminal device needs to measure an SSB of a neighbor cell, a network device configures a physical cell identifier (physical cell identifier, PCI) of the associated neighbor cell for a to-be-measured resource of the terminal device in configuration information of the terminal device, that is, indicates that the SSB is not an SSB of a serving cell, to measure the SSB of the neighbor cell, so as to obtain signal quality of the SSB of the neighbor cell.

It can be learned that the foregoing technical solution supports only measurement of a reference signal of the serving cell or a reference signal of the associated neighbor cell, but does not support measurement of reference signals of more cells. Consequently, accuracy of performing cell mobility decision by the network device based on a measurement result of the terminal device is low.

## SUMMARY

This application provides a resource measurement method, a measurement gap configuration method, and a related apparatus, so that a terminal device measures a target measurement resource in a first measurement resource set configured by a network device. In this way, the terminal device obtains measurement results of more cells.

A first aspect of this application provides a resource measurement method, including:
A terminal device receives first configuration information from a network device. The first configuration information is used to configure a first measurement resource set. The first measurement resource set includes at least one of the following: an identifier of at least one neighbor cell of the terminal device, a global identifier of a target measurement resource of the at least one neighbor cell, or a local identifier of the target measurement resource of the at least one neighbor cell. The neighbor cell may be understood as a non-serving cell of the terminal device, or the neighbor cell uses a physical cell identifier different from that of a serving cell of the terminal device. The terminal device measures the target measurement resource in the first measurement resource set, to obtain a first measurement result.

In the foregoing technical solution, the terminal device receives the first measurement resource set configured by the network device, and measures the target measurement resource in the first measurement resource set. In this way, the terminal device measures the target measurement resource of the at least one neighbor cell. Specifically, the first configuration information includes the first measurement resource set, and the first measurement resource set includes the identifier of the at least one neighbor cell of the terminal device, N global identifiers, and N local identifiers. The N global identifiers are in one-to-one correspondence with N target measurement resources, and the N local identifiers are in one-to-one correspondence with the N target measurement resources. The N target measurement resources are a target measurement resource of the at least one neighbor cell, and N is an integer greater than or equal to 1. In other words, the first measurement resource set includes the identifier of at least one neighbor cell of the terminal device, the global identifier of each of the at least one target measurement resource of the at least one neighbor cell, and the local identifier of the target measurement resource. The network device may explicitly configure the measurement resource for the at least one neighbor cell of the terminal device. In this way, the terminal device obtains measurement results of more cells. This helps the network device accurately perform cell mobility decision based on the measurement results obtained by the terminal device. For example, a frequency used by the at least one neighbor cell may be different from or the same as a frequency of the serving cell of the terminal device, so that the terminal device obtains signal quality of the neighbor cell at different frequencies. In this way, the network device can accurately perform the cell mobility decision based on the measurement results of the terminal device. The network device hands over the terminal device to a proper cell, to improve communication performance.

A second aspect of this application provides a resource measurement method, including:

A network device determines first configuration information. The first configuration information is used to configure a first measurement resource set. The first measurement resource set includes at least one of the following: an identifier of at least one neighbor cell of a terminal device, a global identifier of a target measurement resource of the at least one neighbor cell, or a local identifier of the target measurement resource of the at least one neighbor cell. Then, the network device sends the first configuration information to the terminal device.

In the foregoing technical solution, the network device can configure the first measurement resource set for the terminal device, so that the terminal device measures a target measurement resource in the first measurement resource set. Specifically, the first configuration information includes the first measurement resource set, and the first measurement resource set includes the identifier of the at least one neighbor cell of the terminal device, N global identifiers, and N local identifiers. The N global identifiers are in one-to-one correspondence with N target measurement resources, and the N local identifiers are in one-to-one correspondence with the N target measurement resources. The N target measurement resources are a target measurement resource of the at least one neighbor cell, and N is an integer greater than or equal to 1. In other words, the first measurement resource set includes the identifier of at least one neighbor cell of the terminal device, the global identifier of each of the at least one target measurement resource of the at least one neighbor cell, and the local identifier of the target measurement resource. The network device may explicitly configure the measurement resource for the at least one neighbor cell of the terminal device. In this way, the terminal device obtains measurement results of more cells. This helps the network device accurately perform cell mobility decision based on the measurement results obtained by the terminal device. For example, a frequency used by the at least one neighbor cell may be different from or the same as a frequency of the serving cell of the terminal device. Therefore, the terminal device obtains signal quality of the neighbor cell at different frequencies. In this way, the network device can accurately perform the cell mobility decision based on the measurement results of the terminal device. The network device hands over the terminal device to a proper cell, to improve communication performance.

According to the first aspect or the second aspect, in a possible implementation, the first configuration information is further used to configure at least one second measurement resource set. The at least one second measurement resource set is in one-to-one correspondence with the at least one neighbor cell, and one of the at least one second measurement resource set includes a global identifier of a measurement resource of a neighbor cell corresponding to the second measurement resource set.

In this implementation, the network device may further configure the at least one second measurement resource set for the terminal device by using the first configuration information. Specifically, the second configuration information includes the at least one second measurement resource set. Each second measurement resource set includes the global identifier of the measurement resource of the neighbor cell corresponding to the second measurement resource set. In this way, the network device indicates the target measurement resource of the at least one neighbor cell to the terminal device, so that the terminal device measures the target measurement resource of the at least one neighbor cell.

According to the first aspect or the second aspect, in a possible implementation, the first configuration information further includes configuration information of a measurement resource of the at least one neighbor cell. The configuration information of the measurement resource of the at least one neighbor cell includes at least one of the following: the identifier of the at least one neighbor cell and configuration information of a reference signal of the at least one neighbor cell. The target measurement resource of the at least one neighbor cell belongs to the measurement resource of the at least one neighbor cell.

In this implementation, the network device explicitly configures the measurement resource for the at least one neighbor cell of the terminal device. In this way, the terminal device obtains measurement results of more cells. This helps the network device accurately perform cell mobility decision based on the measurement results obtained by the terminal device.

According to the first aspect or the second aspect, in a possible implementation, when the reference signal is a synchronization signal block (synchronization signal block, SSB), the configuration information of the SSB of the at least one neighbor cell includes at least one of the following: a center frequency of the SSB, a subcarrier spacing of the SSB, an index of the SSB, a periodicity of the SSB, a system frame occupied by the SSB, an offset of the system frame occupied by the SSB, or a subframe offset of the SSB; or

when the reference signal is a channel state information reference signal (channel status information reference signal, CSI-RS), the configuration information of the CSI-RS of the at least one neighbor cell includes at least one of the following: an identifier of a CSI-RS resource occupied by the CSI-RS, frequency domain resource density of the CSI-RS, a subcarrier spacing, a center frequency, bandwidth, a position of a start resource block (resource block, RB), a scrambling sequence identifier, a periodicity, a slot offset, a power offset of the CSI-RS relative to an SSB, an index of an SSB associated with the CSI-RS, or an identifier of a cell to which the SSB associated with the CSI-RS belongs.

In this implementation, content included in the configuration information of the reference signal of the neighbor

**EP 4 615 055 A1**

cell is shown with reference to a type of the reference signal of the neighbor cell. This facilitates implementation of the solution. In this way, the network device explicitly configures the configuration information of the reference signal of the neighbor cell for the terminal device, so that the terminal device measures the reference signal of the neighbor cell, to obtain measurement results of more cells. The network device accurately performs inter-cell mobility decision for the terminal device based on the measurement results obtained by the terminal device.

According to the first aspect, in a possible implementation, the first configuration information is used to configure a plurality of measurement resource sets, and the first measurement resource set is one of the plurality of measurement resource sets. Before the terminal device measures the target measurement resource in the first measurement resource set, to obtain the first measurement result, the method further includes: The terminal device receives indication information from the network device. The indication information indicates the first measurement resource set.

In this implementation, if the plurality of measurement resource sets are configured by using the first configuration information, the network device may dynamically indicate, through the indication information, the terminal device to measure a target measurement resource in a measurement resource set. The indication information indicates the terminal device to measure the target measurement resource in the first measurement resource set. In this way, the network device indicates, based on an actual requirement, the terminal device to measure a corresponding target measurement resource. This helps improve that the network device selects, based on the measurement results of the terminal device, a proper cell for the terminal device, where the terminal device is to be handed over to the cell, to improve communication performance.

According to the second aspect, in a possible implementation, the first configuration information is used to configure a plurality of measurement resource sets, and the first measurement resource set is one of the plurality of measurement resource sets. The method further includes: The network device sends indication information to the terminal device. The indication information indicates the first measurement resource set.

In this implementation, if the plurality of measurement resource sets are configured by using the first configuration information, the network device may dynamically indicate, through the indication information, the terminal device to measure a target measurement resource in a measurement resource set. The indication information indicates the terminal device to measure the target measurement resource in the first measurement resource set. In this way, the network device indicates, based on an actual requirement, the terminal device to measure a corresponding target measurement resource. This helps improve that the network device selects, based on the measurement results of the terminal device, a proper cell for the terminal device, where the terminal device is to be handed over to the cell, to improve communication performance.

According to the first aspect, in a possible implementation, the first measurement resource set further includes an identifier of a serving cell of the terminal device, a global identifier of a target measurement resource of the serving cell, and a local identifier of the target measurement resource of the serving cell.

That the terminal device measures the target measurement resource in the first measurement resource set, to obtain a first measurement result includes: The terminal device measures the target measurement resource of the at least one neighbor cell and the target measurement resource of the serving cell, to obtain the first measurement result.

In this implementation, if the first measurement resource set includes the target measurement resource of the serving cell, the terminal device further needs to measure the target measurement resource of the serving cell. In this way, the network device determines signal quality of the serving cell based on the measurement result reported by the terminal device.

According to the first aspect or the second aspect, in a possible implementation, the first configuration information further includes configuration information of a measurement resource of the serving cell. In this implementation, the network device may further configure the configuration information of the measurement resource of the serving cell by using the first configuration information. In this way, the terminal device measures the measurement resource of the serving cell.

According to the first aspect, in a possible implementation, the method further includes: The terminal device receives second configuration information from the network device. The second configuration information indicates whether to enable L1 cell quality measurement, and/or the second configuration information indicates whether to enable L1 filtering. That the terminal device measures the target measurement resource in the first measurement resource set, to obtain a first measurement result includes: The terminal device measures the target measurement resource in the first measurement resource set based on the second configuration information, to obtain the first measurement result.

In this implementation, the network device may indicate, by using the second configuration information, the terminal device whether to enable the L1 cell quality measurement and/or the L1 filtering. In this way, the network device may dynamically indicate, based on an actual requirement, the terminal device to use a corresponding measurement manner, to improve flexibility and practicability of the solution. Specifically, the second configuration information indicates whether the terminal device enables L1 cell quality for each cell in the first measurement resource set, and/or whether the terminal device enables the L1 filtering for signal quality obtained by the terminal device by measuring the target measurement resource in the first measurement resource set. Further, if the second configuration information indicates to enable the L1 cell quality measurement, and/or the second configuration information indicates to enable the L1 filtering, the terminal device measures the target measurement resource in the first measurement resource set with reference to the second configuration information. This helps improve accuracy of the first measurement result. This further helps the network device accurately perform the inter-cell mobility decision for the terminal device based on the first measurement result.

According to the second aspect, in a possible implementation, the method further includes: The network device sends second configuration information to the terminal device. The second configuration information indicates whether to enable L1 cell quality measurement, and/or the second configuration information indicates whether to enable L1 filtering.

In this implementation, the network device may indicate, by using the second configuration information, the terminal device whether to enable the L1 cell quality measurement and/or the L1 filtering. In this way, the network device may dynamically indicate, based on an actual requirement, the terminal device to use a corresponding measurement manner, to improve flexibility and practicability of the solution. Further, if the second configuration information indicates to enable the L1 cell quality measurement, and/or the second configuration information indicates to enable the L1 filtering, the terminal device measures the target measurement resource in the first measurement resource set with reference to the second configuration information. This helps improve accuracy of the first measurement result. This further helps the network device accurately perform the inter-cell mobility decision for the terminal device based on the first measurement result.

According to the first aspect or the second aspect, in a possible implementation, if the second configuration information indicates to enable the L1 cell quality measurement, the second configuration information includes a cell quality calculation parameter, and the cell quality calculation parameter is used by the terminal device to calculate cell quality of each cell based on a measurement result of a reference signal of the cell in the first measurement resource set; or

if the second configuration information indicates to enable the L 1 cell quality measurement, the second configuration information includes N weights, N reference signals of each cell in the first measurement resource set are in one-to-one correspondence with the N weights in descending or ascending order of signal quality of the N reference signals, the signal quality of the N reference signals and the N weights are used to determine cell quality of the cell, and N is an integer greater than or equal to 1.

In this implementation, if the second configuration information indicates to enable the L1 cell quality measurement, the second configuration information further includes the cell quality calculation parameter or the N weights. In this way, the terminal device calculates the cell quality of each cell based on the cell quality calculation parameter or the N weights. This helps improve accuracy of the first measurement result, so that the network device accurately performs the inter-cell mobility decision for the terminal device based on the first measurement result.

According to the first aspect or the second aspect, in a possible implementation, if the second configuration information indicates to enable the L1 filtering, the second configuration information includes an L1 filtering coefficient. The L1 filtering coefficient is used by the terminal device to perform the L1 filtering on signal quality corresponding to a target measurement resource of each cell in the first measurement resource set.

In this implementation, if the second configuration information indicates to enable the L1 filtering, the second configuration information includes the L1 filtering coefficient. In this way, the terminal device performs the L1 filtering on the signal quality corresponding to the target measurement resource of each cell. This helps improve accuracy of the first measurement result, so that the network device accurately performs the inter-cell mobility decision for the terminal device based on the first measurement result.

According to the first aspect or the second aspect, in a possible implementation, the second configuration information is further used to configure a reporting quantity type of the terminal device. In this implementation, the network device may further indicate a type of a reporting quantity, so that the network device parses the measurement result reported by the terminal device.

According to the first aspect, in a possible implementation, the method further includes: The terminal device sends the first measurement result to the network device.

In this implementation, the terminal device reports the first measurement result. In this way, the network device selects, for the terminal device based on the first measurement result, a proper cell to which the terminal device is to be handed over.

According to the second aspect, in a possible implementation, the method further includes: The network device receives the first measurement result from the terminal device. In this implementation, the network device obtains the first measurement result, so that the network device selects, for the terminal device based on the first measurement result, a proper cell to which the terminal device is to be handed over.

According to the first aspect or the second aspect, in a possible implementation, if the first measurement resource set further includes the identifier of the serving cell of the terminal device, the global identifier of the target measurement resource of the serving cell, and the local identifier of the target measurement resource of the serving cell,

the first measurement result includes cell quality of the serving cell and cell quality of a neighbor cell with best cell quality in the at least one neighbor cell. Alternatively, the first measurement result includes cell quality of M cells with best cell quality in the serving cell and the at least one neighbor cell, and M is greater than or equal to 1 and less than or equal to a total quantity of the serving cell and the at least one neighbor cell. In this way, the network device determines, with reference to the first measurement result, whether to hand over the terminal device from the serving cell to the neighbor cell.

Alternatively, the first measurement result includes cell quality of the serving cell, the local identifier of the target measurement resource of the serving cell, signal quality corresponding to a target measurement resource with best signal quality in the target measurement resource of the serving cell, cell quality of a neighbor cell with best cell quality in the at least one neighbor cell, a local identifier of a target measurement resource with best signal quality in the target measurement resource of the neighbor cell, and the signal quality of the target measurement resource with the best signal quality in the target measurement resource of the neighbor cell. Alternatively, the first measurement result includes cell quality of M cells with best cell quality in the serving cell and the at least one neighbor cell, signal quality of a target measurement resource with best signal quality in a target measurement resource of the M cells, and a local identifier of the target measurement resource with the best signal quality. In this way, the network device determines, with reference to the first measurement result, whether to hand over the terminal device from the serving cell to the neighbor cell with the best cell quality. Further, the terminal device may report the local identifier of the target measurement resource, so that the network device identifies the target measurement resource. The terminal device occupies a small quantity of bits to indicate the target local identifier. This helps reduce reporting overheads of the terminal device.

A third aspect of this application provides an activation method, including:

A terminal device receives first indication information from a network device. The first indication information is used to activate at least one first measurement resource set, or the first indication information is used to activate at least one second measurement resource set, or the first indication information is used to activate the at least one first measurement resource set and the at least one second measurement resource set. Each first measurement resource set includes at least one of the following: an identifier of at least one candidate cell of the terminal device, a global identifier of a target measurement resource of the at least one candidate cell, or a local identifier of the target measurement resource of the at least one candidate cell. Each second measurement resource set includes one or more measurement resources of a serving cell of the terminal device. In this way, the network device activates the at least one first measurement resource set and/or the at least one second measurement resource set for the terminal device, so that the terminal device is flexibly configured to measure the first measurement resource set and/or the second measurement resource set.

A fourth aspect of this application provides an activation method, including:

A network device sends first indication information to a terminal device. The first indication information is used to activate at least one first measurement resource set, or the first indication information is used to activate at least one second measurement resource set, or the first indication information is used to activate the at least one first measurement resource set and the at least one second measurement resource set. Each first measurement resource set includes at least one of the following: an identifier of at least one candidate cell of the terminal device, a global identifier of a target measurement resource of the at least one candidate cell, or a local identifier of the target measurement resource of the at least one candidate cell. Each second measurement resource set includes one or more measurement resources of a serving cell of the terminal device. In this way, the network device activates the at least one first measurement resource set and/or the at least one second measurement resource set for the terminal device, so that the terminal device is flexibly configured to measure the first measurement resource set and/or the second measurement resource set.

According to the third aspect or the fourth aspect, in a possible implementation, the first indication information is carried in a medium access control control element MAC CE.

According to the third aspect or the fourth aspect, in a possible implementation, 1 bit in the MAC CE indicates a type of a measurement resource set activated by using the MAC CE, and the type includes the first measurement resource set or the second measurement resource set.

According to the third aspect or the fourth aspect, in a possible implementation, values of 4 bits in the MAC CE respectively indicate measurement resource sets corresponding to reporting configurations indicated by an S1 field to an S3 field in the MAC CE, and the measurement resource sets corresponding to the reporting configurations indicated by the S1 field to the S3 field include the first measurement resource set and/or the second measurement resource set.

According to the third aspect or the fourth aspect, in a possible implementation, the MAC CE includes one or more new bits, the one or more bits indicate a type of a measurement resource set activated by using the MAC CE, and the type includes the first measurement resource set or the second measurement resource set.

According to the third aspect or the fourth aspect, in a possible implementation, if the MAC CE is a first-type MAC CE, the MAC CE is used to activate the at least one first measurement resource set; or if the MAC CE is a second-type MAC CE, the MAC CE is used to activate the at least one second measurement resource set.

According to the third aspect, in a possible implementation, the MAC CE is used to activate the at least one first measurement resource set, or the MAC CE is used to activate the at least one first measurement resource set and the at least one second measurement resource set. The method further includes: The terminal device receives at least one piece of first reporting configuration information from the network device. The at least one piece of first reporting configuration information is used to configure a reporting format and a reporting type of a measurement result obtained by measuring a target measurement resource in the at least one first measurement resource set, and the reporting type is aperiodic reporting, semi-persistent reporting, or periodic reporting.

According to the fourth aspect, in a possible implementation, the MAC CE is used to activate the at least one first measurement resource set, or the MAC CE is used to activate the at least one first measurement resource set and the at least one second measurement resource set. The method further includes: The network device sends at least one piece of first reporting configuration information to the terminal device. The at least one piece of first reporting configuration information is used to configure a reporting format and a reporting type of a measurement result obtained by measuring a target measurement resource in the at least one first measurement resource set, and the reporting type is aperiodic reporting, semi-persistent reporting, or periodic reporting.

According to the third aspect or the fourth aspect, in a possible implementation, one piece of first reporting configuration information is corresponding to one first measurement resource set, each piece of first reporting configuration information includes one reporting configuration identifier, and the reporting configuration identifier is corresponding to one reporting type.

According to the third aspect or the fourth aspect, in a possible implementation, when a reporting type corresponding to one reporting configuration identifier in the at least one piece of first reporting configuration information is semi-persistent reporting, the reporting configuration identifier is mapped to or associated with one codepoint in the first indication information.

According to the third aspect or the fourth aspect, in a possible implementation, when reporting types corresponding to a plurality of reporting configuration identifiers in the at least one piece of first reporting configuration information are semi-persistent reporting, the plurality of reporting configuration identifiers are mapped to or associated with a plurality of codepoints in the first indication information in ascending order. The plurality of codepoints are sorted in ascending order.

According to the third aspect, in a possible implementation, the method further includes: The terminal device receives at least one piece of second reporting configuration information from the network device. The at least one piece of second reporting configuration information is used to configure a reporting format and a reporting type of a measurement result obtained by measuring the at least one second measurement resource set. The reporting type is aperiodic reporting, semi-persistent reporting, or periodic reporting. The at least one piece of second reporting configuration information is in one-to-one correspondence with the at least one second measurement resource set. Each piece of second reporting configuration information includes one reporting configuration identifier. The reporting configuration identifier is corresponding to one reporting type.

According to the fourth aspect, in a possible implementation, the method further includes: The network device sends at least one piece of second reporting configuration information from the terminal device. The at least one piece of second reporting configuration information is used to configure a reporting format and a reporting type of a measurement result obtained by measuring the at least one second measurement resource set. The reporting type is aperiodic reporting, semi-persistent reporting, or periodic reporting. One piece of second reporting configuration information is corresponding to one second measurement resource set. Each piece of second reporting configuration information includes one reporting configuration identifier. The reporting configuration identifier is corresponding to one reporting type.

According to the third aspect or the fourth aspect, in a possible implementation, when a reporting type corresponding to one reporting configuration identifier in the at least one piece of first reporting configuration information and the at least one piece of second reporting configuration information is semi-persistent reporting, the reporting configuration identifier is mapped to or associated with one codepoint in the first indication information.

According to the third aspect or the fourth aspect, in a possible implementation, when reporting types corresponding to a plurality of reporting configuration identifiers in the at least one piece of first reporting configuration information and the at least one piece of second reporting configuration information are semi-persistent reporting, the plurality of reporting configuration identifiers are mapped to or associated with a plurality of codepoints in the first indication information in ascending order. The plurality of codepoints are sorted in ascending order.

According to the third aspect or the fourth aspect, in a possible implementation, when reporting types corresponding to a plurality of reporting configuration identifiers in the at least one piece of first reporting configuration information are semi-persistent reporting, the plurality of reporting configuration identifiers are mapped to or associated with a plurality of first codepoints in the first indication information in ascending order. The plurality of first codepoints are sorted in ascending order. When reporting types corresponding to a plurality of reporting configuration identifiers in the at least one piece of second reporting configuration information are semi-persistent reporting, the plurality of reporting configuration identifiers are mapped to or associated with a plurality of second codepoints in the first indication information in ascending order. The plurality of second codepoints are sorted in ascending order.

According to the third aspect or the fourth aspect, in a possible implementation, for a measurement result of one of the at least one first measurement resource set, the reporting format includes: The terminal device reports at least signal quality of F target measurement resources with best signal quality in target measurement resources of each cell in the serving cell of the terminal device and the at least one candidate cell and a local identifier of the F target measurement resources with the best signal quality, where F is an integer greater than or equal to 1.

According to the third aspect or the fourth aspect, in a possible implementation, for a measurement result of one of the at least one first measurement resource set, the reporting format includes: The terminal device reports at least signal quality of F target measurement resources with best signal quality in a target measurement resource of each of M cells and a local identifier of the F target measurement resources with the best signal quality, where the M cells are M cells with best cell quantity in the serving cell and the at least one candidate cell, and F is an integer greater than or equal to 1.

According to the third aspect, in a possible implementation, the method further includes: The terminal device measures, based on the reporting format configured by using the at least one piece of first reporting configuration information, the target measurement resource in the at least one first measurement resource set activated by using the first indication information, to obtain at least one first measurement result.

According to the third aspect, in a possible implementation, the method further includes: The terminal device receives measurement resource set configuration information from the network device. The measurement resource set configuration information is used to configure the at least one first measurement resource set.

According to the fourth aspect, in a possible implementation, the method further includes: The network device sends measurement resource set configuration information to the terminal device. The measurement resource set configuration information is used to configure the at least one first measurement resource set.

A fifth aspect of this application provides a measurement gap configuration method, including:

A terminal device receives first information from a network device. The first information is used to configure at least one measurement gap for the terminal device. In the at least one measurement gap, each measurement gap is corresponding to one or more neighbor cells of the terminal device, or each measurement gap is corresponding to one beam or one group of beams of the terminal device, or each measurement gap is corresponding to one or more measurement resource sets, or each measurement gap is corresponding to one or more measurement resources, or each measurement resource is corresponding to one or more frequency bands. The terminal device measures a reference signal based on the at least one measurement gap.

In the foregoing technical solution, the first information is used to configure the at least one measurement gap for the terminal device. In the at least one measurement gap, each measurement gap is corresponding to the one or more neighbor cells of the terminal device, or each measurement gap is corresponding to the one beam or one group of beams of the terminal device, or each measurement gap is corresponding to the one or more measurement resource sets, or each measurement gap is corresponding to the one or more measurement resources, or each measurement resource is corresponding to the one or more frequency bands. It can be learned that, the network device configures the measurement gap for the terminal device at a granularity of the neighbor cell, the beam, the measurement resource, the measurement resource set, or the frequency band. This helps improve accuracy of measuring a reference signal by the terminal device. Further, this helps the network device configure a proper measurement gap for the terminal device, to avoid a problem that a throughput of the terminal device is reduced because a length of the measurement gap is excessively large, and also avoid a problem that the reference signal measured by the terminal device is inaccurate because the length of the measurement gap is excessively small.

A sixth aspect of this application provides a measurement gap configuration method, including:

A network device determines first information. The first information is used to configure at least one measurement gap for a terminal device. In the at least one measurement gap, each measurement gap is corresponding to one or more neighbor cells of the terminal device, or each measurement gap is corresponding to one beam or one group of beams of the terminal device, or each measurement gap is corresponding to one or more measurement resource sets, or each measurement gap is corresponding to one or more measurement resources, or each measurement resource is corresponding to one or more frequency bands. The network device sends the first information to the terminal device.

In the foregoing technical solution, the first information is used to configure the at least one measurement gap for the terminal device. In the at least one measurement gap, each measurement gap is corresponding to the one or more neighbor cells of the terminal device, or each measurement gap is corresponding to the one beam or one group of beams of the terminal device, or each measurement gap is corresponding to the one or more measurement resource sets, or each measurement gap is corresponding to the one or more measurement resources, or each measurement resource is corresponding to the one or more frequency bands. It can be learned that, the network device configures the measurement gap for the terminal device at a granularity of the neighbor cell, the beam, the measurement resource, the measurement resource set, or the frequency band. This helps improve accuracy of measuring a reference signal by the terminal device. Further, this helps the network device configure a proper measurement gap for the terminal device, to avoid a problem that a throughput of the terminal device is reduced because a length of the measurement gap is excessively large, and also avoid a problem that the reference signal measured by the terminal device is inaccurate because the length of the measurement gap is excessively small.

According to the fifth aspect or the sixth aspect, in a possible implementation, the first information includes an identifier of the at least one measurement gap.

According to the fifth aspect, in a possible implementation, the method further includes: The terminal device receives first indication information from the network device. The first indication information indicates a target measurement gap and duration of the target measurement gap, and the target measurement gap belongs to the at least one measurement gap. The terminal device adjusts the duration of the target measurement gap based on the first indication information.

In this implementation, the terminal device may adjust the duration of the target measurement gap with reference to the first indication information sent by the network device. For example, when uplink sending timing of the terminal device is updated, the terminal device moves, or the terminal device performs beam switching, the length needed by the terminal device for the target measurement gap changes. The network device may update the length of the target measurement gap for the terminal device through the first indication information. This avoids a problem that a throughput of the terminal device is reduced because a length of the measurement gap is excessively large, and can also avoid a problem that the reference signal measured by the terminal device is inaccurate because the length of the measurement gap is excessively small.

According to the sixth aspect, in a possible implementation, the method further includes: The network device sends first indication information to the terminal device. The first indication information indicates a target measurement gap and duration of the target measurement gap, and the target measurement gap belongs to the at least one measurement gap.

In this implementation, the network device may update the length of the target measurement gap for the terminal device through the first indication information. This avoids a problem that a throughput of the terminal device is reduced because a length of the measurement gap is excessively large, or a problem that the reference signal measured by the terminal device is inaccurate because the length of the measurement gap is excessively small, when the uplink sending timing of the terminal device is updated, the terminal device moves, or the terminal device performs the beam switching.

According to the fifth aspect or the sixth aspect, in a possible implementation, the first indication information indicates an identifier of the target measurement gap, or the first indication information indicates an identifier of a beam, a measurement resource, a neighbor cell, or a measurement resource set corresponding to the target measurement gap. In this implementation, some possible implementations in which the network device indicates the target measurement gap are shown. In this way, the target measurement gap is indicated to the terminal device.

According to the fifth aspect, in a possible implementation, the method further includes: The terminal device receives second indication information from the network device. The second indication information indicates whether to enable the measurement gap.

That the terminal device measures a reference signal based on the at least one measurement gap includes: The terminal device measures the reference signal based on the second indication information and the at least one measurement gap.

In this implementation, the terminal device may determine, with reference to the second indication information, whether to enable the at least one measurement gap, and measure the reference signal by using the at least one measurement gap.

According to the sixth aspect, in a possible implementation, the method further includes: The network device sends second indication information to the terminal device. The second indication information indicates whether to enable the measurement gap. In this way, the network device flexibly enables or disables the measurement gap.

According to the fifth aspect or the sixth aspect, in a possible implementation, the reference signal is carried on a measurement resource. If the second indication information indicates not to enable the measurement gap, there is no scheduling limitation on a time domain symbol occupied by the measurement resource, or there is a scheduling limitation on a frequency domain resource occupied by the measurement resource.

If the second indication information indicates to enable the measurement gap, the terminal device does not expect to receive scheduling information or a data signal from the network device on a time domain symbol occupied by the measurement resource, or the terminal device does not expect to receive scheduling information or a data signal from the network device on a time domain symbol occupied by the measurement gap; or the terminal device does not expect to receive scheduling information or a data signal from the network device on a time domain symbol occupied by the measurement resource and at least L time domain symbols in L time domain symbols before the time domain symbol occupied by the measurement resource and L time domain symbols after the time domain symbol, where L is an integer greater than or equal to 0, and L is preconfigured by the network device for the terminal device or is specified in a communication protocol. In this implementation, for the two cases indicated by the second indication information, there are some possible implementations of the scheduling limitation on the time domain symbol occupied by the measurement resource. In this way, the network device normally communicates with the terminal device, to avoid a case in which the network device schedules the terminal device on the time domain symbol occupied by the measurement resource, but the terminal device does not expect to receive the scheduling information or the data signal from the network device, resulting in a scheduling failure and a waste of scheduling resources.

According to the fifth aspect, in a possible implementation, the method further includes: The terminal device receives third indication information from the network device. The third indication information indicates whether to enable each of the at least one measurement gap.

That the terminal device measures a reference signal based on the at least one measurement gap includes: The terminal device measures the reference signal based on the third indication information and the at least one measurement gap. In this implementation, the third indication information may indicate whether to enable each measurement gap, so that the network device properly enables a corresponding measurement gap based on an actual requirement.

According to the sixth aspect, in a possible implementation, the method further includes: The network device sends third indication information to the terminal device. The third indication information indicates whether to enable each of the at least one measurement gap. In this way, the network device properly enables a corresponding measurement gap based on an actual requirement.

According to the fifth aspect or the sixth aspect, in a possible implementation, the third indication information indicates an identifier of a to-be-enabled measurement gap in the at least one measurement gap, or indicates an identifier of a beam, a measurement resource, a neighbor cell, a beam, or a measurement resource set corresponding to the to-be-enabled measurement gap in the at least one measurement gap. In this way, the to-be-enabled measurement gap is indicated to the terminal device.

According to the fifth aspect, in a possible implementation, that the terminal device measures a reference signal based on the at least one measurement gap includes one or more of the following:

when one of the at least one measurement gap overlaps an uplink time domain symbol in a time division duplex (time division duplex, TDD) configuration of the terminal device, the terminal device preferentially measures a reference signal in the measurement gap; or

when a cell-level signal of the terminal device occupies one of the at least one measurement gap, the terminal device preferentially performs transmission of the cell-level signal, and skips measuring a reference signal in the measurement gap; or

when at least one of a sounding reference signal, access point-channel state information, an uplink control channel, and a hybrid retransmission signal of the terminal device occupies one of the at least one measurement gap, the terminal device preferentially performs transmission of the at least one of the sounding reference signal, the access point-channel state information, the uplink control channel, and the hybrid retransmission signal; or

when the at least one measurement gap includes a first measurement gap and a second measurement gap, and the first measurement gap overlaps the second measurement gap, the terminal device preferentially measures a reference signal in a measurement gap with a higher priority in the first measurement gap and the second measurement gap.

The foregoing implementation shows a priority regulation for the terminal device to measure the reference signal in the measurement gap in some scenarios. Therefore, the reference signal is measured in a scenario in which normal communication of the terminal device is not affected.

According to the fifth aspect, in a possible implementation, the method further includes: The terminal device sends a first request to the network device. The first request is used to request the network device to configure the measurement gap for the terminal device.

In this implementation, the terminal device may actively request the network device to configure the measurement gap. This helps the network device configure the measurement gap for the terminal device.

According to the sixth aspect, in a possible implementation, the method further includes: The network device receives a first request from the terminal device. The first request is used to request the network device to configure the measurement gap for the terminal device.

In this implementation, the network device obtains the first request, so that the network device configures the measurement gap for the terminal device.

According to the fifth aspect or the sixth aspect, in a possible implementation, the first request is carried in L3 measurement reporting signaling, or is carried in scheduling signaling. In this implementation, the terminal device may request, in the L3 measurement reporting signaling or the scheduling signaling, to configure the measurement gap. Therefore, no additional signaling needs to be defined, and implementation of the solution is facilitated. Further, after L3 measurement, the terminal device may determine, with reference to an L3 measurement result, whether the network device needs to configure the measurement gap. This helps the terminal device properly request to configure the measurement gap.

According to the fifth aspect or the sixth aspect, in a possible implementation, the first request is carried in uplink control information (uplink control information, UCI) or a medium access control control element (media access control control element, MAC CE).

According to the fifth aspect, in a possible implementation, that the terminal device sends a first request to the network device includes: The terminal device sends the first request by using a preconfigured scheduling resource used to send a measurement gap request.

According to the fifth aspect or the sixth aspect, in a possible implementation, before the terminal device sends the first request to the network device, the method further includes: The terminal device sends a scheduling request to the network device. The scheduling request is used to request an uplink shared channel resource for sending the first request. The terminal device receives configuration information from the network device. The configuration information includes a configuration of the uplink shared channel resource. That the terminal device sends a first request to the network device specifically includes: The terminal device sends the first request to the network device by using the uplink shared channel resource.

According to the fifth aspect or the sixth aspect, in a possible implementation, the first request includes one or a combination of the following: a global identifier or a local identifier of a target measurement resource for which a measurement gap is requested to be configured, an identifier of a target measurement resource set for which the measurement gap is requested to be configured, an identifier of a neighbor cell, a reference signal identifier or a reference signal set identifier, duration of the measurement gap requested to be configured, a quantization unit of the measurement gap, adjustment duration needed by the terminal device to adjust an operating frequency or operating bandwidth of a radio frequency link, a first quantity of time domain symbols, or a second quantity of time domain symbols.

The first quantity of time domain symbols is a quantity of time domain symbols that are before a start time domain symbol occupied by the terminal device to request a reference signal and that are consecutive to the start time domain symbol, and the second quantity of time domain symbols is a quantity of time domain symbols that are after an end time domain symbol occupied by the terminal device to request the reference signal and that are consecutive to the end time domain symbol.

In this implementation, some possible content included in the first request is shown, to help the network device configure a proper measurement gap for the terminal device. In this way, communication performance is improved, and accuracy of measuring the reference signal by the terminal device is improved.

According to the fifth aspect, in a possible implementation, the method further includes: The terminal device sends capability information to the network device. The capability information indicates whether the terminal device supports configuration of an L1 measurement gap, or the capacity information indicates one or more of the following: whether the terminal device supports dynamic adjustment of the L1 measurement gap, or a quantity of configured L1 measurement gaps supported by the terminal device, or whether the terminal device supports reporting of a request for the measurement gap.

In this implementation, the terminal device may further report the capability information, so that the network device determines, with reference to the capability information, whether to configure a measurement gap for the terminal device, a quantity of measurement gaps to be configured, and the like. For example, if the capability information indicates that the terminal device does not support the configuration of the L1 measurement gap, the network device may not need to configure a measurement gap for the terminal device. This avoids a case in which communication performance of the terminal device is degraded because the terminal device does not need to use a measurement gap after the measurement gap is configured.

According to the sixth aspect, in a possible implementation, the method further includes: The network device receives capability information from the terminal device. The capacity information indicates one or more of the following: whether the terminal device supports configuration of an L1 measurement gap, or whether the terminal device supports dynamic adjustment of the L1 measurement gap, or a quantity of configured L1 measurement gaps supported by the terminal device.

In this implementation, the network device may obtain the capability information, so that the network device determines, with reference to the capability information, whether to configure a measurement gap for the terminal device, a quantity of measurement gaps to be configured, and the like. For example, if the capability information indicates that the terminal device does not support the configuration of the L1 measurement gap, the network device may not need to configure a measurement gap for the terminal device. This avoids a case in which communication performance of the terminal device is degraded because the terminal device does not need to use a measurement gap after the measurement gap is configured.

According to the fifth aspect or the sixth aspect, in a possible implementation, the first information is carried in L1 measurement configuration information. In this implementation, the network device may deliver the first information in the L1 measurement configuration information, so that the terminal device performs L1 measurement based on the at least one measurement gap. Further, corresponding signaling does not need to be additionally defined to carry the first information, to improve practicability of the solution.

A seventh aspect of this application provides a first communication apparatus, including:

a transceiver module, configured to receive first configuration information from a second communication apparatus, where the first configuration information is used to configure a first measurement resource set, and the first measurement resource set includes an identifier of at least one neighbor cell of the first communication apparatus, a global identifier of a target measurement resource of the at least one neighbor cell, and a local identifier of the target measurement resource of the at least one neighbor cell; and

a processing module, configured to measure the target measurement resource in the first measurement resource set, to obtain a first measurement result.

An eighth aspect of this application provides a second communication apparatus, including:

a processing module, configured to determine first configuration information, where the first configuration information is used to configure a first measurement resource set, and the first measurement resource set includes an identifier of at least one neighbor cell of a first communication apparatus, a global identifier of a target measurement resource of the at least one neighbor cell, and a local identifier of the target measurement resource of the at least one neighbor cell; and
a transceiver module, configured to send the first configuration information to the first communication apparatus.

According to the seventh aspect or the eighth aspect, in a possible implementation, the first configuration information is further used to configure at least one second measurement resource set. The at least one second measurement resource set is in one-to-one correspondence with the at least one neighbor cell, and one of the at least one second measurement resource set includes a global identifier of a measurement resource of a neighbor cell corresponding to the second measurement resource set.

According to the seventh aspect or the eighth aspect, in a possible implementation, the first configuration information further includes configuration information of a measurement resource of the at least one neighbor cell. The configuration information of the measurement resource of the at least one neighbor cell includes at least one of the following: the identifier of the at least one neighbor cell and configuration information of a reference signal of the at least one neighbor cell. The target measurement resource of the at least one neighbor cell belongs to the measurement resource of the at least one neighbor cell.

According to the seventh aspect or the eighth aspect, in a possible implementation, when the reference signal is an SSB, the configuration information of the SSB of the at least one neighbor cell includes at least one of the following: a center frequency of the SSB, a subcarrier spacing of the SSB, an index of the SSB, a periodicity of the SSB, a system frame occupied by the SSB, an offset of the system frame occupied by the SSB, or a subframe offset of the SSB; or
when the reference signal is a CSI-RS, the configuration information of the CSI-RS of the at least one neighbor cell includes at least one of the following: an identifier of a CSI-RS resource occupied by the CSI-RS, frequency domain resource density of the CSI-RS, a subcarrier spacing, a center frequency, bandwidth, a position of a start RB, a scrambling sequence identifier, a periodicity, a slot offset, a power offset of the CSI-RS relative to an SSB, an index of an SSB associated with the CSI-RS, or an identifier of a cell to which the SSB associated with the CSI-RS belongs.

According to the seventh aspect, in a possible implementation, the first configuration information is used to configure a plurality of measurement resource sets, and the first measurement resource set is one of the plurality of measurement resource sets. The transceiver module is further configured to receive indication information from the second communication apparatus. The indication information indicates the first measurement resource set.

According to the eighth aspect, in a possible implementation, the first configuration information is used to configure a plurality of measurement resource sets, and the first measurement resource set is one of the plurality of measurement resource sets. The transceiver module is further configured to send indication information to the first communication apparatus. The indication information indicates the first measurement resource set.

According to the seventh aspect, in a possible implementation, the first measurement resource set further includes an identifier of a serving cell of the first communication apparatus, a global identifier of a target measurement resource of the serving cell, and a local identifier of the target measurement resource of the serving cell.

The processing module is specifically configured to measure the target measurement resource of the at least one neighbor cell and the target measurement resource of the serving cell, to obtain the first measurement result.

According to the seventh aspect or the eighth aspect, in a possible implementation, the first configuration information further includes configuration information of a measurement resource of the serving cell.

According to the seventh aspect, in a possible implementation, the transceiver module is further configured to receive second configuration information from the second communication apparatus. The second configuration information indicates whether to enable L1 cell quality measurement, and/or the second configuration information indicates whether to enable L1 filtering. The processing module is specifically configured to measure the target measurement resource in the first measurement resource set based on the second configuration information, to obtain the first measurement result.

According to the eighth aspect, in a possible implementation, the transceiver module is further configured to send second configuration information to the first communication apparatus. The second configuration information indicates whether to enable L1 cell quality measurement, and/or the second configuration information indicates whether to enable L1 filtering.

According to the seventh aspect or the eighth aspect, in a possible implementation, if the second configuration information indicates to enable the L1 cell quality measurement, the second configuration information includes a cell quality calculation parameter, and the cell quality calculation parameter is used by the first communication apparatus to calculate cell quality of each cell based on a measurement result of a reference signal of the cell in the first measurement resource set;

and/or,

if the second configuration information indicates to enable the L 1 cell quality measurement, the second configuration information includes N weights, N reference signals of each cell in the first measurement resource set are in one-to-one correspondence with the N weights in descending or ascending order of signal quality of the N reference signals, the signal quality of the N reference signals and the N weights are used to determine cell quality of the cell, and N is an integer greater than or equal to 1.

According to the seventh aspect or the eighth aspect, in a possible implementation, if the second configuration information indicates to enable the L1 filtering, the second configuration information includes an L1 filtering coefficient. The L1 filtering coefficient is used by the first communication apparatus to perform the L 1 filtering on signal quality corresponding to a target measurement resource of each cell in the first measurement resource set.

According to the seventh aspect or the eighth aspect, in a possible implementation, the second configuration information is further used to configure a reporting quantity type of the first communication apparatus.

According to the seventh aspect, in a possible implementation, the transceiver module is further configured to send the first measurement result to the second communication apparatus.

According to the eighth aspect, in a possible implementation, the transceiver module is further configured to receive the first measurement result from the first communication apparatus.

According to the seventh aspect or the eighth aspect, in a possible implementation, if the first measurement resource set further includes the identifier of the serving cell of the first communication apparatus, the global identifier of the target measurement resource of the serving cell, and the local identifier of the target measurement resource of the serving cell,

the first measurement result includes cell quality of the serving cell and cell quality of a neighbor cell with best cell quality in the at least one neighbor cell; or the first measurement result includes cell quality of M cells with best cell quality in the serving cell and the at least one neighbor cell, where M is greater than or equal to 1 and is less than or equal to a total quantity of the serving cell and the at least one neighbor cell; or the first measurement result includes cell quality of the serving cell, the local identifier of the target measurement resource of the serving cell, signal quality corresponding to a target measurement resource with best signal quality in the target measurement resource of the serving cell, cell quality of a neighbor cell with best cell quality in the at least one neighbor cell, a local identifier of a target measurement resource with best signal quality in the target measurement resource of the neighbor cell, and the signal quality of the target measurement resource with the best signal quality in the target measurement resource of the neighbor cell; or the first measurement result includes cell quality of M cells with best cell quality in the serving cell and the at least one neighbor cell, signal quality of a target measurement resource with best signal quality in a target measurement resource of the M cells, and a local identifier of the target measurement resource with the best signal quality.

A ninth aspect of this application provides a first communication apparatus, including:

a transceiver module, configured to receive first information from a second communication apparatus, where the first information is used to configure at least one measurement gap for the first communication apparatus, and in the at least one measurement gap, each measurement gap is corresponding to one or more neighbor cells of the first communication apparatus, or each measurement gap is corresponding to one beam or one group of beams of the first communication apparatus, or each measurement gap is corresponding to one or more measurement resource sets, or each measurement gap is corresponding one or more measurement resources, or each measurement resource is corresponding to one or more frequency bands; and

a processing module, configured to measure a reference signal based on the at least one measurement gap.

A tenth aspect of this application provides a second communication apparatus, including:

a processing module, configured to determine first information, where the first information is used to configure at least one measurement gap for a first communication apparatus, and in the at least one measurement gap, each measurement gap is corresponding to one or more neighbor cells of the first communication apparatus, or each measurement gap is corresponding to one beam or one group of beams of the first communication apparatus, or each measurement gap is corresponding to one or more measurement resource sets, or each measurement gap is corresponding one or more measurement resources, or each measurement resource is corresponding to one or more frequency bands; and

a transceiver module, configured to send the first information to the first communication apparatus.

According to the ninth aspect or the tenth aspect, in a possible implementation, the first information includes an identifier of the at least one measurement gap.

According to the ninth aspect, in a possible implementation, the transceiver module is further configured to receive first indication information from the second communication apparatus. The first indication information indicates a target measurement gap and duration of the target measurement gap. The target measurement gap belongs to the at least one measurement gap. The processing module is further configured to adjust the duration of the target measurement gap based on the first indication information.

According to the tenth aspect, in a possible implementation, the transceiver module is further configured to send first indication information to the first communication apparatus. The first indication information indicates a target measurement gap and duration of the target measurement gap, and the target measurement gap belongs to the at least one measurement gap.

According to the ninth aspect or the tenth aspect, in a possible implementation, the first indication information indicates an identifier of the target measurement gap, or the first indication information indicates an identifier of a beam, a measurement resource, a neighbor cell, a beam, or a measurement resource set corresponding to the target measurement gap.

According to the ninth aspect, in a possible implementation, the transceiver module is further configured to receive second indication information from the second communication apparatus. The second indication information indicates whether to enable the measurement gap.

The processing module is specifically configured to measure a reference signal based on the second indication information and the at least one measurement gap.

According to the tenth aspect, in a possible implementation, the transceiver module is further configured to send second indication information to the first communication apparatus. The second indication information indicates whether to enable the measurement gap.

According to the ninth aspect or the tenth aspect, in a possible implementation, the reference signal is carried on the measurement resource. If the second indication information indicates not to enable the measurement gap, there is no scheduling limitation on a time domain symbol occupied by the measurement resource, or there is a scheduling limitation on a frequency domain resource occupied by the measurement resource. If the second indication information indicates to enable the measurement gap, the first communication apparatus does not expect to receive scheduling information or a data signal from the second communication apparatus on a time domain symbol occupied by the measurement resource, or the first communication apparatus does not expect to receive the scheduling information or the data signal from the second communication apparatus on a time domain symbol occupied by the measurement gap, or the first communication apparatus does not expect to receive the scheduling information or the data signal from the second communication apparatus on the time domain symbol occupied by the measurement resource and at least L time domain symbols in L time domain symbols before the time domain symbol occupied by the measurement resource and L time domain symbols after the time domain symbol, where L is an integer greater than or equal to 0, and L is preconfigured by the second communication apparatus for the first communication apparatus or specified in a communication protocol.

According to the ninth aspect, in a possible implementation, the transceiver module is further configured to receive third indication information from the second communication apparatus. The third indication information indicates whether to enable each of the at least one measurement gap.

The processing module is specifically configured to measure the reference signal based on the third indication information and the at least one measurement gap.

According to the tenth aspect, in a possible implementation, the transceiver module is further configured to send third indication information to the first communication apparatus. The third indication information indicates whether to enable each of the at least one measurement gap.

According to the ninth aspect or the tenth aspect, in a possible implementation, the third indication information indicates an identifier of a to-be-enabled measurement gap in the at least one measurement gap, or indicates an identifier of a beam, a measurement resource, a neighbor cell, a beam, or a measurement resource set corresponding to the to-be-enabled measurement gap in the at least one measurement gap.

According to the ninth aspect, in a possible implementation, the processing module is specifically configured to:

when one of the at least one measurement gap overlaps an uplink time domain symbol in a TDD configuration of the first communication apparatus, preferentially measure a reference signal in the measurement gap;
when a cell-level signal of the first communication apparatus occupies one of the at least one measurement gap, preferentially perform transmission of the cell-level signal, and skip measuring a reference signal in the measurement gap; or
when at least one of a sounding reference signal, access point-channel state information, an uplink control channel, and a hybrid retransmission signal of the first communication apparatus occupies one of the at least one measurement gap, preferentially perform transmission of the at least one of the sounding reference signal, the access point-channel state information, the uplink control channel, and the hybrid retransmission signal; or

when the at least one measurement gap includes a first measurement gap and a second measurement gap, and the first measurement gap overlaps the second measurement gap, preferentially measure a reference signal in a measurement gap with a higher priority in the first measurement gap and the second measurement gap.

According to the ninth aspect, in a possible implementation, the transceiver module is specifically configured to: send a first request to the second communication apparatus, where the first request is used to request the second communication apparatus to configure the measurement gap for the first communication apparatus.

According to the tenth aspect, in a possible implementation, the transceiver module is specifically configured to receive a first request from the first communication apparatus, where the first request is used to request the second communication apparatus to configure the measurement gap for the first communication apparatus.

According to the ninth aspect or the tenth aspect, in a possible implementation, the first request is carried in L3 measurement reporting signaling, or is carried in scheduling signaling.

According to the ninth aspect or the tenth aspect, in a possible implementation, the first request is carried in UCI or a MAC CE.

According to the ninth aspect, in a possible implementation, the transceiver module is specifically configured to send the first request by using a scheduling resource that is preconfigured by the second communication apparatus for the first communication apparatus and that is used to send a measurement gap request.

According to the ninth aspect or the tenth aspect, in a possible implementation, the transceiver module is further configured to: send a scheduling request to the second communication apparatus, where the scheduling request is used to request an uplink shared channel resource used to send the first request; and receive configuration information sent by the second communication apparatus, where the configuration information includes a configuration of the uplink shared channel resource.

The processing module is specifically configured to send the first request to the second communication apparatus by using the uplink shared channel resource.

According to the ninth aspect or the tenth aspect, in a possible implementation, the first request includes one or a combination of the following: a global identifier or a local identifier of a target measurement resource for which a measurement gap is requested to be configured, an identifier of a target measurement resource set for which the measurement gap is requested to be configured, an identifier of a neighbor cell, a reference signal identifier or a reference signal set identifier, duration of the measurement gap requested to be configured, a quantization unit of the measurement gap, adjustment duration needed by the first communication apparatus to adjust an operating frequency or operating bandwidth of a radio frequency link, a first quantity of time domain symbols, or a second quantity of time domain symbols.

The first quantity of time domain symbols is a quantity of time domain symbols that are before a start time domain symbol occupied by the first communication apparatus to request a reference signal and that are consecutive to the start time domain symbol, and the second quantity of time domain symbols is a quantity of time domain symbols that are after an end time domain symbol occupied by the first communication apparatus to request the reference signal and that are consecutive to the end time domain symbol.

According to the ninth aspect, in a possible implementation, the transceiver module is further configured to: send capability information to the second communication apparatus, where the capability information indicates one or more of the following: whether the first communication apparatus supports configuration of an L1 measurement gap, or whether the first communication apparatus supports dynamic adjustment of the L1 measurement gap, or a quantity of configured L1 measurement gaps supported by the first communication apparatus, or whether the first communication apparatus supports reporting of a request for the measurement gap.

According to the tenth aspect, in a possible implementation, the transceiver module is further configured to: receive capability information from the first communication apparatus, where the capability information indicates one or more of the following: whether the first communication apparatus supports configuration of an L1 measurement gap, or whether the first communication apparatus supports dynamic adjustment of the L1 measurement gap, or a quantity of configured L1 measurement gaps supported by the first communication apparatus, or whether the first communication apparatus supports reporting of a request for the measurement gap.

According to the ninth aspect or the tenth aspect, in a possible implementation, the first information is carried in L1 measurement configuration information.

An eleventh aspect of this application provides a first communication apparatus, including:

a transceiver module, configured to receive first indication information from a second communication apparatus, where the first indication information is used to activate at least one first measurement resource set, or the first indication information is used to activate at least one second measurement resource set, or the first indication information is used to activate the at least one first measurement resource set and the at least one second measurement resource set, where each first measurement resource set includes at least one of the following: an identifier of at least one candidate cell of the first communication apparatus, a global identifier of a target measurement resource of the at least one candidate cell, or a local identifier of the target measurement resource of the at least one candidate cell; and each second measurement resource set includes one or more measurement resources of a serving cell of the first communication apparatus.

A twelfth aspect of this application provides a second communication apparatus, including:

a transceiver module, configured to send first indication information to a first communication apparatus, where the first indication information is used to activate at least one first measurement resource set, or the first indication information is used to activate at least one second measurement resource set, or the first indication information is used to activate the at least one first measurement resource set and the at least one second measurement resource set, where each first measurement resource set includes at least one of an identifier of at least one candidate cell of the first communication apparatus, a global identifier of a target measurement resource of the at least one candidate cell, or a local identifier of the target measurement resource of the at least one candidate cell; and each second measurement resource set includes one or more measurement resources of a serving cell of the first communication apparatus.

According to the eleventh aspect or the twelfth aspect, in a possible implementation, the first indication information is carried in a MAC CE.

According to the eleventh aspect or the twelfth aspect, in a possible implementation, 1 bit in the MAC CE indicates a type of a measurement resource set activated by using the MAC CE, and the type includes the first measurement resource set or the second measurement resource set.

According to the eleventh aspect or the twelfth aspect, in a possible implementation, values of 4 bits in the MAC CE respectively indicate measurement resource sets corresponding to reporting configurations indicated by an S1 field to an S3 field in the MAC CE, and the measurement resource sets corresponding to the reporting configurations indicated by the S1 field to the S3 field include the first measurement resource set and/or the second measurement resource set.

According to the eleventh aspect or the twelfth aspect, in a possible implementation, the MAC CE includes one or more new bits, the one or more bits indicate a type of a measurement resource set activated by using the MAC CE, and the type includes the first measurement resource set or the second measurement resource set.

According to the eleventh aspect or the twelfth aspect, in a possible implementation, if the MAC CE is a first-type MAC CE, the MAC CE is used to activate the at least one first measurement resource set; or if the MAC CE is a second-type MAC CE, the MAC CE is used to activate the at least one second measurement resource set.

According to the eleventh aspect, in a possible implementation, the MAC CE is used to activate the at least one first measurement resource set, or the MAC CE is used to activate the at least one first measurement resource set and the at least one second measurement resource set. The transceiver module is further configured to receive at least one piece of first reporting configuration information from the second communication apparatus. The at least one piece of first reporting configuration information is used to configure a reporting format and a reporting type of a measurement result obtained by measuring a target measurement resource in the at least one first measurement resource set, and the reporting type is aperiodic reporting, semi-persistent reporting, or periodic reporting.

According to the twelfth aspect, in a possible implementation, the MAC CE is used to activate the at least one first measurement resource set, or the MAC CE is used to activate the at least one first measurement resource set and the at least one second measurement resource set. The transceiver module is further configured to send at least one piece of first reporting configuration information to the first communication apparatus. The at least one piece of first reporting configuration information is used to configure a reporting format and a reporting type of a measurement result obtained by measuring a target measurement resource in the at least one first measurement resource set, and the reporting type is aperiodic reporting, semi-persistent reporting, or periodic reporting.

According to the eleventh aspect or the twelfth aspect, in a possible implementation, one piece of first reporting configuration information is corresponding to one first measurement resource set, each piece of first reporting configuration information includes one reporting configuration identifier, and the reporting configuration identifier is corresponding to one reporting type.

According to the eleventh aspect or the twelfth aspect, in a possible implementation, when a reporting type corresponding to one reporting configuration identifier in the at least one piece of first reporting configuration information is semi-persistent reporting, the reporting configuration identifier is mapped to or associated with one codepoint in the first indication information.

According to the eleventh aspect or the twelfth aspect, in a possible implementation, when reporting types corresponding to a plurality of reporting configuration identifiers in the at least one piece of first reporting configuration information are semi-persistent reporting, the plurality of reporting configuration identifiers are mapped to or associated with a plurality of codepoints in the first indication information in ascending order. The plurality of codepoints are sorted in ascending order.

According to the eleventh aspect, in a possible implementation, the transceiver module is further configured to receive at least one piece of second reporting configuration information from the second communication apparatus. The at least one piece of second reporting configuration information is used to configure a reporting format and a reporting type of a measurement result obtained by measuring the at least one second measurement resource set. The reporting type is aperiodic reporting, semi-persistent reporting, or periodic reporting. The at least one piece of second reporting configuration information is in one-to-one correspondence with the at least one second measurement resource set. Each piece of second reporting configuration information includes one reporting configuration identifier. The reporting configuration identifier is corresponding to one reporting type.

According to the twelfth aspect, in a possible implementation, the transceiver module is further configured to send at least one piece of second reporting configuration information to the first communication apparatus. The at least one piece of second reporting configuration information is used to configure a reporting format and a reporting type of a measurement result obtained by measuring the at least one second measurement resource set. The reporting type is aperiodic reporting, semi-persistent reporting, or periodic reporting. One piece of second reporting configuration information is corresponding to one second measurement resource set. Each piece of second reporting configuration information includes one reporting configuration identifier. The reporting configuration identifier is corresponding to one reporting type.

According to the eleventh aspect or the twelfth aspect, in a possible implementation, when a reporting type corresponding to one reporting configuration identifier in the at least one piece of first reporting configuration information and the at least one piece of second reporting configuration information is semi-persistent reporting, the reporting configuration identifier is mapped to or associated with one codepoint in the first indication information.

According to the eleventh aspect or the twelfth aspect, in a possible implementation, when reporting types corresponding to a plurality of reporting configuration identifiers in the at least one piece of first reporting configuration information and the at least one piece of second reporting configuration information are semi-persistent reporting, the plurality of reporting configuration identifiers are mapped to or associated with a plurality of codepoints in the first indication information in ascending order. The plurality of codepoints are sorted in ascending order.

According to the eleventh aspect or the twelfth aspect, in a possible implementation, when reporting types corresponding to a plurality of reporting configuration identifiers in the at least one piece of first reporting configuration information are semi-persistent reporting, the plurality of reporting configuration identifiers are mapped to or associated with a plurality of first codepoints in the first indication information in ascending order. The plurality of first codepoints are sorted in ascending order. When reporting types corresponding to a plurality of reporting configuration identifiers in the at least one piece of second reporting configuration information are semi-persistent reporting, the plurality of reporting configuration identifiers are mapped to or associated with a plurality of second codepoints in the first indication information in ascending order. The plurality of second codepoints are sorted in ascending order.

According to the eleventh aspect or the twelfth aspect, in a possible implementation, for a measurement result of one of the at least one first measurement resource set, the reporting format includes: The first communication apparatus reports at least signal quality of F target measurement resources with best signal quality in a target measurement resource of each cell in the serving cell and the at least one candidate cell of the first communication apparatus and a local identifier of the F target measurement resources with the best signal quality, where F is an integer greater than or equal to 1.

According to the eleventh aspect or the twelfth aspect, in a possible implementation, for a measurement result of one of the at least one first measurement resource set, the reporting format includes: The first communication apparatus reports at least signal quality of F target measurement resources with best signal quality in a target measurement resource of each of M cells and a local identifier of the F target measurement resources with the best signal quality, where the M cells are M cells with best cell quantity in the serving cell and the at least one candidate cell, and F is an integer greater than or equal to 1.

According to the eleventh aspect, in a possible implementation, the transceiver module is further configured to measure, based on the reporting format configured by using the at least one piece of first reporting configuration information, the target measurement resource in the at least one first measurement resource set activated by using the first indication information, to obtain at least one first measurement result.

According to the eleventh aspect, in a possible implementation, the transceiver module is further configured to receive measurement resource set configuration information from the second communication apparatus. The measurement resource set configuration information is used to configure the at least one first measurement resource set.

According to the twelfth aspect, in a possible implementation, the transceiver module is further configured to send measurement resource set configuration information to the first communication apparatus. The measurement resource set configuration information is used to configure the at least one first measurement resource set.

A thirteenth aspect of this application provides a communication apparatus. The communication apparatus includes a processor. The processor is configured to invoke and run a computer program stored in a memory, to enable the processor to implement any implementation in the first aspect to the fourth aspect.

Optionally, the communication apparatus further includes a transceiver. The processor is further configured to control the transceiver to receive and send a signal.

Optionally, the communication apparatus includes the memory. The memory stores the computer program.

A fourteenth aspect of this application provides a computer program product including instructions. When the computer program product runs on a computer, the computer is enabled to perform any implementation in the first aspect to the sixth aspect.

A fifteenth aspect of this application provides a computer-readable storage medium, including computer instructions. When the computer instructions are run on a computer, the computer is enabled to perform any implementation in the first aspect to the sixth aspect.

A sixteenth aspect of this application provides a chip apparatus, including a processor, configured to be connected to a memory and invoke a program stored in the memory, to enable the processor to perform any implementation in the first aspect to the sixth aspect.

A seventeenth aspect of this application provides a communication system. The communication system includes the first communication apparatus shown in the seventh aspect and the second communication apparatus shown in the eighth aspect; or the communication system includes the first communication apparatus shown in the ninth aspect and the second communication apparatus shown in the tenth aspect; or the communication system includes the first communication apparatus shown in the eleventh aspect and the second communication apparatus shown in the twelfth aspect.

It can be learned from the foregoing technical solutions that embodiments of this application have the following advantages:

It can be learned from the foregoing technical solutions that the terminal device receives the first configuration information from the network device. The first configuration information is used to configure the first measurement resource set. The first measurement resource set includes the identifier of the at least one neighbor cell of the terminal device, the global identifier of the target measurement resource of the at least one neighbor cell, and the local identifier of the target measurement resource of the at least one neighbor cell. Then, the terminal device measures the target measurement resource in the first measurement resource set, to obtain the first measurement result. It can be learned that the terminal device can receive the first measurement resource set configured by the network device, and measure the target measurement resource in the first measurement resource set. In this way, the terminal device measures the target measurement resource of the at least one neighbor cell. In this way, the terminal device obtains measurement results of more cells. This helps the network device accurately perform cell mobility decision based on the measurement results obtained by the terminal device. The network device hands over the terminal device to a proper cell, to improve communication performance.

## BRIEF DESCRIPTION OF DRAWINGS

FIG. 1 is a diagram of a communication system to which an embodiment of this application is applied;
FIG. 2 is another diagram of a communication system to which an embodiment of this application is applied;
FIG. 3A is a schematic flowchart of L3 measurement according to an embodiment of this application;
FIG. 3B is a diagram of a measurement gap according to an embodiment of this application;
FIG. 4A is a diagram of an embodiment of a resource measurement method according to an embodiment of this application;
FIG. 4B is a diagram of an embodiment of an activation method according to an embodiment of this application;
FIG. 4C is a diagram of a format of some bytes in a MAC CE according to an embodiment of this application;
FIG. 5A is a diagram of an embodiment of a measurement gap method according to an embodiment of this application;
FIG. 5B is a diagram of a scenario of a measurement gap method according to an embodiment of this application;
FIG. 6 is a diagram of another embodiment of a measurement gap method according to an embodiment of this application;
FIG. 7 is a diagram of a first structure of a communication apparatus according to an embodiment of this application;
FIG. 8 is a diagram of a second structure of a communication apparatus according to an embodiment of this application;
FIG. 9 is a diagram of a third structure of a communication apparatus according to an embodiment of this application;
FIG. 10 is a diagram of a structure of a terminal device according to an embodiment of this application; and
FIG. 11 is a diagram of a structure of a network device according to an embodiment of this application.

## DESCRIPTION OF EMBODIMENTS

Embodiments of this application provide a resource measurement method, a measurement gap configuration method, and a related apparatus, so that a terminal device measures a target measurement resource in a first measurement resource set configured by a network device. In this way, the terminal device obtains measurement results of more cells.

The following describes technical solutions of this application with reference to accompanying drawings.

The technical solutions in this application may be applied to various communication systems, for example, a 5th generation (5th generation, 5G) mobile communication system, a new radio (new radio, NR) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a mobile communication system (for example, a 6G mobile communication system) after a 5G network, and a vehicle-to-everything (vehicle-to-everything, V2X) communication system.

A communication system to which this application is applicable includes a terminal device and a network device. The following describes the terminal device and the network device in this application.

The terminal device may be a wireless terminal device that can receive scheduling and indication information of the network device. The terminal device may be a device that provides a user with voice and/or data connectivity, a handheld device having a wireless connection function, or another processing device connected to a wireless modem.

The terminal device is also referred to as a user equipment (user equipment, UE), a mobile station (mobile station, MS), a mobile terminal (mobile terminal, MT), a customer-premises equipment (customer-premises equipment, CPE), or the like. The terminal device is a device that includes a wireless communication function (providing the user with the voice/data connectivity), for example, a handheld device or a vehicle-mounted device having a wireless connection function. Currently, some examples of terminal devices are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control, a wireless terminal in an internet of vehicles, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. For example, the wireless terminal in the internet of vehicles may be a vehicle-mounted device, an entire vehicle device, an in-vehicle module, a vehicle, or the like. The wireless terminal in the industrial control may be a camera, a robot, or the like. The wireless terminal in the smart home may be a television, an air conditioner, a sweeper robot, a speaker, a set-top box, or the like.

The network device may be a device in a wireless network. For example, the network device may be a device that is deployed in a radio access network and that provides a wireless communication function for the terminal device. For example, the network device may be a radio access network (radio access network, RAN) node that connects the terminal device to the wireless network, and may also be referred to as an access network device.

The network device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), or an access point (access point, AP), a wireless relay node, a wireless backhaul node, a transmission point (transmission point, TP), a TRP, or the like in a wireless fidelity (wireless fidelity, Wi-Fi) system. Alternatively, the network device may be a network device in the 5G mobile communication system, for example, a next generation NodeB (next generation NodeB, gNB), a transmission reception point (transmission reception point, TRP) or a TP in an NR system; or one antenna panel or one group of antenna panels (including a plurality of antenna panels) of a base station in the 5G mobile communication system. Alternatively, the network device may be a network node included in the gNB or the transmission point, for example, a BBU or a distributed unit (distributed unit, DU).

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a medium access control (media access control, MAC) layer, and a physical (physical, PHY) layer. The AAU implements some physical layer processing functions, radio frequency processing, and a function related to an active antenna. Information at the RRC layer is finally changed to information at the PHY layer, or is changed from information at the PHY layer. Therefore, in this architecture, higher layer signaling (for example, RRC layer signaling) may also be considered to be sent by the DU, or sent by the DU and the AAU. It may be understood that the network device may be a device including one or more of a CU node, a DU node, and an AAU node. In addition, the CU may be classified as a network device in the RAN, or a network device in a core network (core network, CN). This is not limited in this application.

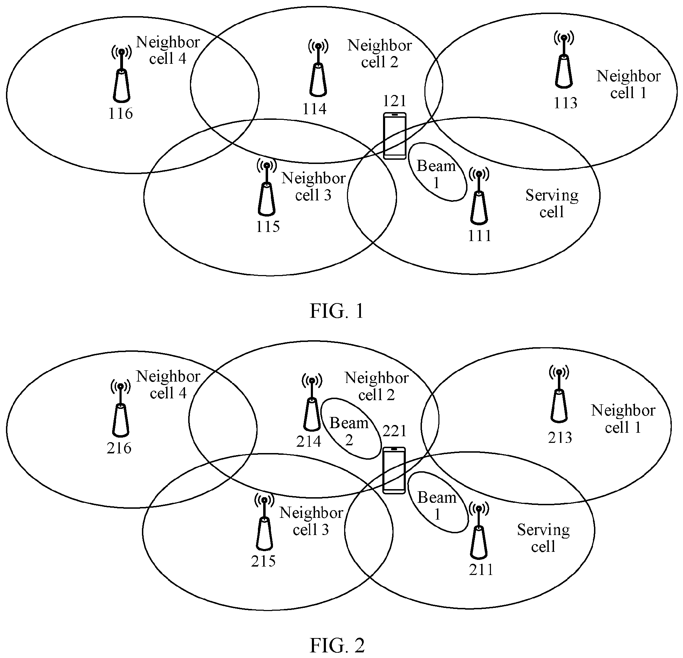

For ease of understanding the technical solutions in embodiments of this application, the following shows, with reference to FIG. 1 and FIG. 2, two possible communication systems to which the method provided in embodiments of this application is applicable.

FIG. 1 is a diagram of a communication system to which an embodiment of this application is applied. As shown in FIG. 1, the communication system includes at least one network device and at least one terminal device. For example, as shown in FIG. 1, communication transmission may be performed between a network device 111 and a terminal device 121 by using a beam 1. A cell covered by the network device 111 may be referred to as a serving cell of the terminal device 121. A cell covered by a network device 113 may be referred to as a neighbor cell 1 of the terminal device 121. A cell covered by a network device 114 may be referred to as a neighbor cell 2 of the terminal device 121. A cell covered by a network device 115 may be referred to as a neighbor cell 3 of the terminal device 121. A cell covered by a network device 116 may be referred to as a neighbor cell 4 of the terminal device 121.

FIG. 2 is another diagram of a communication system to which an embodiment of this application is applied. As shown in FIG. 2, the communication system includes at least two network devices and at least one terminal device. For example, as shown in FIG. 2, a terminal device 221 may be served by a plurality of network devices. For example, as shown in FIG. 2, a network device 211 may perform communication transmission with the terminal device 221 by using a beam 1, and a network device 214 may perform communication transmission with the terminal device 221 by using a beam 2. In other words, a plurality of network devices may simultaneously provide communication services for one terminal device. A cell covered by a network device 213 may be referred to as a neighbor cell 1 of the terminal device 221. A cell covered by a network device 213 may be referred to as a neighbor cell 1 of the terminal device 221. A cell covered by the network device 214 may be referred to as a neighbor cell 2 of the terminal device 221. A cell covered by a network device 215 may be referred to as a neighbor cell 3 of the terminal device 221. A cell covered by a network device 216 may be referred to as a neighbor cell 4 of the terminal device 221.

To facilitate understanding of the technical solutions in this application, the following describes some technical terms used in this application.

1. Beam (beam): The beam is a communication resource. The beam may be a wide beam, a narrow beam, or a beam of another type, and a technology for forming the beam may be a beamforming technology or another technical means. The beamforming technology may be specifically a digital beamforming technology, an analog beamforming technology, and a hybrid digital/analog beamforming technology. Different beams may be considered as different resources.

In an NR protocol, the beam may be referred to as a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), quasi-co-location (quasi-co-location, QCL) information, a QCL assumption, a QCL indication, or the like. The beam may be indicated by a transmission configuration indicator (transmission configuration indicator, TCI) state (also referred to as a TCI-state) parameter, or by a spatial relation (spatial relation) parameter. Therefore, in this application, the beam may be replaced with the spatial domain filter, the spatial filter, the spatial domain parameter, the spatial parameter, the spatial domain setting, the spatial setting, the QCL information, the QCL assumption, the QCL indication, a TCI-state (including an uplink TCI-state or a downlink TCI-state), a spatial relation, or the like. The foregoing terms are also equivalent to each other. Alternatively, the beam may be replaced with another term representing a beam. This is not limited in this application.

A beam used for sending a signal may be referred to as a transmit beam (transmit beam, Tx beam), a spatial domain transmission filter (spatial domain transmission filter), a spatial transmission filter (spatial transmission filter), a spatial domain transmission parameter (spatial domain transmission parameter), a spatial transmission parameter (spatial transmission parameter), a spatial domain transmission setting (spatial domain transmission setting), or a spatial transmission setting (spatial transmission setting). The transmit beam may be indicated by a TCI-state.

A beam used for receiving a signal may be referred to as a receive beam (receive beam, Rx beam), a spatial domain reception filter (spatial domain reception filter), a spatial reception filter (spatial reception filter), a spatial domain reception parameter (spatial domain reception parameter), a spatial reception parameter (spatial reception parameter), a spatial domain reception setting (spatial domain reception setting), or a spatial reception setting (spatial reception setting).

Both the transmit beam and the receive beam may be indicated by any one of a spatial relation, a TCI-state, or a sounding reference signal (sounding reference signal, SRS) resource (indicating a transmit beam using the SRS). Therefore, the transmit beam may alternatively be replaced with the SRS resource.

The transmit beam may be signal strength distribution formed in different directions in space after a signal is transmitted through an antenna, and the receive beam may be signal strength distribution, in different directions in space, of a radio signal received from an antenna.

In addition, the beam may be a wide beam, a narrow beam, or a beam of another type. A technology for forming the beam may be a beamforming technology or another technology. The beamforming technology may be specifically a digital beamforming technology, an analog beamforming technology, a hybrid digital beamforming technology, a hybrid analog beamforming technology, or the like.

The beam usually is corresponding to a resource. For example, during beam measurement, the network device measures different beams by using different resources, the terminal device feeds back measured resource quality, and the network device knows quality of a corresponding beam. During data transmission, beam information is also indicated by a resource corresponding to the beam information. For example, the network device indicates information about a physical downlink shared channel (physical downlink shared channel, PDSCH) beam of the terminal device through a TCI field in downlink control information (downlink control information, DCI).

In a possible implementation, a plurality of beams having a same communication feature or similar communication features may be considered as one beam. One beam may include one or more antenna ports for transmission of a data channel, a control channel, a sounding signal, or the like. The one or more antenna ports forming the beam may also be considered as one antenna port set.

2. Quasi-co-location (quasi-co-location, QCL): A quasi-co-location relationship indicates that a plurality of resources have one or more same or similar communication features. Same or similar communication configurations may be used for the plurality of resources having the quasi-co-location relationship. For example, if two antenna ports have a quasi-co-location relationship, a large-scale characteristic of a channel on which one symbol is transmitted through one port may be deduced from a large-scale characteristic of a channel on which one symbol is transmitted through the other port. The large-scale characteristic may include delay spread, an average delay, Doppler spread, a Doppler frequency shift, an average gain, a reception parameter, a receive beam number of the terminal device, transmission/reception channel correlation, a receive angle of arrival, spatial correlation of a receiver antenna, a dominant angle of arrival (angle of arrival, AoA), an average angle of arrival, AoA spread, and the like. Specifically, a co-location indication indicates whether at least two groups of antenna ports have a co-location relationship, including: The co-location indication indicates whether channel state information reference signals sent by the at least two groups of antenna ports are from a same transmission point, or the co-location indication indicates whether channel state information reference signals sent by the at least two groups of antenna ports are from a same beam group.

3. Transmission configuration indicator (transmission configuration indicator, TCI): It may also be referred to as a TCI-state (TCI-state). As specified in a communication protocol, QCL is configured by using the TCI-state. A parameter of the TCI-state is used to configure a quasi-co-location relationship between one or two downlink reference signals and a demodulation reference signal (demodulation reference signal, DMRS) of a physical downlink shared channel (physical downlink shared channel, PDSCH). The DCI may include a TCI field, and the TCI field is a field that is in the DCI and that indicates quasi-co-location of PDSCH antenna ports.

The TCI is configured by the network device for the terminal device by using an RRC message, and is referred to as a TCI-state in configuration signaling. After the network device configures TCI-states for the terminal device by using the RRC message, the network device may send a MAC CE to the terminal device. The MAC is used to activate one or more TCI-states in the TCI-states configured by the network device for the terminal device. Optionally, the network device may further send DCI to the terminal device. The DCI indicates one TCI-state in the TCI-states activated by using the MAC CE.

The TCI-state includes one or two QCL relationships. The QCL relationship represents a specific consistency relationship between a signal/channel to be received currently and a previously known reference signal. If there is a QCL relationship, the terminal device may receive or send an upcoming signal/channel by inheriting a reception or transmission parameter used for previously receiving or sending a reference signal. Each TCI-state is corresponding to one beam. The terminal device may perform communication transmission by using the beam.

The following describes the configuration, activation, and indication of the TCI-state.

TCI-state configuration: The network device configures a plurality of TCI-states for the terminal device by using RRC signaling. Each of these TCI-states includes quasi-co-location information (QCL-Info) whose type is TypeD (TypeD). Alternatively, the network device may configure a TCI-state that does not include the QCL-info whose type is TypeD. However, the TCI-states do not indicate a data transmit beam. Therefore, details are not further described herein.

TCI-state activation: After configuring the plurality of TCI-states, the network device further needs to activate eight TCI-states in the plurality of TCI-states by using the MAC CE. The eight TCI-states are in one-to-one correspondence with eight values of the TCI field in the DCI. In other words, the eight TCI-states corresponding to the eight values of the TCI field in the DCI are determined by using the MAC CE.

TCI-state indication: The network device indicates a specific TCI-state through the TCI field in the DCI. For example, a value of the TCI field in the DCI sent by the network device to the terminal device is 000, indicating that a TCI-state corresponding to 000 is used for the data transmit beam. A reference signal included in the QCL-Info whose type is TypeD in the TCI-state is a channel state information reference signal (channel state information reference signal, CSI-RS) whose index is #1, indicating that a beam used for data transmission is the same as a receive beam corresponding to the CSI-RS whose index is #1. The receive beam corresponding to the CSI-RS whose index is #1 may be determined through a beam measurement procedure, and is known to the terminal device. Therefore, the terminal device may determine, based on a specific value of the TCI field, a beam corresponding to the data transmit beam, to send or receive data by using the corresponding beam.

It should be noted that the two descriptions, namely, the TCI-state and the TCI-state, in this specification may be interchanged.

4. Reference signal (reference signal, RS): In this application, the reference signal includes a CSI-RS, a synchronization signal/physical broadcast channel block (synchronization system/physical broadcast channel block, SS/PBCH block), or a fine synchronization signal (time/frequency tracking reference signal, TRS). The SS/PBCH block may be referred to as an SSB for short.

5. A resource is a configuration information element, including a related parameter of a reference signal, for example, a sending periodicity, a position of a used time-frequency resource, frequency domain density and bandwidth, a generation sequence and a scrambling sequence of the reference signal, an orthogonal cover code configuration, and a port configuration. Each beam is corresponding to one resource. The network device sends, by using a beam corresponding to one resource, a reference signal corresponding to the resource. The terminal device may determine quality of the beam or the resource by measuring the reference signal. Therefore, during beam measurement, a beam corresponding to a resource may be uniquely identified based on an index of the resource. The resource may be a resource of an uplink signal, or may be a resource of a downlink signal.

It should be noted that a beam corresponding to one resource may be preconfigured. Alternatively, if a beam corresponding to the resource is not specified, the terminal device may determine, in a process of measuring the resource, the beam corresponding to the resource in a beam sweeping manner. Alternatively, the terminal device may measure the resource by using a fixed beam, and determine, in another manner, a beam corresponding to the resource.

The resource is configured by using RRC signaling. In terms of a configuration structure, one resource is one data structure, and includes a related parameter of an uplink signal or a downlink signal corresponding to the resource. For example, for the uplink signal, the resource includes a type of the uplink signal, a resource element carrying the uplink signal, sending time and a sending periodicity of the uplink channel, a port used to send the uplink signal, and the like. For the downlink signal, the resource includes a type of the downlink signal, a resource element carrying the downlink signal, sending time and a sending periodicity of the downlink signal, a port used to send the downlink signal, and the like. A resource of each uplink signal or a resource of each downlink signal has a unique index, to identify the resource. It may be understood that the index of the resource may also be referred to as an identifier of the resource. This is not limited in embodiments of this application.

6. A measurement resource is a resource that is configured by the network device and that is used for channel measurement. The measurement resource may be used to measure channel information such as reference signal received power (reference signal received power, RSRP), a channel quality indicator (channel quality indicator, CQI), a signal to interference plus noise ratio (signal to interference and noise ratio, SINR), and reference signal received quality (reference signal received quality, RSRQ).

7. Serving cell of the terminal device: It is a cell on which the terminal device camps. The terminal device may perform communication transmission with the serving cell by using a beam of the serving cell.

8. Neighbor cell of the terminal device: It is a non-serving cell of the terminal device, or a cell whose PCI is different from a PCI of the serving cell of the terminal device. The terminal device may perform communication transmission with the neighbor cell by using a beam of the neighbor cell.

In an R16 standard and a standard before R16, L1 measurement supports measurement of only a resource of the serving cell of the terminal device, for example, an SSB resource or a CSI-RS resource of the serving cell.

In an R17 standard, for cross-cell beam management, measurement of a reference signal of a non-serving cell associated with the terminal device is further supported. For example, when the terminal device needs to measure an SSB of the neighbor cell, the network device configures, in RRC configuration information, a PCI of the associated neighbor cell for the to-be-measured resource of the terminal device, to indicate that the SSB is not an SSB of the serving cell. In this way, an SSB of a neighbor cell that is at a same frequency as the serving cell is measured, to obtain signal quality of the SSB of the neighbor cell.

The following describes a format of a CSI-SSB-ResourceSet information element.

```
CSI-SSB-ResourceSet::=        SEQUENCE{

csi-SSB-ResourceSetIdCSI-SSB-ResourceSetId,

csi-SSB-ResourceListSEQUENCE

(SIZE(1..maxNrofCSI-SSB-ResourcePerSet)) OF SSB-Index,

...,

[[

additionalPCIList-r17SEQUENCE (SIZE(1..maxNrofCSI-SSB-ResourcePerSet))

OF   AdditionalPCIIndex-r17      OPTIONAL   -- Need R

]]

}
```

CSI-SSB-ResourceSet is a reference signal resource set for current physical layer (namely, L1) measurement. If any reference signal resource in the reference signal resource set is an SSB resource, the SSB resource may be associated with a PCI of a non-serving cell, to identify that the SSB resource is actually sent by the non-serving cell corresponding to the PCI.

For measurement of a CSI-RS, the network device needs to configure a QCL relationship of the CSI-RS as the foregoing SSB, that is, the SSB of the associated neighbor cell. The terminal device may determine an SSB resource of the neighbor cell based on a CSI-RS resource of the serving cell and the QCL relationship of the CSI-RS, and complete measurement of the SSB of the neighbor cell.

Currently, a measurement result used for inter-cell mobility decision is determined at a layer 3 (layer 3, L3) (that is, a higher layer of the terminal device, for example, an RRC layer). Specifically, the terminal device obtains cell quality by calculating, according to some criteria, signal quality of a beam obtained through the L1 measurement. A specific criterion may include: The terminal device averages the signal quality of the beam to obtain the cell quality. Optionally, the criterion may further include that the terminal device performs L3 filtering on the cell quality.

The following describes an L3 measurement procedure in an NR system.

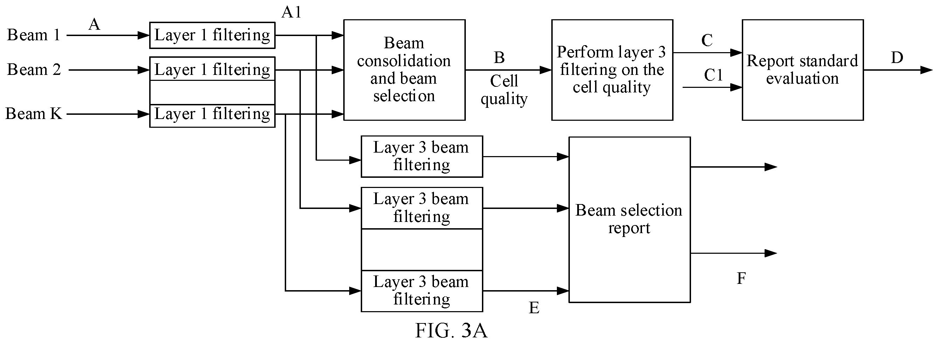

FIG. 3A is a schematic flowchart of L3 measurement according to an embodiment of this application. Refer to FIG. 3A. A terminal device performs L1 filtering to obtain signal quality of each beam, that is, signal quality of each beam outputted at A1 in FIG. 3A. The terminal device performs selection in signal quality of each cell to obtain cell quality (cell quality) outputted at B in FIG. 3A, and performs L3 filtering on the cell quality. The terminal device processes a measurement result obtained through the L3 filtering, to obtain beam measurement information (measurement information) outputted at D in FIG. 3A.

The terminal device performs the L3 filtering on the signal quality of each cell, to obtain each beam-specific measurement result (beam-specific measurement) outputted at E in FIG. 3A. Then, the terminal device performs selection in the beam-specific measurement results to obtain beam measurement information (beam measurement information) outputted at F in FIG. 3A.

Before the terminal device outputs the cell quality at B, a principle of beam-level measurement result consolidation and beam selection (Beam Consolidation/Selection) of the terminal device is as follows: nrofSS-BlocksToAverage and absThreshSS-BlocksConsolidation are carried in measurement target (MeasObjectNR) configuration information.

nrofSS-BlocksToAverage indicates a quantity of SSBs (or beams) used to calculate the cell quality. absThreshSS-BlocksConsolidation indicates a quality threshold of the SSB (or the beam) used to calculate the signal quality. For example, the quality threshold is X.

In a possible implementation, if a value of best beam signal quality is greater than or equal to absThreshSS-BlocksConsolidation, the cell quality is the best beam signal quality.

In another possible implementation, if a value of best beam signal quality is greater than the absThreshSS-BlocksConsolidation, the cell quality is equal to an average value of beam signal quality that exceeds absThreshSS-BlocksConsolidation. In addition, a total quantity of pieces of beam signal quality that exceeds absThreshSS-BlocksConsolidation should be less than or equal to nrofSS-BlocksToAverage.

It can be learned from the foregoing descriptions that, measurement of only a reference signal of a serving cell of the terminal device or a reference signal of a neighbor cell associated with the terminal device is currently supported. A reference signal whose frequency is different from that of the serving cell cannot be measured. Consequently, the terminal device cannot obtain measurement results of more inter-frequency cells through measurement. Consequently, accuracy of performing cell mobility decision by the network device based on the measurement result of the terminal device is low.

Further, a ping-pong effect easily occurs in L1 measurement. As a result, it is difficult to directly use an L1 measurement result for inter-cell mobility decision. Specifically, because the terminal device moves (for example, the terminal device rotates at an original position) and an environment changes (for example, wind blows leaves), a physical channel fluctuates in an actual scenario. An L1 measurement result reported by the terminal device is easily affected by the channel fluctuation. Consequently, accuracy of the L1 measurement result is low.

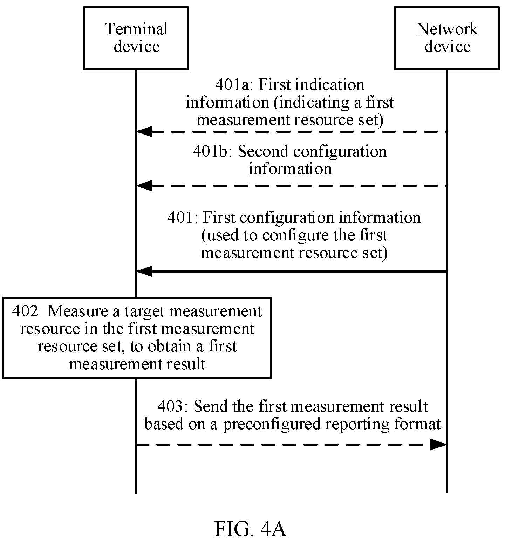

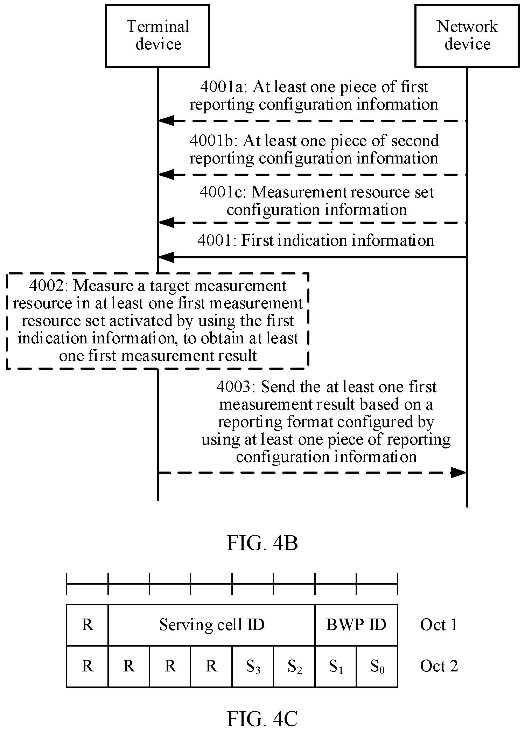

Therefore, if the network device performs cell handover based on the L1 measurement result reported by the terminal device, the ping-pong effect may be caused. For example, due to the channel fluctuation, signal quality of a reference signal of a target neighbor cell suddenly becomes good, and the terminal device is rashly handed over to the target neighbor cell. However, the terminal device finds, after the handover, that the signal quality of the reference signal of the target neighbor cell is not ideal. Consequently, the terminal device is handed over from the target neighbor cell to an original cell. A phenomenon that causes the terminal device to be handed over back and forth between cells may be referred to as a ping-pong effect. The ping-pong effect greatly wastes network resources and increases interruption duration of the terminal device in a data communication process. Therefore, how to improve the accuracy of the L1 measurement result to enable the network device to accurately perform the inter-cell mobility decision based on the L1 measurement result is a problem to be resolved in this application. This application provides a corresponding technical solution. For details, refer to related descriptions in the following embodiments shown in FIG. 4A and FIG. 4B.

For the terminal device, the terminal device uses a single radio frequency module to perform signal measurement and data transmission, and cannot work at two inter-frequency frequencies simultaneously. Duration in which the terminal device suspends communication with a serving cell, to measure a reference signal of a neighbor cell of the terminal device is referred to as a measurement gap (measurement gap).

The following describes a configuration of the measurement gap.

In an LTE system, a length of the measurement gap is fixed, so that transmission of at least one synchronization signal is performed in one measurement gap. In the LTE system, a periodicity of the synchronization signal is 5 milliseconds. Therefore, the length of the measurement gap in the LTE system is 6 milliseconds. In this case, the terminal device is allowed to re-tune the radio frequency module of the terminal device at a start time point and an end time point of the measurement gap. It usually takes 0.5 millisecond for the terminal device to adjust the radio frequency module. The terminal device detects the synchronization signal in the measurement gap, identifies a physical cell and a reception timing parameter, and measures a reference signal of the cell in the measurement gap.

However, in an NR system, duration of the measurement gap is variable. Currently, in the NR system, the duration of the measurement gap includes the following types: 1.5 milliseconds, 3 milliseconds, 3.5 milliseconds, 4 milliseconds, 5.5 milliseconds, and 6 milliseconds. A measurement gap repetition periodicity includes the following types: 20 milliseconds, 40 milliseconds, 80 milliseconds, and 160 milliseconds.

In the NR system, there are currently three types of measurement gaps, which are separately described below.

1. Low-frequency gap (gapFR1): The low-frequency gap can be used for only a low frequency (FR1) band. The gapFR1 cannot be configured together with a user equipment gap (gapUE). For example, when the terminal device is in an RRC connected mode state of an evolved universal terrestrial radio access network and new radio dual connectivity (EUTRA-NR dual connection, EN-DC) and needs to measure the FR1 band, the network device configures the gapFR1 or the gapUE for the terminal device.

2. High-frequency gap (gapFR2): The high-frequency gap can be used only for a high frequency (FR2) band. The gapFR2 cannot be configured together with a gapUE.

3. User equipment gap (gapUE): The gapUE may be used for all bands, that is, FR1 and FR2. If the network device configures the gapUE for the terminal device, neither the gapFR1 nor the gapFR2 can be configured. The terminal device may measure FR1, FR2, and a non-5G NR radio access technology (5th generation new radio radio access technology, NR RAT) in the gapUE.

In the NR system, the length of the measurement gap is not fixed. A fixed length of the measurement gap may cause an unnecessary decrease in a throughput of the terminal device. The network device may set a synchronization signal block measurement timing configuration (SSB measurement timing configuration, SMTC) with reference to SSB transmission and a measurement gap of a cell. The SMTC includes duration of a measurement window used for SSB measurement in each periodicity, which may be referred to as an SMTC window. For example, if the duration of the SMTC window is 2 milliseconds, and the measurement gap is 6 milliseconds, a time period of 4 milliseconds cannot be used for data transmission in the serving cell of the terminal device, resulting in a low throughput.

To avoid a problem of the low throughput, a configurable length of the measurement gap is used in the NR system. In addition to a conventional measurement gap of 6 milliseconds, measurement gaps of 1.5 milliseconds, 3 milliseconds, 3.5 milliseconds, 4 milliseconds, and 5.5 milliseconds can be further configured.

Usually, if duration of the SMTC window is longer, duration for the terminal device to measure an SSB of an inter-frequency cell is longer, and it is easier to measure the SSB of the inter-frequency cell. A user can perform radio frequency switching in a timely manner, but a corresponding measurement gap is also larger, causing a higher decrease in the throughput of the user performing the inter-frequency measurement. If the duration of the SMTC window is shorter, the duration for the terminal device to measure the SSB of the inter-frequency cell is shorter, and it is more difficult to measure the SSB of the inter-frequency cell. However, a corresponding measurement gap is also smaller, causing a lower decrease in the throughput of the user performing the inter-frequency measurement.

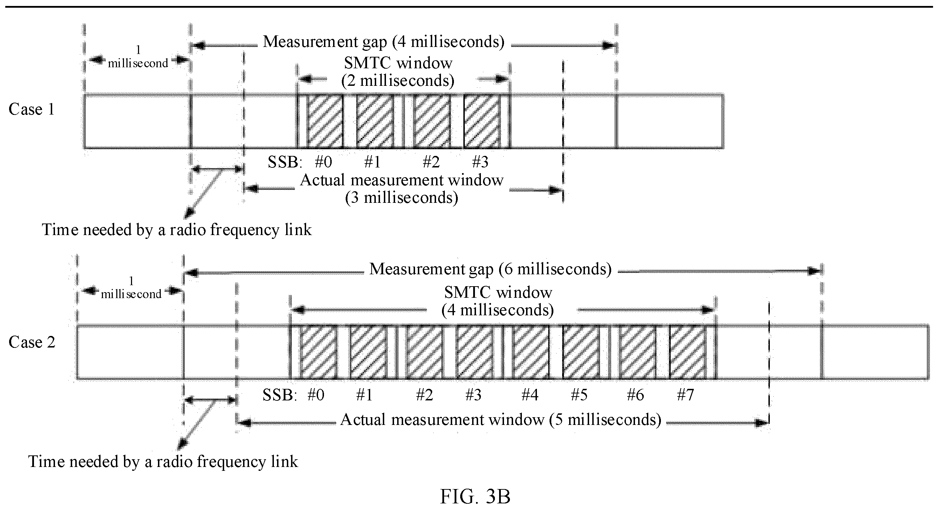

As shown in FIG. 3B, in a case 1, when the measurement gap is 4 milliseconds, the duration of the SMTC window may be set to 2 milliseconds. In a case 2, when the measurement gap is 6 milliseconds, the duration of the SMTC window may be set to 4 milliseconds.

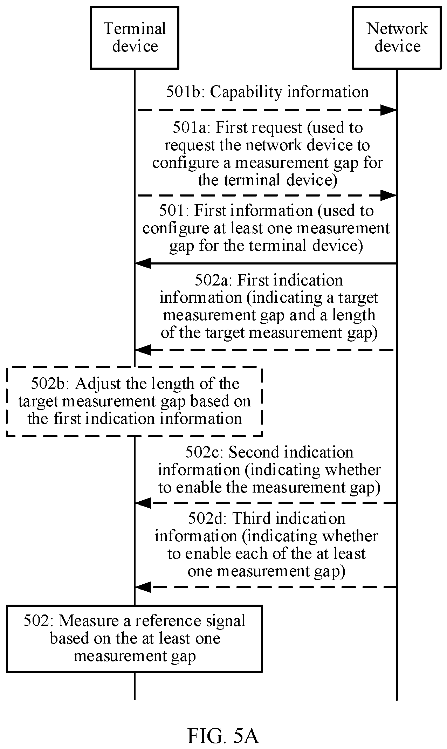

In actual deployment, before handover, a distance between the terminal device and a network device of the original cell and a distance between the terminal device and a network device of the target cell may be different. If the terminal device receives a reference signal of the target cell in a receive time window in which a reference signal of the original cell is received, the terminal device may fail to completely receive the reference signal of the target cell due to different propagation delays. To be specific, a time difference between arrival time at which the reference signal of the target cell arrives at the terminal device and arrival time at which the reference signal of the original cell arrives at the terminal device exceeds time of a cyclic prefix (cyclic prefix, CP). Consequently, precision of the L1 measurement performed by the terminal device is affected, and even the reference signal of the target cell cannot be effectively measured. Therefore, how to set a proper measurement gap for the terminal device to perform the L1 measurement is a problem worth considering. This application provides a corresponding technical solution. For details, refer to related descriptions in the following embodiment shown in FIG. 5A.

The technical solutions of this application are described below with reference to specific embodiments.

FIG. 4A is a diagram of an embodiment of a resource measurement method according to an embodiment of this application. Refer to FIG. 4A. The method includes the following steps.

401: A network device sends first configuration information to a terminal device. The first configuration information is used to configure a first measurement resource set. Correspondingly, the terminal device receives the first configuration information from the network device.

Specifically, the first configuration information includes the first measurement resource set. The first measurement resource set includes at least one of the following: an identifier of at least one neighbor cell of the terminal device, a global identifier of a target measurement resource of the at least one neighbor cell, and a local identifier of the target measurement resource of the at least one neighbor cell.

Specifically, the network device may configure a measurement resource of the at least one neighbor cell for the terminal device. For example, the network device configures a measurement resource 1 and a measurement resource 2 for a neighbor cell 1, and configures a measurement resource 3 and a measurement resource 4 for a neighbor cell 2. In other words, the measurement resource of the at least one neighbor cell includes the measurement resource 1, the measurement resource 2, the measurement resource 3, and the measurement resource 4.

Optionally, the first configuration information further includes configuration information of the measurement resource of the at least one neighbor cell. The configuration information of the measurement resource of the at least one neighbor cell includes at least one of the following: the identifier of the at least one neighbor cell and configuration information of a reference signal of the at least one neighbor cell. The target measurement resource of the at least one neighbor cell belongs to the measurement resource of the at least one neighbor cell.

For example, the measurement resource of the at least one neighbor cell includes the measurement resource 1, the measurement resource 2, the measurement resource 3, and the measurement resource 4. The target measurement resource of the at least one neighbor cell includes the measurement resource 1 and the measurement resource 3.

In this implementation, the network device configures the measurement resource of the at least one neighbor cell and the first measurement resource set by using same configuration information. Alternatively, the network device may separately configure the measurement resource of the at least one neighbor cell and the first measurement resource set by using different configuration information. This is not specifically limited in this application.

The at least one neighbor cell may include a neighbor cell whose frequency is different from that of a serving cell of the terminal device, and/or a neighbor cell whose frequency is the same as that of the serving cell. In this case, the terminal device measures the measurement resource of the at least one neighbor cell, to obtain a measurement result of the neighbor cell whose frequency is different from that of the serving cell. This helps the network device select a proper cell for the terminal device based on the measurement result of the terminal device, so that the terminal device is handed over to the cell, to improve communication quality.

Optionally, when the reference signal is an SSB, the configuration information of the SSB of the at least one neighbor cell includes at least one of the following: a center frequency of the SSB, a subcarrier spacing of the SSB, an index of the SSB, a periodicity of the SSB, a system frame occupied by the SSB, an offset of the system frame occupied by the SSB, or a subframe offset of the SSB. The offset of the system frame occupied by the SSB indicates a quantity of offset system frames or slots of the system frame in which the SSB of the neighbor cell is located relative to a system frame in which an SSB of the serving cell is located. The quantity of offset system frames is a quantity of offset system frames of one SSB periodicity of the neighbor cell relative to one SSB periodicity of the serving cell. The subframe offset of the SSB indicates a quantity of offset slots of a subframe in which the SSB of the neighbor cell is located relative to a subframe in which the SSB of the serving cell is located. In this implementation, for each neighbor cell, the network device may send the configuration information of the SSB of the neighbor cell to the terminal device.

Optionally, when the reference signal is a CSI-RS, the configuration information of the CSI-RS of the at least one neighbor cell includes at least one of the following: an identifier of a CSI-RS resource occupied by the CSI-RS, frequency domain resource density of the CSI-RS, a subcarrier spacing, a center frequency, bandwidth, a position of a start resource block, a scrambling sequence identifier, a periodicity, a slot offset, a power offset of the CSI-RS relative to an SSB, an index of an SSB associated with the CSI-RS, or an identifier of a cell to which the SSB associated with the CSI-RS belongs. In this implementation, for each neighbor cell, the network device may send the configuration information of the CSI-RS of the neighbor cell to the terminal device.

For example, for each neighbor cell, the configuration information of the reference signal may be represented as follows:

```
Cell resource ID
    {PCI/additionalPCI
Choice
{SSB resource set,
CSI-RS resource set}
```

A value of the PCI may be a value of a PCI of the neighbor cell. The SSB resource set includes a global identifier of an SSB resource of the neighbor cell. The CSI-RS resource set includes a global identifier of a CSI-RS resource of the neighbor cell. For the global identifier, refer to the following descriptions.

The following first describes some possible manners in which the network device configures the global identifier of the target measurement resource of the at least one neighbor cell. This application is still applicable to another manner. The following examples do not constitute a limitation on this application.

Manner 1: The network device configures one global identifier for each measurement resource of each neighbor cell. Different measurement resources of the neighbor cell may be corresponding to different global identifiers, or may be corresponding to a same global identifier.

The following describes a possible configuration manner by using an example in which the different measurement resources of the neighbor cell are corresponding to the different global identifiers.

Optionally, the network device configures at least one second measurement resource set for the terminal device. The at least one second measurement resource set is in one-to-one correspondence with the at least one neighbor cell. One of the at least one second measurement resource set includes a global identifier of a measurement resource of a neighbor cell corresponding to the second measurement resource set.

In this implementation, the network device configures one second measurement resource set for each neighbor cell. The second measurement resource set includes the global identifier of the measurement resource of the neighbor cell. For example, the network device configures 128 measurement resources for the neighbor cell 1. In this case, global identifiers corresponding to the 128 measurement resources are 0 to 127. In the 128 measurement resources, a global identifier of a $1^{st}$ measurement resource is 0, a global identifier of a $2^{nd}$ measurement resource is 1, and by analogy, a global identifier of a $128^{th}$ measurement resource is 127. In other words, the second measurement resource set of the neighbor cell 1 includes the global identifiers of the 128 measurement resources. The network device configures 64 measurement resources for the neighbor cell 2. In this case, global identifiers corresponding to the 64 measurement resources are 0 to 63. In the 64 measurement resources, a global identifier of a $1^{st}$ measurement resource is 0, an identifier of a $2^{nd}$ measurement resource is 1, and by analogy, a global identifier of a $64^{th}$ measurement resource is 63. In other words, the second measurement resource set of the neighbor cell 2 includes the global identifiers of the 64 measurement resources. A second measurement resource set of another neighbor cell is similar, and details are not described herein.

Optionally, the first configuration information further includes the at least one second measurement resource set. In this implementation, the network device configures the first measurement resource set and the at least one second measurement resource set for the terminal device by using same configuration information. During actual application, the network device may alternatively configure the first measurement resource set and the at least one second measurement resource set for the terminal device by using different configuration information. This is not specifically limited in this application.

It should be noted that, for a serving cell, the network device may configure a corresponding second measurement resource set for the serving cell. The second measurement resource set of the serving cell includes a global identifier of a measurement resource of the serving cell. For example, the serving cell includes 128 measurement resources, and corresponding global identifiers are 0 to 127. Therefore, the second measurement resource set of the serving cell includes the global identifiers of the 128 measurement resources.

Optionally, the first configuration information further includes the second measurement resource set of the serving cell. In this implementation, the network device configures the first measurement resource set and the second measurement resource set of the serving cell for the terminal device by using same configuration information. During actual application, the network device may alternatively configure the first measurement resource set and the second measurement resource set of the serving cell for the terminal device by using different configuration information. This is not specifically limited in this application.

Manner 2: The network device configures one global identifier for each of the measurement resource of the at least one neighbor cell. Different measurement resources may be corresponding to different global identifiers, or may be corresponding to a same global identifier.

The following describes a possible configuration manner by using an example in which the different measurement resources are corresponding to the different global identifiers.

Optionally, the network device configures a third measurement resource set for the terminal device. The third measurement resource set includes the global identifier of each measurement resource in the measurement resource of the at least one neighbor cell.

In this implementation, the network device configures the third measurement resource set for the measurement resource of the at least one neighbor cell. For example, the measurement resource of the at least one neighbor cell includes 128 measurement resources of the neighbor cell 1 and 64 measurement resources of the neighbor cell 2. The neighbor cell 1 and the neighbor cell 2 include 192 measurement resources in total. Global identifiers corresponding to the 192 measurement resources are 0 to 191. In the 192 measurement resources, a global identifier of a $1^{st}$ measurement resource is 0, an identifier of a $2^{nd}$ measurement resource is 1, and by analogy, a global identifier of a $192^{nd}$ measurement resource is 191. The third measurement resource set includes the global identifiers of the 192 measurement resources.

Optionally, the third measurement resource set further includes a global identifier of a measurement resource of the serving cell of the terminal device. In this implementation, the network device configures the third measurement resource set for the measurement resource of the at least one neighbor cell and the measurement resource of the serving cell. For example, the measurement resource of the at least one neighbor cell includes the 128 measurement resources of the neighbor cell 1 and the 64 measurement resources of the neighbor cell 2. The measurement resource of the serving cell includes 128 measurement resources of the serving cell. In this case, the neighbor cell 1, the neighbor cell 2, and the serving cell include 320 measurement resources in total. Global identifiers corresponding to the 320 measurement resources are 0 to 319. In the 320 measurement resources, a global identifier of a $1^{st}$ measurement resource is 0, an identifier of a $2^{nd}$ measurement resource is 1, and by analogy, a global identifier of a $320^{th}$ measurement resource is 319. The third measurement resource set includes the global identifiers of the 320 measurement resources.

Optionally, the first configuration information further includes the third measurement resource set. In this implementation, the network device configures the first measurement resource set and the third measurement resource set for the terminal device by using same configuration information. During actual application, the network device may alternatively configure the first measurement resource set and the third measurement resource set for the terminal device by using different configuration information. This is not specifically limited in this application.

Optionally, the first measurement resource set includes the identifier of the at least one neighbor cell of the terminal device, R global identifiers, and R local identifiers. The R global identifiers are in one-to-one correspondence with R target measurement resources, and the R local identifiers are in one-to-one correspondence with the R target measurement resources. The R target measurement resources are target measurement resources of the at least one neighbor cell.

In this implementation, each target measurement resource is corresponding to one global identifier and one local identifier.

It should be noted that the identifier of the at least one neighbor cell may be a local identifier of the at least one neighbor cell, or a cell identity of the at least one neighbor cell. Optionally, the cell identity is a PCI.

The local identifier of the at least one neighbor cell is in one-to-one correspondence with the cell identity of the at least one neighbor cell. It should be noted that, optionally, the network device may configure a correspondence between the local identifier of the at least one neighbor cell and the cell identity of the at least one neighbor cell for the terminal device.

For example, the at least one neighbor cell includes three neighbor cells: the neighbor cell 1, the neighbor cell 2, and a neighbor cell 3. In this case, it can be learned that a local identifier of the neighbor cell 1 is 1, a local identifier of the neighbor cell 2 is 2, and a local identifier of the neighbor cell 3 is 3. A cell identity of the neighbor cell 1 is PCI1, a cell identity of the neighbor cell 2 is PCI2, and a cell identity of the neighbor cell 3 is PCI3.

In a possible implementation, one target measurement resource of each of the at least one neighbor cell is corresponding to one global identifier and one local identifier. Different target measurement resources of a same neighbor cell are corresponding to different global identifiers and different local identifiers.

For example, the at least one neighbor cell includes the neighbor cell 1 and the neighbor cell 2. The second measurement resource set of the neighbor cell 1 includes the global identifiers of the 128 measurement resources of the neighbor cell 1. The second measurement resource set of the neighbor cell 2 includes the global identifiers of the 64 measurement resources of the neighbor cell 2. The first measurement resource set includes a first list, a second list, and a third list. The first list includes an identifier of the neighbor cell 1 and an identifier of the neighbor cell 2. Target measurement resources of the neighbor cell 1 include the measurement resource 23 to the measurement resource 26, the measurement resource 30, and the measurement resource 44 of the neighbor cell 1. It can be learned that global identifiers respectively corresponding to the target measurement resources of the neighbor cell 1 are 22, 23, 24, 25, 29, and 43. Target measurement resources of the neighbor cell 2 include the measurement resource 10 to the measurement resource 15 and the measurement resource 30 to the measurement resource 33 of the neighbor cell 2. It can be learned that global identifiers respectively corresponding to the target measurement resources of the neighbor cell 2 are 9, 10, 11, 12, 13, 14, 29, 30, 31, and 32. Therefore, the second list is {0, 19, 29, 2, 29, 43}. Because there are a total of 16 target measurement resources of the at least one neighbor cell, local identifiers respectively corresponding to the target measurement resources of the at least one neighbor cell are 0 to 15. For example, local identifiers respectively corresponding to the measurement resource 23 to the measurement resource 26, the measurement resource 30, and the measurement resource 44 of the neighbor cell 1 are 0, 1, 2, 3, 4, and 5. Local identifiers respectively corresponding to the measurement resource 10 to the measurement resource 15 and the measurement resource 30 to the measurement resource 33 of the neighbor cell 2 are 6, 7, 8, 9, 10, 11, 12, 13, 14, and 15. Therefore, the third list is {0, 1, 2, 3, 4, 5, 6, 7, 8, 9, 10, 11, 12, 13, 14, 15}.

In another possible implementation, each measurement resource in the target measurement resource of the at least one neighbor cell is corresponding to one global identifier and one local identifier. Different target measurement resources are corresponding to different global identifiers and different local identifiers.

For example, the at least one neighbor cell includes the neighbor cell 1 and the neighbor cell 2. The third measurement resource set includes the global identifiers of the 128 measurement resources of the neighbor cell 1 and the global identifiers of the 64 measurement resources of the neighbor cell 2. The global identifiers corresponding to the 128 measurement resources of the neighbor cell 1 are 0 to 127. The global identifiers corresponding to the 64 measurement resources of the neighbor cell 2 are 128 to 191. The first measurement resource set includes a first list, a second list, and a third list. The first list includes an identifier of the neighbor cell 1 and an identifier of the neighbor cell 2. Target measurement resources of the neighbor cell 1 include the measurement resource 23 to the measurement resource 26, the measurement resource 30, and the measurement resource 44 of the neighbor cell 1. Global identifiers respectively corresponding to the target measurement resources of the neighbor cell 1 are 22, 23, 24, 25, 29, and 43. Target measurement resources of the neighbor cell 2 include the measurement resource 10 to the measurement resource 15 and the measurement resource 30 to the measurement resource 33 of the neighbor cell 2. It can be learned that global identifiers respectively corresponding to the target measurement resources of the neighbor cell 2 are 137, 138, 139, 140, 141, 142, 157, 158, 159, and 160. Therefore, the second list is {22, 23, 24, 25, 29, 43, 22, 23, 24, 25, 29, 43}. Because there are a total of 16 target measurement resources of the at least one neighbor cell, local identifiers respectively corresponding to the target measurement resources of the at least one neighbor cell are 0 to 15. For example, local identifiers respectively corresponding to the measurement resource 23 to the measurement resource 26, the measurement resource 30, and the measurement resource 44 of the neighbor cell 1 are 0, 1, 2, 3, 4, and 5. Local identifiers respectively corresponding to the measurement resource 10 to the measurement resource 15 and the measurement resource 30 to the measurement resource 33 of the neighbor cell 2 are 6, 7, 8, 9, 10, 11, 12, 13, 14, and 15. Therefore, the third list is {0, 1, 2, 3, 4, 5, 6, 7, 8, 9, 10, 11, 12, 13, 14, 15}.

The foregoing describes implementations in which the different target measurement resources are corresponding to the different global identifiers and the different local identifiers. During actual application, a plurality of target measurement resources may be corresponding to a same global identifier and a same local identifier, or a same target measurement resource may be corresponding to a plurality of global identifiers and a plurality of local identifiers. This is not specifically limited in this application. For example, both a target measurement resource 1 and a target measurement resource 2 are corresponding to a global identifier 1 and a local identifier 1. Specifically, the global identifier corresponding to the target measurement resource should be determined with reference to a manner in which the network device configures the global identifier.

It should be noted that a cell included in the first measurement resource set may be referred to as a target cell or a candidate cell. This is not specifically limited in this application. The first configuration information may be referred to as L1 measurement configuration information, or may have another name. This is not specifically limited in this application.

Optionally, the first configuration information is used to configure a plurality of measurement resource sets, and the first measurement resource set is one of the plurality of measurement resource sets.

402: The terminal device measures the target measurement resource in the first measurement resource set, to obtain a first measurement result.

Specifically, the terminal device performs L1 measurement on the target measurement resource of the at least one neighbor cell, to obtain the first measurement result.

Optionally, the embodiment shown in FIG. 4A further includes step 401a. Step 401a may be performed before step 402.

401a: The network device sends first indication information to the terminal device. The first indication information indicates the first measurement resource set. Correspondingly, the terminal device receives the first indication information from the network device.

The first indication information indicates the terminal device to measure the target measurement resource in the first measurement resource set.

If a plurality of measurement resource sets are configured by using the first configuration information, the network device may indicate one of the measurement resource sets to the terminal device, so that the terminal device measures a target measurement resource in the measurement resource set. In this way, the network device dynamically indicates a corresponding measurement resource set based on an actual requirement, so that the terminal device measures a corresponding target measurement resource. This helps the network device obtain measurement results of more cells obtained by the terminal device through measurement. For example, the network device determines, based on a position of the terminal device, that at least one target measurement resource of one or more neighbor cells may be preferentially measured. In this case, the network device may indicate a corresponding measurement resource set. The measurement resource set includes a global identifier and a local identifier of the at least one target measurement resource.

It should be noted that there is no fixed execution sequence between step 401a and step 401. Step 401a may be performed before step 401; step 401 may be performed before step 401a; or step 401a and step 401 may be simultaneously performed based on a case. This is not specifically limited in this application.

Optionally, the first measurement resource set further includes an identifier of the serving cell of the terminal device, a global identifier of a target measurement resource of the serving cell, and a local identifier of the target measurement resource of the serving cell.

It should be noted that the identifier of the serving cell may be a local identifier of the serving cell or a cell identity of the serving cell. Optionally, the cell identity is a PCI.

The local identifier of the serving cell is corresponding to the cell identity of the serving cell. It should be noted that, optionally, the network device may configure, for the terminal device, a correspondence between the local identifier corresponding to each of the at least one neighbor cell and the serving cell and the cell identity corresponding to each of the at least one neighbor cell and the serving cell.

For example, the at least one neighbor cell includes three neighbor cells: the neighbor cell 1, the neighbor cell 2, and the neighbor cell 3. In this case, it can be learned that the local identifier of the serving cell is 1, the local identifier of the neighbor cell 1 is 2, the local identifier of the neighbor cell 2 is 3, and the local identifier of the neighbor cell 3 is 4. The cell identity of the serving cell is PCI1, the cell identity of the neighbor cell 1 is PCI2, the cell identity of the neighbor cell 2 is PCI3, and the cell identity of the neighbor cell 3 is PCI4.

Optionally, step 402 specifically includes: The terminal device measures the target measurement resource of the at least one neighbor cell and the target measurement resource of the serving cell, to obtain the first measurement result.

Optionally, the embodiment shown in FIG. 4A further includes step 401b. Step 401b may be performed before step 402.

401b: The network device sends second configuration information to the terminal device. Correspondingly, the terminal device receives the second configuration information from the network device.

In a possible implementation, the second configuration information indicates whether to enable L1 cell quality measurement, and/or the second configuration information indicates whether to enable L1 filtering.

The enabling L1 filtering means that the terminal device performs the L1 filtering on signal quality obtained by performing the L1 measurement on the target measurement resource.

In this implementation, if the second configuration information indicates to enable the L1 cell quality measurement, and/or indicates to enable the L1 filtering, it indicates that the L1 cell quality measurement and/or the L1 filtering are/is enabled for all cells in the first measurement resource set. For example, the second configuration information includes indication information. When a value of the indication information is 1, it indicates that the L1 cell quality measurement and/or the L1 filtering are/is enabled for all the cells in the first measurement resource set. When a value of the indication information is 0, it indicates that the L 1 cell quality measurement and/or the L1 filtering are/is enabled for none of the cells in the first measurement resource set.

Optionally, the second configuration information includes second indication information. The second indication information indicates whether to enable the L1 cell quality measurement, and/or indicates whether to enable the L1 filtering.

In another possible implementation, the second configuration information indicates whether the terminal device is to enable L1 cell quality measurement for each cell in the first measurement resource set, and/or the second configuration information indicates whether the terminal device is to enable L1 filtering on signal quality that is of a target measurement resource of each cell in the first measurement resource set and that is obtained through L 1 measurement.

The enabling L1 filtering means that the terminal device performs the L1 filtering on signal quality obtained by performing the L1 measurement on the target measurement resource.

In this implementation, the second configuration information may separately indicate whether to enable the L1 cell quality measurement and/or the L1 filtering for each cell in the first measurement resource set. For example, the first measurement resource set includes the neighbor cell 1, the neighbor cell 2, and the neighbor cell 3. The second configuration information includes indication information. The indication information includes 3 bits, respectively indicating whether to enable the L1 cell quality measurement and/or the L1 filtering for the neighbor cell 1, the neighbor cell 2, and the neighbor cell 3. For example, the 3 bits are 100, indicating the terminal device to enable the L1 cell quality measurement and/or the L1 filtering for the neighbor cell 1, and not to enable the L1 cell quality measurement and/or the L1 filtering for the neighbor cell 2 and the neighbor cell 3. In other words, for each cell in the first measurement resource set, the network device separately indicates whether to enable the L1 cell quality measurement and/or enable the L1 filtering for the cell.

It should be noted that there is no fixed execution sequence between step 401b and steps 401a and 401. Step 401b may be performed before step 401a and step 401; or step 401a and step 401 are performed before step 401b; or step 401b, step 401a, and step 401 are simultaneously performed based on a case. This is not specifically limited in this application.

Based on step 401b, optionally, step 402 specifically includes:

The terminal device measures the target measurement resource in the first measurement resource set based on the second configuration information, to obtain the first measurement result.

If the second configuration information indicates to enable the L1 cell quality measurement, the terminal device may perform the L1 measurement on the target measurement resource in the first measurement resource set, to obtain signal quality of each target measurement resource. Then, the terminal device may determine cell quality of a cell based on signal quality of target measurement resources of the same cell.

If the second configuration information indicates to enable the L1 filtering, the terminal device may measure the target measurement resource in the first measurement resource set, to obtain signal quality of each target measurement resource. Then, the terminal device performs the L1 filtering on the signal quality of each target measurement resource.

In a possible implementation, if the second configuration information indicates to enable the L1 cell quality measurement, the second configuration information includes a cell quality calculation parameter or N weights.

The cell quality calculation parameter is used by the terminal device to calculate cell quality of each cell based on a measurement result of a reference signal (corresponding to a target measurement resource) of each cell in the first measurement resource set. The cell quality calculation parameter includes a parameter used to calculate the cell quality of each cell based on the reference signal of the cell.

In this implementation, optionally, the network device may indirectly indicate, through the cell quality calculation parameter or the N weights, to enable the L1 cell quality measurement.

Optionally, the cell quality calculation parameter includes at least one of the following: a quantity of reference signals whose signal quality is used to calculate the cell quality, a type of the reference signal used to calculate the cell quality, and a minimum threshold of the signal quality of the reference signal used to calculate the cell quality. The terminal device determines the cell quality of each cell based on the cell quality calculation parameter and the signal quality of the reference signal of the cell.

For example, the cell quality calculation parameter includes: The cell quality is calculated based on signal quality of three reference signals of the cell, the type of the reference signal is an SSB, and the minimum threshold is X. For each cell in the first measurement resource set, the terminal device determines three SSBs that are of the cell and whose signal quality is greater than X, and determines the cell quality of the cell based on the signal quality of the three SSBs whose signal quality is greater than X. For example, the terminal device averages the signal quality of the three SSBs whose signal quality is greater than X, to obtain the cell quality of the cell.

It should be noted that, the foregoing shows an implementation in which the network device configures a same cell quality calculation parameter for each cell in the first measurement resource set. During actual application, the network device may configure different cell quality calculation parameters for different cells in the first measurement resource set, and the terminal device calculates the cell quality by using the different cell quality calculation parameters. This is not specifically limited in this application.

Optionally, N reference signals of each cell in the first measurement resource set are in one-to-one correspondence with the N weights in descending or ascending order of signal quality of the N reference signals. The signal quality of the N reference signals and the N weights are used to determine the cell quality of each cell, where N is an integer greater than or equal to 1.

For example, the terminal device measures the target measurement resource in the first measurement resource set, to obtain the signal quality of each target measurement resource. Each target measurement resource is corresponding to one reference signal. For each cell in the first measurement resource set, the first measurement resource set includes N target measurement resources of the cell. The N target measurement resources of the cell are corresponding to N reference signals of the cell. The N weights include {weight a, weight b, ..., weight n}, and the N reference signals are in one-to-one correspondence with the N weights in descending or ascending order of signal quality of the N reference signals. For example, in the N reference signals, a weight a is used for a reference signal with highest signal quality, a weight b is used for a reference signal with second highest signal quality, and by analogy, a weight n is used for a reference signal with lowest signal quality. Therefore, for the cell, cell quality P may be represented as:

$$P = \frac{a \cdot RS_1 + b \cdot RS_2 + \cdots + n \cdot RS_N}{s}$$

where $a + b + \cdots + n = s$. $RS_1$ is signal quality of the reference signal with the highest signal quality in the N reference signals, $RS_2$ is signal quality of the reference signal with the second highest signal quality in the N reference signals, and by analogy, $RS_N$ is signal quality of the reference signal with the lowest signal quality in the N reference signals.

It should be noted that the foregoing describes the technical solutions of this application by using the implementations, as examples, in which the N reference signals of each cell are in one-to-one correspondence with the N weights in descending or ascending order of the signal quality of the N reference signals. During actual application, the N reference signals may alternatively be in one-to-one correspondence with the N weights in another order. This is not specifically limited in this application.

Optionally, the second configuration information further includes a first L1 filtering coefficient, and the first L1 filtering coefficient is used to calculate the signal quality of the N reference signals of each cell. For example, for each cell in the first measurement resource set, the first measurement resource set includes N target measurement resources of the cell. The N target measurement resources of the cell are corresponding to the N reference signals of the cell. The N reference signals are corresponding to N beams. The first L1 filtering coefficient includes an average count Q. The average count Q indicates that reference signals that are recently received by the terminal device on one of the N beams for Q times are averaged to obtain signal quality of the beam. The terminal device determines signal quality of each of the N beams based on the average count Q. The terminal device averages the signal quality of the N beams to obtain cell quality of the cell. For a specific process in which the terminal device determines the cell quality, refer to the related descriptions of the foregoing process in which the terminal device determines the cell quality with reference to the cell quality calculation parameter or the N weights.

It should be noted that, the foregoing shows an implementation in which the network device configures N same weights for each cell in the first measurement resource set. During actual application, the network device may configure N different weights for different cells in the first measurement resource set, and the terminal device calculates the cell quality by using the N different weights. This is not specifically limited in this application.

In this implementation, optionally, the second configuration information further includes a valid duration threshold. The valid duration threshold indicates valid duration of a measurement result obtained by the terminal device through beam measurement. For example, the valid duration of the measurement result is Z milliseconds or Y slots. A measurement result exceeding the valid duration is not used to calculate the cell quality.

In this implementation, the network device configures, by using the second configuration information, the terminal device to enable the L1 cell quality measurement. This helps improve accuracy of the L1 measurement result obtained by the terminal device, so that the network device accurately performs inter-cell mobility decision for the terminal device based on the L1 measurement result.

In another possible implementation, if the second configuration information indicates to enable the L1 filtering, the second configuration information includes a second L1 filtering coefficient. The second L1 filtering system is used by the terminal device to perform the L1 filtering on the signal quality corresponding to the target measurement resource of each cell in the first measurement resource. For a process in which the terminal device determines, based on the second L1 filtering coefficient, the signal quality corresponding to the target measurement resource of each cell, refer to the foregoing related descriptions of determining, by the terminal device, the signal quality of each of the N beams based on the first L1 filtering coefficient.

In this implementation, optionally, the network device may indicate, through the second L1 filtering coefficient, to enable the L1 filtering.

In this implementation, the network device configures, by using the second configuration information, the terminal device to enable the L1 filtering. This helps improve accuracy of the L1 measurement result obtained by the terminal device, so that the network device accurately performs the inter-cell mobility decision for the terminal device based on the L1 measurement result.

Optionally, the second configuration information is further used to configure a reporting quantity type of the terminal device. For example, the second configuration information includes the reporting quantity type. For example, the reporting quantity type may be RSRP, a SINR, or RSRQ.

Optionally, the embodiment shown in FIG. 4A further includes step 403. Step 403 may be performed after step 402.

403: The terminal device sends the first measurement result to the network device based on a first reporting format. Correspondingly, the network device receives the first measurement result from the terminal device.

The first reporting format may be preconfigured, or may be indicated by the network device to the terminal device, or may be specified in a communication protocol. This is not specifically limited in this application.

Optionally, the first measurement resource set further includes the serving cell, the global identifier of the target measurement resource of the serving cell, and the local identifier of the target measurement resource of the serving cell.

Optionally, the first measurement result includes cell quality of a cell selected by the terminal device for reporting, and/or signal quality of a target measurement resource selected by the terminal device for reporting.

For example, the first measurement result includes cell quality of the serving cell and cell quality corresponding to a neighbor cell selected by the terminal device.

For example, the first measurement result includes signal quality of one or more target measurement resources with better or best signal quality in the target measurement resource of the serving cell, and signal quality of one or more target measurement resources of the neighbor cell selected by the terminal device.

For example, the first measurement result includes the cell quality of the serving cell, the cell quality of the neighbor cell selected by the terminal device, and signal quality of one or more target measurement resources corresponding to each of the serving cell and the neighbor cell.

The following describes some possible implementations of the first reporting format with reference to content included in the first measurement result.

It is assumed that the first measurement resource set further includes the serving cell, the global identifier of the target measurement resource of the serving cell, and the local identifier of the target measurement resource of the serving cell.

1. The first measurement result includes the cell quality of the serving cell and cell quality of a neighbor cell with best cell quality in the at least one neighbor cell. For example, as shown in Table 1, the at least one neighbor cell includes the neighbor cell 1 and the neighbor cell 2. RSRP of the neighbor cell 1 is greater than RSRP of the neighbor cell 2. The first measurement result includes content shown in Table 1.

Optionally, the neighbor cell with the best cell quality in the at least one neighbor cell is a cell whose cell quality exceeds a specific threshold in the at least one neighbor cell. For example, as shown in Table 1, the neighbor cell 1 may be a neighbor cell that is in the at least one neighbor cell and whose cell quality exceeds the specific threshold.

Table 1

| Identifier of the serving cell | RSRP 1 |
|---|---|
| Identifier of the neighbor cell 1 | RSRP 2 |

The identifier of the serving cell may be the local identifier or the cell identity of the serving cell, and the identifier of the neighbor cell 1 may be the local identifier or the cell identity of the neighbor cell 1. For the local identifier and the cell identity of the serving cell, refer to the foregoing related descriptions. For the local identifier and the cell identity of the neighbor cell 1, refer to the foregoing related descriptions.

It should be noted that, optionally, as shown in Table 1, the first measurement result may include the cell quality corresponding to each of the serving cell and the neighbor cell 1 that are selected by the terminal device. Optionally, the neighbor cell 1 is a neighbor cell with better cell quality in the at least one neighbor cell, and is not necessarily the neighbor cell with the best cell quality.

2. The first measurement result includes cell quality of M cells with best cell quality in the serving cell and the at least one neighbor cell, and M is greater than or equal to 1 and less than or equal to a total quantity of the serving cell and the at least one neighbor cell.

For example, the at least one neighbor cell includes the neighbor cell 1, the neighbor cell 2, and the neighbor cell 3. Two cells with best signal quality in the serving cell and the at least one neighbor cell are the neighbor cell 1 and the neighbor cell 2 respectively. Therefore, the first measurement result includes content shown in Table 2.

Table 2

| Identifier of the neighbor cell 1 | RSRP 1 |
|---|---|
| Identifier of the neighbor cell 2 | RSRP 2 |

The identifier of the neighbor cell 1 may be the local identifier or the cell identity of the neighbor cell 1, and the identifier of the neighbor cell 2 may be the local identifier or the cell identity of the neighbor cell 2. For the local identifier or the cell identity of the neighbor cell 1, and the local identifier or the cell identity of the neighbor cell 2, refer to the foregoing related descriptions.

Optionally, the cell quality of the M cells exceeds a specific threshold. As shown in Table 2, the neighbor cell 1 and the neighbor cell 2 may be cells whose cell quality exceeds the specific threshold in the at least one neighbor cell.

3. The first measurement result includes the cell quality of the serving cell, the local identifier of the target measurement resource of the serving cell, signal quality corresponding to a target measurement resource with best signal quality in the target measurement resource of the serving cell, cell quality of a neighbor cell with best cell quality in the at least one neighbor cell, a local identifier of a target measurement resource with best signal quality in a target measurement resource of the neighbor cell with the best cell quality, and the signal quality of the target measurement resource with the best signal quality in the target measurement resource of the neighbor cell with the best cell quality.

For example, the at least one neighbor cell includes the neighbor cell 1, the neighbor cell 2, and the neighbor cell 3. The cell quality of the serving cell is RSRP 1, the signal quality of the target measurement resource with the best signal quality in the target measurement resource of the serving cell is RSRP 2, and a corresponding local identifier is 10. The neighbor cell with the best signal quality in the at least one neighbor cell is the neighbor cell 1, and the cell quality of the neighbor cell 1 is RSRP 3. The signal quality of the target measurement resource with the best signal quality in the target measurement resource of the neighbor cell 1 is RSRP 4, and a corresponding local identifier is 11. Therefore, the first measurement result includes content shown in Table 3.

Table 3

| Identifier of the serving cell | RSRP 1 |
|---|---|
| Local identifier 10 of the target measurement resource with the best signal quality of the serving cell | RSRP 2 |

(continued)

| | |
|---|---|
| Identifier of the neighbor cell 1 | RSRP 3 |
| Local identifier 11 of the target measurement resource with the best signal quality of the neighbor cell 1 | RSRP 4 |

In this implementation, it may be specified by default in the communication protocol that the first measurement result includes a related measurement result of the serving cell, which is placed at the top of the table by default.

The identifier of the serving cell may be the local identifier or the cell identity of the serving cell, and the identifier of the neighbor cell 1 may be the local identifier or the cell identity of the neighbor cell 1. For the local identifier and the cell identity of the serving cell, refer to the foregoing related descriptions. For the local identifier and the cell identity of the neighbor cell 1, refer to the foregoing related descriptions.

It should be noted that, optionally, as shown in Table 3, the first measurement result includes the cell quality corresponding to each of the serving cell and the neighbor cell 1 that are selected by the terminal device, and signal quality of one target measurement resource corresponding to each of the serving cell and the neighbor cell 1. It should be noted that the neighbor cell 1 is a neighbor cell with better cell quality in the at least one neighbor cell, and is not necessarily the neighbor cell with the best cell quality. The target measurement resource that is of the neighbor cell 1 and whose local identifier is 11 may alternatively be a target measurement resource with better signal quality of the neighbor cell 1, and is not necessarily the target measurement resource with the best signal quality of the neighbor cell 1.

Optionally, the target measurement resource with the best signal quality in the target measurement resource of the serving cell may be a target measurement resource whose signal quality exceeds a specific threshold in the target measurement resource of the serving cell. The neighbor cell with the best cell quality in the at least one neighbor cell may be a cell whose cell quality exceeds a specific threshold in the at least one neighbor cell. The target measurement resource with the best signal quality in the target measurement resource of the neighbor cell with the best cell quality may be a target measurement resource whose signal quality exceeds the specific threshold and that is of the neighbor cell.

4. The first measurement result includes signal quality of a target measurement resource with best signal quality in a target measurement resource of each of M cells and a local identifier of the target measurement resource with the best signal quality. The M cells are M cells with best cell quality in the serving cell and the at least one neighbor cell.

For example, the at least one neighbor cell includes the neighbor cell 1, the neighbor cell 2, and the neighbor cell 3. Two cells with best signal quality in the serving cell and the at least one neighbor cell are the neighbor cell 1 and the neighbor cell 2 respectively. The signal quality of the target measurement resource with the best signal quality in the target measurement resource of the neighbor cell 1 is RSRP 1, and a corresponding local identifier is 1. The signal quality of the target measurement resource with the best signal quality in the target measurement resource of the neighbor cell 2 is RSRP 2, and a corresponding local identifier is 3. Therefore, the first measurement result includes content shown in Table 4.

Table 4

| | |
|---|---|
| Local identifier 1 of the target measurement resource with the best signal quality of the neighbor cell 1 | RSRP 1 |
| Local identifier 3 of the target measurement resource with the best signal quality of the neighbor cell 2 | RSRP 2 |

The foregoing provides examples of some possible first reporting formats with reference to the first measurement result. This application is still applicable to another first reporting format. Specifically, the foregoing examples do not constitute a limitation on this application.

Optionally, a target measurement resource with best signal quality in the target measurement resource of each cell may be a target measurement resource that is of the cell and whose signal quality exceeds a specific threshold.

It should be noted that, optionally, as shown in Table 4, the first measurement result includes signal quality of one target measurement resource corresponding to each of the neighbor cell 1 and the neighbor cell 2 that are selected by the terminal device. It should be noted that the target measurement resource that is of the neighbor cell 1 and whose local identifier is 1 may alternatively be a target measurement resource with better signal quality of the neighbor cell 1, and is not necessarily the target measurement resource with the best signal quality of the neighbor cell 1. The target measurement resource that is of the neighbor cell 2 and whose local identifier is 3 may alternatively be a target measurement resource with better signal quality of the neighbor cell 2, and is not necessarily the target measurement resource with the best signal quality of the neighbor cell 2.

It can be learned from the foregoing embodiment that, after the network device obtains the first measurement result, the network device may accurately perform the inter-cell mobility decision for the terminal device based on the first measurement result. To be specific, the network device may select a proper cell for the terminal device based on the first measurement result, so that the terminal device is handed over to the cell, to improve communication performance and communication quality.

5. The first measurement result includes signal quality of F target measurement resources with best signal quality in a target measurement resource of each cell in the serving cell and the at least one neighbor cell and a local identifier of the F target measurement resources with the best signal quality. F is an integer greater than or equal to 1.

For example, the at least one neighbor cell includes the neighbor cell 1. The signal quality of the target measurement resource with the best signal quality in the target measurement resource of the serving cell is RSRP 1, and a corresponding local identifier is 1. The signal of the target measurement resource with second best signal quality in the target measurement resource of the serving cell is RSRP 2, and a corresponding local identifier is 2. The signal quality of the target measurement resource with the best signal quality in the target measurement resource of the neighbor cell 1 is RSRP 3, and a corresponding local identifier is 5. The signal quality of the target measurement resource with second best signal quality in the target measurement resource of the neighbor cell 1 is RSRP 4, and a corresponding local identifier is 6. Therefore, the first measurement result includes content shown in Table 5.

Table 5

| Local identifier 1 of the target measurement resource with the best signal quality of the serving cell | RSRP 1 |
| --- | --- |
| Local identifier 2 of the target measurement resource with the second best signal quality of the serving cell | RSRP 2 |
| Local identifier 5 of the target measurement resource with the best signal quality of the neighbor cell 1 | RSRP 3 |
| Local identifier 6 of the target measurement resource with the second best signal quality of the neighbor cell 1 | RSRP 4 |

It can be learned that, to support the network device in making a better cell decision, the first measurement result provides signal quality of some target measurement resources of the serving cell and signal quality of some target measurement resources of the neighbor cell. Currently, the terminal device reports signal quality of four measurement resources (or beams) with best signal quality of the serving cell. Even if a reference signal of a neighbor cell of the terminal device has good signal quality for the terminal device, the network device cannot learn of the signal quality either. Therefore, even if a target measurement resource of the neighbor cell is not N target measurement resources with best signal quality, the network device needs to learn of a measurement result of the neighbor cell for cell handover. Therefore, this application provides a reporting format of the first measurement result. The target measurement resources in the first measurement resource set may be divided into several groups, and each group of target measurement resources is corresponding to one cell. In addition, the terminal device needs to report F target measurement resources (or beams) with best signal quality in each group of target measurement resources. For the reporting format of the first measurement result, refer to the example in Table 5.

Optionally, the F target measurement resources with the best signal quality in the target measurement resource of each cell may be a target measurement resource that is of the cell and whose signal quality exceeds a specific threshold.

It should be noted that, optionally, as shown in Table 5, the first measurement result includes signal quality of two target measurement resources corresponding to each of the serving cell and the neighbor cell 1 that are selected by the terminal device. It should be noted that the target measurement resource that is of the serving cell and whose local identifier is 2 may alternatively be a target measurement resource with better signal quality of the serving cell, and is not necessarily the target measurement resource with the second best signal quality of the serving cell. The two target measurement resources of the neighbor cell 1 shown in Table 5 may alternatively be two target measurement resources with better signal quality of the neighbor cell 1, and are not necessarily the two target measurement resources with the best signal quality and the second best signal quality of the neighbor cell 1.

It should be noted that the target measurement resources in the first measurement resource set may alternatively be divided into several groups in another manner. This is not specifically limited in this application. For example, target measurement resources of several cells are grouped into one group of target measurement resources. Alternatively, target measurement resources of a cell at a frequency or a frequency band are grouped into one group of target measurement resources. The terminal device may report signal quality of F target measurement resources with best signal quality in each group of target measurement resources.

6. The first measurement result includes signal quality of F target measurement resources with best signal quality in a target measurement resource of each of the M cells and a local identifier of the F target measurement resources with the best signal quality. The M cells are M cells with best cell quality in the serving cell and the at least one neighbor cell. F is an integer greater than or equal to 1.

For example, the at least one neighbor cell includes the neighbor cell 1, the neighbor cell 2, and the neighbor cell 3. Two cells with best signal quality in the serving cell and the at least one neighbor cell are the neighbor cell 1 and the neighbor cell 2 respectively. The signal quality of the target measurement resource with the best signal quality in the target measurement resource of the neighbor cell 1 is RSRP 1, and a corresponding local identifier is 1. The signal of the target measurement resource with second best signal quality in the target measurement resource of the neighbor cell 1 is RSRP 2, and a corresponding local identifier is 2. The signal quality of the target measurement resource with the best signal quality in the target measurement resource of the neighbor cell 2 is RSRP 3, and a corresponding local identifier is 4. The signal quality of the target measurement resource with second best signal quality in the target measurement resource of the neighbor cell 2 is RSRP 4, and a corresponding local identifier is 6. Therefore, the first measurement result includes content shown in Table 6.

Table 6

| Local identifier 1 of the target measurement resource with the best signal quality of the neighbor cell 1 | RSRP 1 |
|---|---|
| Local identifier 2 of the target measurement resource with the second best signal quality of the neighbor cell 1 | RSRP 2 |
| Local identifier 4 of the target measurement resource with the best signal quality of the neighbor cell 2 | RSRP 3 |
| Local identifier 6 of the target measurement resource with the second best signal quality of the neighbor cell 2 | RSRP 4 |

Optionally, the F target measurement resources with the best signal quality in the target measurement resource of each cell may be a target measurement resource that is of the cell and whose signal quality exceeds a specific threshold.

It should be noted that, optionally, as shown in Table 6, the first measurement result includes signal quality of two target measurement resources corresponding to each of the neighbor cells that are selected by the terminal device. It should be noted that the neighbor cell 1 and the neighbor cell 2 are not necessarily two neighbor cells with the best cell quality in the at least one neighbor cell and the serving cell. For example, the neighbor cell 1 and the neighbor cell 2 are two neighbor cells with better cell quality in the at least one neighbor cell and the serving cell. The two target measurement resources of the neighbor cell 1 shown in Table 6 may alternatively be two target measurement resources with better signal quality of the neighbor cell 1, and are not necessarily the two target measurement resources with the best signal quality and the second best signal of the neighbor cell 1. The two target measurement resources of the neighbor cell 2 shown in Table 6 may alternatively be two target measurement resources with better signal quality of the neighbor cell 2, and are not necessarily the two target measurement resources with the best signal quality and the second best signal quality of the neighbor cell 2.

7. The first measurement result includes signal quality of R1 target measurement resources with best signal quality in the target measurement resource of the serving cell, a local identifier of the R1 target measurement resources, signal quality of a target measurement resource with best signal quality in each of the at least one neighbor cell, and a corresponding local identifier. R1 is an integer greater than or equal to 1.

For example, the at least one neighbor cell includes the neighbor cell 1 and the neighbor cell 2. In the target measurement resource of the serving cell, signal quality of two target measurement resources with best signals is RSRP 1 and RSRP 2, and corresponding local identifiers are 1 and 3 respectively. The signal quality of the target measurement resource with the best signal quality in the target measurement resource of the neighbor cell 1 is RSRP 3, and a corresponding local identifier is 5. The signal quality of the target measurement resource with the best signal quality in the target measurement resource of the neighbor cell 2 is RSRP 4, and a corresponding local identifier is 8. Therefore, the first measurement result includes content shown in Table 7.

Table 7

| Local identifier 1 of the target measurement resource with the best signal quality of the serving cell | RSRP 1 |
|---|---|
| Local identifier 2 of the target measurement resource with the second best signal quality of the serving cell | RSRP 2 |
| Local identifier 5 of the target measurement resource with the best signal quality of the neighbor cell 1 | RSRP 3 |
| Local identifier 8 of the target measurement resource with the best signal quality of the neighbor cell 2 | RSRP 4 |

Optionally, the R1 target measurement resource with the best signal quality in the target measurement resource of the serving cell may be a target measurement resource that is of the serving cell and whose signal quality exceeds a specific threshold. The target measurement resource with the best signal quality in each neighbor cell is a target measurement resource that is of the neighbor cell and whose signal quality exceeds the specific threshold.

It should be noted that, optionally, as shown in Table 7, the first measurement result includes the signal quality of the target measurement resource corresponding to each of the serving cell and the neighbor cell that are selected by the terminal device. It should be noted that, the target measurement resource with the second best signal quality of the serving cell, shown in Table 7, may alternatively be a target measurement resource with better signal quality of the serving cell, and is not necessarily the target measurement resource with the second best signal quality of the serving cell. The target measurement resource of the neighbor cell 1 shown in Table 7 may alternatively be a target measurement resource with better signal quality of the neighbor cell 1, and is not necessarily the target measurement resource with the best signal quality of the neighbor cell 1. The target measurement resource of the neighbor cell 2 shown in Table 7 may alternatively be a target measurement resource with better signal quality of the neighbor cell 2, and is not necessarily the target measurement resource with the best signal quality of the neighbor cell 2.

It should be noted that the terminal device may separately report or simultaneously report the cell quality and the signal quality of the target measurement resource in the first measurement result. For example, the terminal device may report Table 1 or Table 2 through one piece of signaling, and report Table 4, Table 5, Table 6, or Table 7 through another piece of signaling. When resources are insufficient, the terminal device may preferentially report the cell quality, but does not report the signal quality of the target measurement resource.

In this embodiment of this application, the terminal device receives the first configuration information from the network device. The first configuration information is used to configure the first measurement resource set. The first measurement resource set includes the identifier of the at least one neighbor cell of the terminal device, the global identifier of the target measurement resource of the at least one neighbor cell, and the local identifier of the target measurement resource of the at least one neighbor cell. Then, the terminal device measures the target measurement resource in the first measurement resource set, to obtain the first measurement result. It can be learned that the terminal device can receive the first measurement resource set configured by the network device, and measure the target measurement resource in the first measurement resource set. In this way, the terminal device measures the target measurement resource of the at least one neighbor cell. The network device may explicitly configure the measurement resource for the at least one neighbor cell of the terminal device. A frequency used by the at least one neighbor cell may be different from or the same as a frequency of the serving cell of the terminal device, so that the terminal device obtains signal quality of more cells. In this way, the network device can accurately perform the cell mobility decision based on the measurement results of the terminal device. The network device hands over the terminal device to the proper cell, to improve the communication performance.

This application further provides another embodiment. The following provides descriptions with reference to the embodiment shown in FIG. 4B. FIG. 4B is a diagram of an embodiment of an activation method according to an embodiment of this application. The method includes the following steps.

4001: A network device sends first indication information to a terminal device. Correspondingly, the terminal device receives the first indication information from the network device.

The first indication information indicates to activate at least one first measurement resource set, or the first indication information is used to activate at least one second measurement resource set, or the first indication information is used to activate the at least one first measurement resource set and the at least one second measurement resource set.

Each first measurement resource set includes at least one of the following: an identifier of at least one candidate cell of the terminal device, a global identifier of a target measurement resource of the at least one candidate cell, or a local identifier of the target measurement resource of the at least one candidate cell. For more descriptions of the first measurement resource set, refer to the related descriptions in the embodiment shown in FIG. 4A.

Each second measurement resource set includes one or more measurement resources of a serving cell of the terminal device. The second measurement resource set does not include a measurement resource of another candidate cell.

Optionally, the first indication information is carried in a MAC CE.

Optionally, the embodiment shown in FIG. 4B further includes step 4001a.

4001a: The network device sends at least one piece of first reporting configuration information to the terminal device. The at least one piece of first reporting configuration information is used to configure a reporting format and a reporting type of a measurement result obtained by measuring a target measurement resource in the at least one first measurement resource set activated by using the first indication information. Correspondingly, the terminal device receives the at least one piece of first reporting configuration information from the network device.

The reporting type is any one of aperiodic reporting, semi-persistent reporting, and periodic reporting.

For a reporting format of one first measurement resource set, refer to the some possible reporting formats shown in the first measurement result in step 403 in the embodiment shown in FIG. 4A. Details are not described herein again.

In other words, the reporting format may be configured with at least one of the following: whether the measurement result reported by the terminal device needs to include a measurement result of the serving cell, a quantity of cells that needs to be included in the measurement result reported by the terminal device, or a quantity of measurement results of target measurement resources included in each cell in the measurement result reported by the terminal device.

Optionally, each of the at least one piece of first reporting configuration information includes one reporting configuration identifier, and the reporting configuration identifier is corresponding to one reporting type. A reporting format and a reporting type configured by using each piece of reporting configuration information may be understood as a reporting configuration.

In a possible implementation, one piece of first reporting configuration information is corresponding to one first measurement resource set, and different first reporting configuration information is corresponding to different first measurement resource sets. Each piece of first reporting configuration information includes one reporting configuration identifier, and the reporting configuration identifier is corresponding to one reporting type.

Optionally, when a reporting type corresponding to one reporting configuration identifier in the at least one piece of first reporting configuration information is semi-persistent reporting, the reporting configuration identifier is mapped to or associated with one codepoint in the first indication information. In this implementation, the MAC CE includes an S0 field to an S3 field, and each field is one codepoint. A maximum of four reporting configuration identifiers whose reporting types are semi-persistent reporting can be configured in total. The reporting configuration identifier is mapped to one of the codepoints. For example, the reporting configuration identifier is mapped to the S0 field. When a value of the S0 field is 0, it indicates that a measurement result corresponding to a corresponding first measurement resource set is not reported. When a value of the S0 field is 1, it indicates that a measurement result corresponding to a corresponding first measurement resource set is reported.

Optionally, when reporting types corresponding to a plurality of reporting configuration identifiers in the at least one piece of first reporting configuration information are semi-persistent reporting, the plurality of reporting configuration identifiers are mapped to or associated with a plurality of codepoints in the first indication information in ascending order. The plurality of codepoints are sorted in ascending order. For example, reporting types corresponding to two reporting configuration identifiers in the at least one piece of first reporting configuration information are semi-persistent reporting. In this case, the two reporting configuration identifiers are specifically a reporting configuration identifier 1 and a reporting configuration identifier 2. In this implementation, the MAC CE includes an S0 field to an S3 field, and each field is one codepoint. A maximum of four reporting configuration identifiers whose reporting types are semi-persistent reporting can be configured in total. The reporting configuration identifier 1 is mapped to the S0 field. When a value of the S0 field is 0, it indicates that a measurement result corresponding to a first measurement resource set corresponding to the reporting configuration identifier 1 is not reported. When a value of the S0 field is 1, it indicates that a measurement result corresponding to a first measurement resource set corresponding to the reporting configuration identifier 1 is reported. The reporting configuration identifier 2 is mapped to the S2 field. When a value of the S2 field is 0, it indicates that a measurement result corresponding to a first measurement resource set corresponding to the reporting configuration identifier 2 is not reported. When a value of the S2 field is 1, it indicates that a measurement result corresponding to a first measurement resource set corresponding to the reporting configuration identifier 2 is reported.

It should be noted that there is no fixed execution sequence between step 4001a and step 4001. Step 4001 may be performed before step 4001a; step 4001a may be performed before step 4001; or step 4001 and step 4001a may be simultaneously performed based on a case.

Optionally, the embodiment shown in FIG. 4B further includes step 4001b.

4001b: The network device sends at least one piece of second configuration information to the terminal device. Correspondingly, the terminal device receives the at least one piece of second configuration information from the network device.

The at least one piece of second reporting configuration information is used to configure a reporting format and a reporting type of a measurement result obtained by measuring the at least one second measurement resource set. The reporting type is aperiodic reporting, semi-persistent reporting, or periodic reporting. One piece of second reporting configuration information is corresponding to one second measurement resource set, and different second reporting configuration information is corresponding to different second measurement resource sets. Each piece of second reporting configuration information includes one reporting configuration identifier, and the reporting configuration identifier is corresponding to one reporting type.

In a possible implementation, when a reporting type corresponding to one reporting configuration identifier in the at least one piece of first reporting configuration information and the at least one piece of second reporting configuration information is semi-persistent reporting, the reporting configuration identifier is mapped to or associated with one codepoint in the first indication information. In this implementation, the MAC CE is used to activate the at least one first measurement resource set and the at least one second measurement resource set. The MAC CE includes an S0 field to an S3 field, and each field is one codepoint. A maximum of four reporting configuration identifiers whose reporting types are semi-persistent reporting can be configured in total. The reporting configuration identifier is mapped to one of the codepoints. For example, the reporting configuration identifier is mapped to the S0 field. When a value of the S0 field is 0, it indicates that a measurement result corresponding to a measurement resource set corresponding to the reporting configuration identifier is not reported. When a value of the S0 field is 1, it indicates that a measurement result corresponding to a measurement resource set corresponding to the reporting configuration identifier is reported.

In another possible implementation, when reporting types corresponding to a plurality of reporting configuration identifiers in the at least one piece of first reporting configuration information and the at least one piece of second reporting configuration information are semi-persistent reporting, the plurality of reporting configuration identifiers are mapped to or associated with a plurality of codepoints in the first indication information in ascending order. The plurality of codepoints are sorted in ascending order. In this implementation, the MAC CE is used to activate the at least one first measurement resource set and the at least one second measurement resource set. The MAC CE includes an S0 field to an S3 field, and each field is one codepoint. A maximum of four reporting configuration identifiers whose reporting types are semi-persistent reporting can be configured in total. The plurality of reporting configuration identifiers include a reporting configuration identifier 1 to a reporting configuration identifier 4. The reporting configuration identifier 1 is mapped to the S0 field, the reporting configuration identifier 2 is mapped to the S1 field, the reporting configuration identifier 3 is mapped to the S3 field, and the reporting configuration identifier 4 is mapped to the S4 field. For example, when a value of one field is 0, it indicates that a measurement result corresponding to a measurement resource set corresponding to a corresponding reporting configuration identifier is not reported. When a value of one field is 1, it indicates that a measurement result corresponding to a measurement resource set corresponding to a corresponding reporting configuration identifier is reported.

In still another possible implementation, when reporting types corresponding to a plurality of reporting configuration identifiers in the at least one piece of first reporting configuration information are semi-persistent reporting, the plurality of reporting configuration identifiers are mapped to or associated with a plurality of first codepoints in the first indication information in ascending order. The plurality of first codepoints are sorted in ascending order. When reporting types corresponding to a plurality of reporting configuration identifiers in the at least one piece of second reporting configuration information are semi-persistent reporting, the plurality of reporting configuration identifiers are mapped to or associated with a plurality of second codepoints in the first indication information in ascending order. The plurality of second codepoints are sorted in ascending order. For example, the MAC CE is used to activate the at least one first measurement resource set and the at least one second measurement resource set. The MAC CE includes an S0 field to an S3 field (that is, the plurality of first codepoints) and an S4 field to an S7 field (that is, the plurality of second codepoints), and each field is one codepoint. For the first measurement resource set, a maximum of four reporting configuration identifiers whose reporting types are semi-persistent reporting can be configured in total (that is, all the four reporting configuration identifiers whose reporting types are semi-persistent reporting are corresponding to the first measurement resource set). For the second measurement resource set, a maximum of four reporting configuration identifiers whose reporting types are semi-persistent reporting can be configured in total (that is, all the four reporting configuration identifiers whose reporting types are semi-persistent reporting are corresponding to the second measurement resource set). The plurality of reporting configuration identifiers include a reporting configuration identifier 1 to a reporting configuration identifier 4. The reporting configuration identifier 1 is corresponding to a first measurement resource set 1, and the reporting configuration identifier 2 is corresponding to a second measurement resource set 2. The reporting configuration identifier 3 is corresponding to a second measurement resource set 1, and the reporting configuration identifier 4 is corresponding to the second measurement resource set 2. The reporting configuration identifier 1 is mapped to the S0 field, and the reporting configuration identifier 2 is mapped to the S1 field. The reporting configuration identifier 3 is corresponding to the S4 field, and the reporting configuration identifier 4 is corresponding to the S5 field. For example, when a value of one field is 0, it indicates that a measurement result corresponding to a measurement resource set corresponding to a corresponding reporting configuration identifier is not reported. When a value of one field is 1, it indicates that a measurement result corresponding to a measurement resource set corresponding to a corresponding reporting configuration identifier is reported.

In this application, the ascending order may alternatively be a descending order, another order, or an order obtained according to another rule. This is not specifically limited in this application.

It should be noted that the foregoing describes the mapping relationship between the reporting configuration identifier and the codepoint in the MAC CE in a manner of activating the at least one first measurement resource set and the at least one second measurement resource set by using the MAC CE. If the at least one first measurement resource set and the at least one second measurement resource set are activated by using different MAC CEs, a reporting configuration identifier that is in the at least one piece of first reporting configuration information and whose corresponding reporting type is semi-persistent reporting is corresponding to a codepoint in the MAC CE used to activate the at least one first measurement resource set. A reporting configuration identifier that is in the at least one piece of second reporting configuration information and whose corresponding reporting type is semi-persistent reporting is corresponding to a codepoint in the MAC CE used to activate the at least one second measurement resource set.

It should be noted that there is no fixed execution sequence between step 4001b and step 4001. Step 4001 may be performed before step 4001b; or step 4001b may be performed before step 4001; or step 4001 and step 4001b may be simultaneously performed based on a case. If the embodiment shown in FIG. 4B further includes step 4001b, there is no fixed execution sequence between step 4001a and step 4001b. Step 4001a may be performed before step 4001b; or step 4001b is performed before step 4001a; or step 4001a and step 4001b are simultaneously performed based on a case. This is not specifically limited in this application.

The following describes some possible implementations in which the MAC CE is used to activate a measurement resource set.

1. A value of 1 bit in the MAC CE indicates a type of the measurement resource set activated by using the MAC CE. The type of the measurement resource set includes a first measurement resource set or a second measurement resource set.

Optionally, the 1 bit in the MAC CE is one reserved (reserved, R) bit in the MAC CE.

For example, as shown in FIG. 4C, when a value of a $1^{st}$ R bit in Qct 1 of the MAC CE is 0, it indicates that the MAC CE is used to activate the at least one second measurement resource set. When a value of a $1^{st}$ R bit in Qct 1 of the MAC CE is 1, it indicates that the MAC CE is used to activate the at least one first measurement resource set.

2. Values of 4 bits in the MAC CE respectively indicate measurement resource sets corresponding to reporting configurations indicated by the S1 field to the S3 field in the MAC CE. The measurement resource sets corresponding to the reporting configurations indicated by the S1 field to the S3 field include the first measurement resource set and/or the second measurement resource set.

For the reporting configuration, refer to the related descriptions in step 4001a. Details are not described herein again. Optionally, the 4 bits in the MAC CE may be four R bits in the MAC CE. It should be noted that, in this implementation, the values of the 4 bits in the MAC CE respectively indicate the measurement resource sets corresponding to the reporting configurations indicated by the S1 field to the S3 field in the MAC CE. During actual application, a value of at least 1 bit in the MAC CE may indicate the measurement resource sets corresponding to the reporting configurations indicated by the S1 field to the S3 field in the MAC CE. This is not specifically limited in this application.

The reporting configurations indicated by the S1 field to the S3 field are used by the terminal device to report measurement results separately obtained by measuring the corresponding measurement resource sets. The measurement result may specifically include a reporting format and a reporting type. For the reporting format and the reporting type, refer to the related descriptions in step 4001a.

In this application, the network device may preconfigure a plurality of reporting configurations for the terminal device, and each reporting configuration is corresponding to one reporting configuration identifier. As shown in FIG. 4C, four R bits in Qct 2 in the MAC CE respectively indicate the measurement resource sets corresponding to the reporting configurations indicated by the S1 field to the S3 field. For example, if values of the four R bits in Qct 2 in the MAC CE are 1010, it indicates that the reporting configuration indicated by each of the S1 field and the S3 field is used by the terminal device to report the measurement result obtained by measuring the first measurement resource set, and the reporting configuration indicated by each of the S0 field and the S2 field is used by the terminal device to report the measurement result obtained by measuring the second measurement resource set.

3. The MAC CE includes one or more new bits. The one or more bits indicate a type of a measurement resource set activated by using the MAC CE, and the type of the measurement resource set includes the first measurement resource set or the second measurement resource set.

For example, 8 bits are newly added to the MAC CE, and one or more bits in the new 8 bits indicate the type of the measurement resource set activated by using the MAC CE. For example, when a value of one of the new 8 bits is 1, it indicates that the measurement resource set activated by using the MAC CE is the first measurement resource set. When a value of one of the new 8 bits is 0, it indicates that the measurement resource set activated by using the MAC CE is the second measurement resource set.

4. If the MAC CE is a first-type MAC CE, the MAC CE is used to activate the at least one first measurement resource set; or if the MAC CE is a second-type MAC CE, the MAC CE is used to activate the at least one second measurement resource set.

The first-type MAC CE may be referred to as an LTM SP CSI report on a physical uplink control channel (physical uplink control channel, PUCCH), or an activation/deactivation MAC CE. Optionally, the first-type MAC CE and the second-type MAC CE are carried on different logical channels.

In other words, in this embodiment, the network device indicates, through the reserved bit or the new bit in the MAC CE, the type of the measurement resource set activated by using the MAC CE. Alternatively, the network device indicates, by defining a new MAC CE, a type of a measurement resource set activated by using the MAC CE

Optionally, the embodiment shown in FIG. 4B further includes step 4001c.

4001c: The network device sends measurement resource set configuration information to the terminal device. Correspondingly, the terminal device receives the measurement resource set configuration information from the network device.

The measurement resource set configuration information is used to configure the at least one first measurement resource set. Optionally, the measurement resource set configuration information is used to configure the at least one second measurement resource set.

A manner of configuring the at least one first measurement resource set by using the measurement resource set configuration information is similar to the manner of configuring the first measurement resource set in the first configuration information in step 401 in the embodiment shown in FIG. 4A. For details, refer to the related descriptions of the manner of configuring the first measurement resource set in the first configuration information in step 401 in the embodiment shown in FIG. 4A.

Configuring the at least one second measurement resource set by using the measurement resource set configuration information is similar to a process of configuring a measurement resource of at least one neighbor cell (also referred to as at least one candidate cell) in the first configuration information in step 401 in the embodiment shown in FIG. 4A. For details, refer to the related descriptions of the process of configuring the measurement resource of the at least one neighbor cell (also referred to as the at least one candidate cell) in the first configuration information in step 401 in the embodiment shown in FIG. 4A. Details are not described herein again.

It should be noted that there is no fixed execution sequence between step 4001c and step 4001. Step 4001 may be performed before step 4001c; or step 4001c may be performed before step 4001; or step 4001 and step 4001c may be simultaneously performed based on a case. If the embodiment shown in FIG. 4B further includes step 4001a and step 4001b, there is no fixed execution sequence between step 4001c and steps 4001a and 4001b. Step 4001c may be performed before step 4001a and step 4001b; or step 4001c may be performed before step 4001a and step 4001b; or step 4001a to step 4001c are simultaneously performed based on a case.

Optionally, the embodiment shown in FIG. 4B further includes step 4002. Step 4002 may be performed after step 4001.

4002: The terminal device measures a target measurement resource in the at least one first measurement resource set activated by using the first indication information, to obtain at least one first measurement result.

The at least one first measurement result is in one-to-one correspondence with the at least one first measurement resource set.

If the first indication information is used to activate the at least one first measurement resource set, or the first indication information is used to activate the at least one first measurement resource set and the at least one second measurement resource set, step 4002 may be performed. Step 4002 is similar to step 402 in the embodiment shown in FIG. 4A. For details, refer to the related descriptions of step 402 in the embodiment shown in FIG. 4A above.

Optionally, the terminal device measures a measurement resource in the at least one second measurement resource set activated by using the first indication information, to obtain at least one second measurement result. The at least one second measurement resource set is in one-to-one correspondence with the at least one second measurement result. In this implementation, the first indication information is used to activate the at least one second measurement resource set, or the first indication information is used to activate the at least one first measurement resource set and the at least one second measurement resource set. Optionally, the embodiment shown in FIG. 4B further includes step 4003. Step 4003 may be performed after step 4002.

4003: The terminal device sends the at least one first measurement result to the network device based on the reporting format configured by using the reporting configuration information. Correspondingly, the network device receives the at least one first measurement result from the terminal device.

Step 4003 is similar to step 403 in the embodiment shown in FIG. 4A. For details, refer to the related descriptions of step 403 in the embodiment shown in FIG. 4A above.

FIG. 5A is a diagram of an embodiment of a measurement gap configuration method according to an embodiment of this application. Refer to FIG. 5A. The method includes the following steps.

501: A network device sends first information to a terminal device. The first information is used to configure at least one measurement gap for the terminal device. Correspondingly, the terminal device receives the first information from the network device.

In the at least one measurement gap, each measurement gap is corresponding to the one or more neighbor cells of the terminal device, or each measurement gap is corresponding to the one beam or one group of beams of the terminal device, or each measurement gap is corresponding to the one or more measurement resource sets, or each measurement gap is corresponding to the one or more measurement resources, or each measurement gap is corresponding to the one or more frequency bands. For the measurement resource set, refer to the related descriptions of the first measurement resource set in the embodiment shown in FIG. 4A.

Optionally, the at least one measurement gap is used by the terminal device to perform L1 measurement. The beam is a receive beam or the group of beams are receive beams.

In this implementation, the network device configures the measurement gap for the terminal device at a granularity of a neighbor cell, a beam, a measurement resource, a measurement resource set, or a frequency band, to configure an adaptive measurement gap for the terminal device. This helps improve accuracy of the L1 measurement of the terminal device.

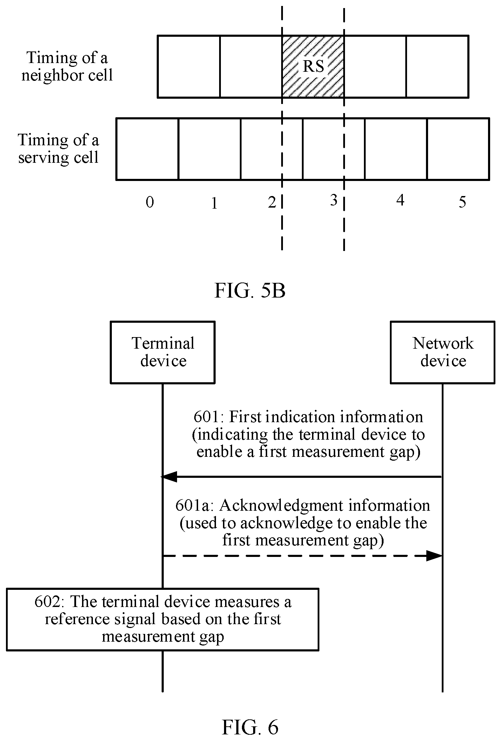

For example, as shown in FIG. 5B, because there is a deviation between downlink timing of a neighbor cell and downlink timing of a serving cell, a reference signal of the neighbor cell overlaps a time domain symbol 2 and a time domain symbol 3 of the serving cell. The network device may configure a measurement gap for the neighbor cell. If the neighbor cell and the serving cell are at a same frequency, a length of the measurement gap may be two time domain symbols. If the neighbor cell and the serving cell are at different frequencies, for the length of the measurement gap, in addition to performing time domain symbol-level protection on the reference signal, time needed by the terminal device to perform radio frequency link switching should be considered.

In a possible implementation, the first information includes an identifier of the at least one measurement gap. Each of the at least one measurement gap is usually corresponding to one identifier.

It should be noted that, optionally, the first information may be carried in L1 measurement configuration information.

Optionally, the embodiment shown in FIG. 5A further includes step 501a. Step 501a may be performed before step 501.

501a: The terminal device sends a first request to the network device. The first request is used to request the network device to configure the measurement gap for the terminal device. Correspondingly, the network device receives the first request from the terminal device.

In a possible implementation, the first request is carried in L3 measurement reporting signaling.

Specifically, the terminal device may perform L3 measurement on the serving cell and at least one neighbor cell of the terminal device, to obtain an L3 measurement result. A frequency used by the at least one neighbor cell may be the same as or may be different from a frequency used by the serving cell. This is not specifically limited in this application. The terminal device includes the L3 measurement result and the first request in L3 measurement result reporting signaling.

In another possible implementation, the first request is carried in scheduling signaling. For example, the first request is carried in UCI.

In still another possible implementation, the first request is carried in a MAC CE.

It should be noted that, optionally, the first request may also be referred to as a measurement gap request, or may have another name. This is not specifically limited in this application.

Optionally, the first request includes at least one of the following: a global identifier or a local identifier of a target measurement resource for which a measurement gap is requested to be configured, an identifier of a target measurement resource set for which the measurement gap is requested to be configured, an identifier of a neighbor cell, a reference signal identifier or a reference signal set identifier, duration of the measurement gap requested to be configured, a quantization unit of the measurement gap, adjustment duration needed by the terminal device to adjust an operating frequency or operating bandwidth of a radio frequency link, a first quantity of time domain symbols, or a second quantity of time domain symbols.

The first quantity of time domain symbols is a quantity of time domain symbols that are before a start time domain symbol occupied by the terminal device to request a reference signal and that are consecutive to the start time domain symbol, and the second quantity of time domain symbols is a quantity of time domain symbols that are after an end time domain symbol occupied by the terminal device to request the reference signal and that are consecutive to the end time domain symbol.

Optionally, the duration of the measurement gap requested to be configured may be determined based on downlink receive timing of the terminal device and time needed by the terminal device to adjust the radio frequency link. It should be noted that, during actual application, the terminal device may alternatively report, through the first request, the downlink receive timing and the time needed by the terminal device to adjust the radio frequency link.

Optionally, the quantization unit of the measurement gap may be one or a combination of the following: a CP, a millisecond, a time domain symbol, or a slot. For example, the length of the measurement gap is X ms$\pm$Y time domain symbols. Optionally, the length of the measurement gap may be an integer or a decimal. This is not specifically limited in this application. For example, the length of the measurement gap is 2.6 milliseconds.

It should be noted that, optionally, the terminal device may request the first quantity of time domain symbols and the second quantity of time domain symbols from the network device based on the downlink receive timing of the terminal device and the adjustment duration needed by the terminal device to adjust the radio frequency link.

The following describes two possible implementations in which the terminal device sends the first request. This application is still applicable to another implementation. Specifically, the following implementations do not constitute a limitation on this application.

1. The terminal device sends the first request to the network device by using a preconfigured scheduling resource used to send the measurement gap request.

2. Before the terminal device sends the first request to the network device, the terminal device sends a scheduling request to the network device. The scheduling request is used to request an uplink shared channel resource for sending the first request. Then, the terminal device receives configuration information sent by the network device. The configuration information includes a configuration of the uplink shared channel resource. An end device sends the first request to the network device by using the uplink shared channel resource. Optionally, in this implementation, the first request is carried in the MAC CE.

It can be learned that the terminal device may request the network device to configure the measurement gap for the neighbor cell of the terminal device, to request a cell-level measurement gap. Alternatively, the terminal device may request the network device to configure the measurement gap for the reference signal or the reference signal set, so that the network device configures the measurement gap for the terminal device at a finer granularity. This helps improve the accuracy of the L1 measurement performed by the terminal device.

502: The terminal device measures a reference signal based on the at least one measurement gap.

For example, each of the at least one measurement gap is corresponding to at least one neighbor cell. The terminal device may measure, in the measurement gap, a reference signal sent by the at least one neighbor cell.

For example, each of the at least one measurement gap is corresponding to one beam or one group of beams. The terminal device may measure, in the measurement gap, a reference signal received on the beam or the group of beams.

For example, each of the at least one measurement gap is corresponding to one measurement resource set. The terminal device may measure, in the measurement gap, a reference signal carried on a measurement resource in the measurement resource set.

Optionally, the following describes specific implementations of step 502 in several possible scenarios.

Scenario 1: When one of the at least one measurement gap overlaps an uplink time domain symbol in a TDD configuration of the terminal device, the terminal device preferentially measures a reference signal in the measurement gap.

In this implementation, if the measurement gap overlaps the uplink time domain symbol in the TDD configuration, the measurement gap occupies the uplink time domain symbol. In other words, the terminal device preferentially measures the reference signal in the measurement gap, but does not perform uplink transmission on the uplink time domain symbol.

Scenario 2: When a cell-level signal of the terminal device occupies one of the at least one measurement gap, the terminal device preferentially performs transmission of the cell-level signal, and skips measuring a reference signal in the measurement gap.

Optionally, the cell-level signal includes an SSB, a downlink control channel corresponding to a control resource set 0, and a physical random access channel (physical random access channel, PRACH).

If the cell-level signal of the terminal device occupies one of the at least one measurement gap, the terminal device may preferentially receive and/or send the cell-level signal, but does not measure the reference signal in the measurement gap.

Scenario 3: When a sounding reference signal, access point-channel state information, an uplink control channel, and/or a hybrid retransmission signal that are/is of the terminal device occupy/occupies one of the at least one measurement gap, the terminal device preferentially performs transmission of the sounding reference signal, the access point-channel state information, the uplink control channel, and/or the hybrid retransmission signal.

Scenario 4: When the at least one measurement gap includes a first measurement gap and a second measurement gap, and the first measurement gap overlaps the second measurement gap, the terminal device preferentially measures a reference signal in a measurement gap with a higher priority in the first measurement gap and the second measurement gap.

When two measurement gaps in the at least one measurement gap overlap, the terminal device preferentially measures a reference signal in a measurement gap with a higher priority.

Optionally, the first measurement gap is corresponding to a first cell, and the second measurement gap is corresponding to a second cell.

In other words, when measurement gaps corresponding to a plurality of cells for which the terminal device needs to perform measurement overlap, the network device may further configure priorities of the measurement gaps corresponding to the plurality of cells. In this case, the terminal device may preferentially measure a reference signal in a measurement gap with a higher priority.

Optionally, the length of the at least one measurement gap is variable. To be specific, the network device may dynamically adjust the length of the at least one measurement gap.

Optionally, the embodiment shown in FIG. 5A further includes step 502a and step 502b. Step 502a and step 502b may be performed before step 502 or in an execution process of step 502.

502a: The network device sends first indication information to the terminal device. The first indication information indicates a target measurement gap and a length of the target measurement gap. Correspondingly, the terminal device receives the first indication information from the network device.

For example, when uplink sending timing of the terminal device is updated, the terminal device moves, or the terminal device performs beam switching, the length needed by the terminal device for the target measurement gap changes. The network device may update the length of the target measurement gap for the terminal device through the first indication information.

Specifically, the network device may decrease or increase the length of the target measurement gap. For a quantization unit of the length of the target measurement gap, refer to the related descriptions.

The following describes some possible implementations in which the first indication information indicates the target measurement gap.

1. The first indication information indicates an identifier of the target measurement gap. In this implementation, the network device may indicate the target measurement gap to the terminal device through the identifier of the target measurement gap.

2. The first indication information indicates an identifier of a beam, a measurement resource, a neighbor cell, or a measurement resource set corresponding to the target measurement gap. In this implementation, the network device may indirectly indicate the target measurement gap through the identifier of the beam, the measurement resource, the neighbor cell, or the measurement resource set corresponding to the target measurement resource.

502b: The terminal device adjusts the length of the target measurement gap based on the first indication information.

Based on step 502b, optionally, step 502 specifically includes: The terminal device measures a reference signal based on an adjusted target measurement gap.

Optionally, the embodiment shown in FIG. 5A further includes step 501b. Step 501b may be performed before step 501.

501b: The terminal device sends capability information to the network device. Correspondingly, the network device receives the capability information from the terminal device.

The capability information indicates one or more of the following: whether the terminal device supports configuration of an L1 measurement gap, whether the terminal device supports dynamic adjustment of the L1 measurement gap, whether the terminal device supports reporting of a request for the measurement gap, or a quantity of configurable L1 measurement gaps supported by the terminal device.

For example, the terminal device has two sets of independent radio frequency links. The terminal device may simultaneously receive, over the two sets of independent radio frequency links, reference signals of two cells that use different frequencies. Therefore, the terminal device does not need to configure the L1 measurement gap. The terminal device may indicate, through the capability information, that the terminal device does not support the configuration of the L1 measurement gap. In other words, the terminal device can simultaneously receive reference signals with different frequencies, and does not need to configure the L1 measurement gap. In this way, the network device is prevented from configuring an unnecessary measurement gap for the terminal device, to avoid an unnecessary throughput reduction.

For example, the terminal device is limited by hardware implementation, and the terminal device can set only a measurement gap with fixed duration. Therefore, the capability information indicates that the terminal device does not support dynamic adjustment of the L1 measurement gap.

For example, a chip processing capability of the terminal device is limited, and the terminal device supports configuration of a small quantity of L1 measurement gaps.

It should be noted that there is no fixed execution sequence between step 501b and steps 501a and 501. For example, step 501a and step 501 may be performed before step S01b; or step 501 may be performed before step 501a and step 501b; or step 501a, step 501b, and step 501 may be simultaneously performed based on a case. This is not specifically limited in this application.

The following describes two possible implementations in which the network device indicates whether to enable the at least one measurement gap.

The following describes an implementation 1 with reference to step 502c. Optionally, the embodiment shown in FIG. 5A further includes step 502c. Step 502c may be performed before step 502.

502c: The network device sends second indication information to the terminal device. The second indication information indicates whether to enable the measurement gap. Correspondingly, the terminal device receives the second indication information from the network device.

For example, when a value of the second indication information is "1", it indicates that the at least one measurement gap is enabled. When a value of the second indication information is "0", it indicates that the at least one measurement gap is not enabled.

Optionally, based on step 502c, step 502 specifically includes: The terminal device measures the reference signal based on the second indication information and the at least one measurement gap.

For example, the reference signal is carried on a measurement resource. If the second indication information indicates not to enable the measurement gap, there is no scheduling limitation on a time domain symbol occupied by the measurement resource, or there is a scheduling limitation on a frequency domain resource occupied by the measurement resource. In other words, the terminal device may receive scheduling information from the network device on the time domain symbol occupied by the measurement resource.

If the second indication information indicates to enable the measurement gap, the terminal device does not expect to receive scheduling information or a data signal from the network device on a time domain symbol occupied by the measurement resource; or the terminal device does not expect to receive scheduling information or a data signal from the network device on a time domain symbol occupied by the measurement gap; or the terminal device does not expect to receive scheduling information or a data signal from the network device on a time domain symbol occupied by the measurement resource and at least L time domain symbols in L time domain symbols before the time domain symbol occupied by the measurement resource and L time domain symbols after the time domain symbol. L is an integer greater than or equal to 0, and L is preconfigured by the network device for the terminal device or is specified in a communication protocol.

In this implementation, for the two cases indicated by the second indication information, there are some possible implementations of the scheduling limitation on the time domain symbol occupied by the measurement resource. In this way, the network device normally communicates with the terminal device, to avoid a case in which the network device schedules the terminal device on the time domain symbol occupied by the measurement resource, but the terminal device does not expect to receive the scheduling information or the data signal from the network device, resulting in that the network device fails to schedule the terminal device, resulting in a waste of scheduling resources.

The following describes an implementation 2 with reference to step 502d. Optionally, the embodiment shown in FIG. 5A further includes step 502d. Step 502d may be performed before step 502.

502d: The network device sends third indication information to the terminal device. The third indication information indicates whether to enable each of the at least one measurement gap. Correspondingly, the terminal device receives the third indication information from the network device.

In this implementation, the third indication information may indicate whether to enable each measurement gap, so that the network device properly enables a corresponding measurement gap based on an actual requirement.

Optionally, the third indication information indicates an identifier of a to-be-enabled measurement gap in the at least one measurement gap, or indicates an identifier of a beam, a measurement resource, a neighbor cell, a beam, or a measurement resource set corresponding to the to-be-enabled measurement gap in the at least one measurement gap.

Optionally, based on step 502d, step 502 specifically includes: The terminal device measures the reference signal based on the third indication information and the at least one measurement gap.

For example, the at least one measurement gap includes a measurement gap 1 and a measurement gap 2. If the third indication information indicates to enable the measurement gap 1 but not to enable the measurement gap 2, for a measurement resource corresponding to the measurement gap 1, the terminal device has a scheduling limitation on a time domain symbol occupied by the measurement resource. The terminal device may preferentially measure a reference signal in the measurement gap 1. For a measurement resource corresponding to the measurement gap 2, the terminal device has no scheduling limitation on a time domain symbol occupied by the measurement resource. If the network device schedules the terminal device on the measurement resource corresponding to the measurement gap 2, the terminal device may preferentially receive scheduling information of the network device, but does not measure a reference signal in the measurement gap 2.

In this embodiment of this application, the terminal device receives the first information from the network device. The first information is used to configure the at least one measurement gap for the terminal device. In the at least one measurement gap, each measurement gap is corresponding to at least one neighbor cell of the terminal device, or each measurement gap is corresponding to one beam or one group of beams of the terminal device, or each measurement gap is corresponding to one measurement gap set. Then, the terminal device measures the reference signal based on the at least one measurement gap. It can be learned that, the network device configures the measurement gap for the terminal device at the granularity of the neighbor cell, the beam, or the measurement resource set. This helps improve accuracy of measuring the reference signal by the terminal device. Further, this helps the network device configure a proper measurement gap for the terminal device, to avoid a problem that a throughput of the terminal device is reduced because a length of the measurement gap is excessively large, and also avoid a problem that the reference signal measured by the terminal device is inaccurate because the length of the measurement gap is excessively small.

FIG. 6 is a diagram of another embodiment of a measurement gap configuration method according to an embodiment of this application. Refer to FIG. 6. The method includes the following steps.

601: A network device sends first indication information to a terminal device. The first indication information indicates the terminal device to enable a first measurement gap. Correspondingly, the terminal device receives the first indication information from the network device.

In a possible implementation, the first measurement gap may be a measurement gap preconfigured by the network device for the terminal device. For a specific configuration manner, refer to the related descriptions of step 501 in the embodiment shown in FIG. 5A.

In another possible implementation, the network device configures the first measurement gap for the terminal device by using the first indication information.

In this implementation, optionally, the first indication information further includes at least one of the following: an identifier, a length, or a periodicity of the first measurement gap. The first indication information may be carried in a MAC CE.

In this implementation, the network device may alternatively configure the first measurement gap for the terminal device by using other configuration information. This is not specifically limited in this application.

602: The terminal device measures a reference signal based on the first measurement gap.

For example, the terminal device determines the length, the periodicity, and the like of the first measurement gap based on the first indication information. Then, the terminal device measures the reference signal in the first measurement gap.

Optionally, the embodiment shown in FIG. 6 further includes step 601a. Step 601a may be performed after step 601 and before step 602.

601a: The terminal device sends acknowledgment information (acknowledge character, ACK) to the network device. The acknowledgment information is used to acknowledge to enable the first measurement gap. Correspondingly, the network device receives the acknowledgment information from the terminal device.

If the terminal device acknowledges to enable the first measurement gap, the terminal device may feed back the acknowledgment information to the network device, so that a feedback is sent to the network device to acknowledge that the first measurement gap takes effect.

Optionally, the first measurement gap takes effect after first duration elapses from a first moment. The first moment is a sending moment at which the terminal device sends the acknowledgment information. This avoids that, when the network device cannot learn whether the terminal device accepts to enable the first measurement gap, the network device cannot schedule the terminal device in the measurement gap, resulting in a waste of resources.

Optionally, the first duration is one or more time domain symbols, or one or more slots, or one or more milliseconds. This is not specifically limited in this application.

In the embodiment shown in FIG. 6, the terminal device may receive the first indication information sent by the network device. Then, the terminal device measures reference information based on the first measurement gap. In this way, the network device flexibly enables the measurement gap. This helps improve accuracy of measuring the reference signal by the terminal device. Further, this helps the network device configure a proper measurement gap for the terminal device, to avoid a problem that a throughput of the terminal device is reduced because a length of the measurement gap is excessively large, and also avoid a problem that the reference signal measured by the terminal device is inaccurate because the length of the measurement gap is excessively small.

The foregoing method embodiments may be implemented separately or in combination. For terms and related technologies in embodiments, refer to each other. In other words, technical solutions that do not conflict with each other or that do not logically conflict with each other in different embodiments may be combined with each other. This is not specifically limited in this application. For example, the first information in step 501 in the embodiment shown in FIG. 5A may be carried in step 401 in the embodiment shown in FIG. 4A. In other words, the network device configures the at least one measurement gap for the terminal device in a process of configuring the first measurement resource set. In step 402 in the embodiment shown in FIG. 4A, the terminal device may measure the target measurement resource in the first measurement resource set based on the at least one measurement gap.

A communication apparatus provided in embodiments of this application is described below.

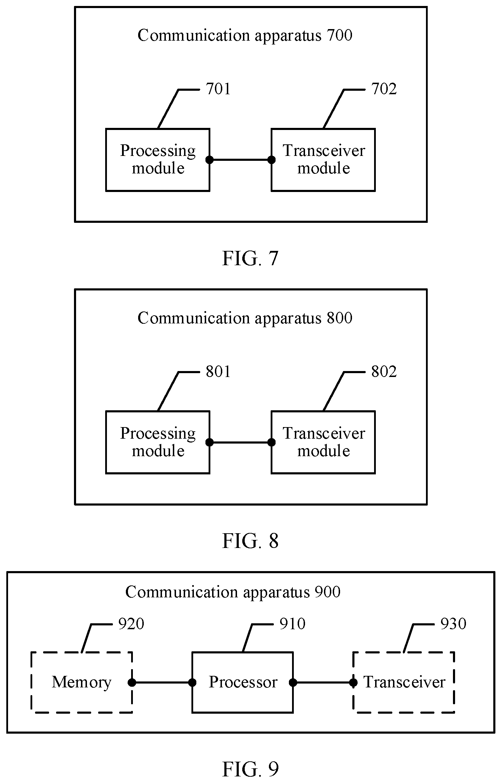

FIG. 7 is a diagram of a first structure of a communication apparatus according to an embodiment of this application. Refer to FIG. 7. The communication apparatus may be configured to perform a process performed by the terminal device in the embodiments shown in FIG. 4A, FIG. 4B, FIG. 5A, and FIG. 6. For details, refer to the related descriptions in the foregoing method embodiments.

The communication apparatus 700 includes a processing module 701 and a transceiver module 702. The transceiver module 702 may implement a corresponding communication function, and the processing module 701 is configured to perform data processing. The transceiver module 702 may also be referred to as a communication interface or a communication module.

Optionally, the communication apparatus 700 may further include a storage module. The storage module may be configured to store instructions and/or data. The processing module 701 may read the instructions and/or the data in the storage module, so that the communication apparatus implements the foregoing method embodiments.

The communication apparatus module 700 may be configured to perform an action performed by the terminal device in the embodiments shown in FIG. 4A, FIG. 4B, FIG. 5A, and FIG. 6. The communication apparatus 700 may be a terminal device or a component that may be disposed in the terminal device. The processing module 701 is configured to perform a processing-related operation on a terminal device side in the embodiments shown in FIG. 4A, FIG. 4B, FIG. 5A, and FIG. 6. Optionally, the transceiver module 702 is configured to perform a receiving-related operation on the terminal device side in the embodiments shown in FIG. 4A, FIG. 4B, FIG. 5A, and FIG. 6.

Optionally, the transceiver module 702 may include a sending module and a receiving module. The sending module is configured to perform a sending operation in the embodiments shown in FIG. 4A, FIG. 4B, FIG. 5A, and FIG. 6. The receiving module is configured to perform a receiving operation in the embodiments shown in FIG. 4A, FIG. 4B, FIG. 5A, and FIG. 6.

It needs to be noted that the communication apparatus 700 may include the sending module but does not include the receiving module. Alternatively, the communication apparatus 700 may include the receiving module but does not include the sending module. This may be specifically determined based on whether the foregoing solution performed by the communication apparatus 700 includes a sending action and a receiving action.

For example, the communication apparatus 700 is configured to perform the action performed by the terminal device in the embodiment shown in FIG. 4A. The following solution is specifically implemented.

The transceiver module 702 is configured to receive first configuration information from a network device. The first configuration information is used to configure a first measurement resource set. The first measurement resource set includes at least one of the following: an identifier of at least one neighbor cell of the communication apparatus 700, a global identifier of a target measurement resource of the at least one neighbor cell, and a local identifier of the target measurement resource of the at least one neighbor cell.

The processing module 701 is configured to measure a target measurement resource in the first measurement resource set, to obtain a first measurement result.

Optionally, the first configuration information further includes configuration information of a measurement resource of the at least one neighbor cell. The configuration information of the measurement resource of the at least one neighbor cell includes at least one of the following: the identifier of the at least one neighbor cell and configuration information of a reference signal of the at least one neighbor cell. The target measurement resource of the at least one neighbor cell belongs to the measurement resource of the at least one neighbor cell.

Optionally, when the reference signal is an SSB, the configuration information of the SSB of the at least one neighbor cell includes at least one of the following: a center frequency of the SSB, a subcarrier spacing of the SSB, an index of the SSB, a periodicity of the SSB, a system frame occupied by the SSB, an offset of the system frame occupied by the SSB, or a subframe offset of the SSB; or

when the reference signal is a CSI-RS, the configuration information of the CSI-RS of the at least one neighbor cell includes at least one of the following: an identifier of a CSI-RS resource occupied by the CSI-RS, frequency domain resource density of the CSI-RS, a subcarrier spacing, a center frequency, bandwidth, a position of a start RB, a scrambling sequence identifier, a periodicity, a slot offset, a power offset of the CSI-RS relative to an SSB, an index of an SSB associated with the CSI-RS, or an identifier of a cell to which the SSB associated with the CSI-RS belongs.

Optionally, the first configuration information is used to configure a plurality of measurement resource sets, and the first measurement resource set is one of the plurality of measurement resource sets. The transceiver module 702 is further configured to receive indication information from the network device. The indication information indicates the first measurement resource set.

Optionally, the first measurement resource set further includes an identifier of a serving cell of the communication apparatus 700, a global identifier of a target measurement resource of the serving cell, and a local identifier of the target measurement resource of the serving cell.

The processing module 701 is specifically configured to measure the target measurement resource of the at least one neighbor cell and the target measurement resource of the serving cell, to obtain the first measurement result.

Optionally, the transceiver module 702 is further configured to receive second configuration information from the network device. The second configuration information indicates whether to enable L1 cell quality measurement, and/or the second configuration information indicates whether to enable L1 filtering. The processing module 701 is specifically configured to measure the target measurement resource in the first measurement resource set based on the second configuration information, to obtain the first measurement result.

Optionally, if the second configuration information indicates to enable the L1 cell quality measurement, the second configuration information includes a cell quality calculation parameter, and the cell quality calculation parameter is used by the communication apparatus 700 to calculate cell quality of each cell based on a measurement result of a reference signal of the cell in the first measurement resource set; and/or

if the second configuration information indicates to enable the L1 cell quality measurement, the second configuration information includes N weights, N reference signals of each cell in the first measurement resource set are in one-to-one correspondence with the N weights in descending or ascending order of signal quality of the N reference signals, the signal quality of the N reference signals and the N weights are used to determine cell quality of the cell, and N is an integer greater than or equal to 1.

Optionally, the transceiver module 702 is further configured to send the first measurement result to the network device.

Optionally, the processing module 701 may be configured to perform the processing operations in the embodiments shown in FIG. 4A and FIG. 4B. The transceiver module 702 is further configured to perform the receiving and sending operations in the embodiments shown in FIG. 4A and FIG. 4B. For details, refer to the related descriptions in the embodiments shown in FIG. 4A and FIG. 4B.

In another possible implementation, the communication apparatus 700 is configured to perform the action performed by the terminal device in the embodiment shown in FIG. 5A. The following solution is specifically implemented.

The transceiver module 702 is configured to receive first information from a network device. The first information is used to configure at least one measurement gap for a first communication apparatus. In the at least one measurement gap, each measurement gap is corresponding to one or more neighbor cells of the communication apparatus 700, or each measurement gap is corresponding to one beam or one group of beams of the communication apparatus 700, or each measurement gap is corresponding to one or more measurement resource sets.

The processing module 701 is configured to measure a reference signal based on the at least one measurement gap.

Optionally, the transceiver module 702 is further configured to receive first indication information from the network device. The first indication information indicates a target measurement gap and duration of the target measurement gap. The target measurement gap belongs to the at least one measurement gap. The processing module 701 is specifically configured to adjust the duration of the target measurement gap based on the first indication information.

Optionally, the transceiver module 702 is further configured to receive second indication information from the network device. The second indication information indicates whether to enable the measurement gap. The processing module 701 is specifically configured to measure the reference signal based on the second indication information and the at least one measurement gap.

Optionally, the transceiver module 702 is further configured to receive third indication information from the network device. The third indication information indicates whether to enable each of the at least one measurement gap. The processing module 701 is specifically configured to measure the reference signal based on the third indication information and the at least one measurement gap.

Optionally, the processing module 701 is specifically configured to: when one of the at least one measurement gap overlaps an uplink time domain symbol in a TDD configuration of the communication apparatus 700, preferentially measure a reference signal in the measurement gap; or when a cell-level signal of the communication apparatus 700 occupies one of the at least one measurement gap, preferentially perform transmission of the cell-level signal, and skip measuring a reference signal in the measurement gap; or when a sounding reference signal, access point-channel state information, an uplink control channel, and/or a hybrid retransmission signal that are/is of the communication apparatus 700 occupy/occupies one of the at least one measurement gap, preferentially perform transmission of the sounding reference signal, the access point-channel state information, the uplink control channel, and/or the hybrid retransmission signal; or when the at least one measurement gap includes a first measurement gap and a second measurement gap, and the first measurement gap overlaps the second measurement gap, preferentially measure a reference signal in a measurement gap with a higher priority in the first measurement gap and the second measurement gap.

Optionally, the transceiver module 702 is further configured to send a first request to the network device. The first request is used to request the network device to configure the measurement gap for the communication apparatus 700.

Optionally, the transceiver module 702 is further configured to send capability information to the network device. The capability information indicates one or more of the following: whether the communication apparatus 700 supports configuration of an L1 measurement gap, or whether the communication apparatus 700 supports dynamic adjustment of the L1 measurement gap, or a quantity of configurable L1 measurement gaps supported by the communication apparatus 700, or whether the communication apparatus 700 supports reporting of a request for the measurement gap.

Optionally, the processing module 701 may be configured to perform the processing operation in the embodiment shown in FIG. 5A. The transceiver module 702 is further configured to perform the receiving and sending operations in the embodiment shown in FIG. 5A. For details, refer to the related descriptions in the embodiment shown in FIG. 5A.

In still another possible implementation, the communication apparatus 700 is configured to perform the action performed by the terminal device in the embodiment shown in FIG. 6.

The transceiver module 702 is configured to receive first indication information from a network device. The first indication information indicates to enable a first measurement gap. The processing module 701 is configured to measure a reference signal based on the first measurement gap.

Optionally, the processing module 701 may be configured to perform the processing operation in the embodiment shown in FIG. 6. The transceiver module 702 is further configured to perform the receiving and sending operations in the embodiment shown in FIG. 6. For details, refer to the related descriptions in the embodiment shown in FIG. 6.

It should be understood that specific processes in which the modules perform the foregoing corresponding steps have been described in detail in the foregoing method embodiments. For brevity, details are not described herein again.

The processing module 701 in the foregoing embodiment may be implemented by at least one processor or a processor-related circuit. The transceiver module 702 may be implemented by a transceiver or a transceiver-related circuit. The transceiver module 702 may also be referred to as a communication unit or a communication interface. The storage unit may be implemented by at least one memory.

FIG. 8 is a diagram of a structure of a communication apparatus according to an embodiment of this application. The communication apparatus 800 may be configured to perform a step performed by the network device in the embodiments shown in FIG. 4A, FIG. 4B, FIG. 5A, and FIG. 6. For details, refer to the related descriptions in the foregoing method embodiments.

The communication apparatus 800 includes a processing module 801 and a transceiver module 802. The transceiver module 802 may implement a corresponding communication function, and the processing module 801 is configured to perform data processing. The transceiver module 802 may also be referred to as a communication interface or a communication unit.

Optionally, the communication apparatus 800 may further include a storage unit. The storage unit may be configured to store instructions and/or data. The processing module 801 may read the instructions and/or the data in the storage unit, so that the communication apparatus implements the foregoing method embodiments.

The communication apparatus 800 may be configured to perform an action performed by the terminal device in the foregoing method embodiments. The communication apparatus 800 may be a terminal device or a component that may be disposed in the terminal device. The transceiver module 802 is configured to perform receiving-related operations on a terminal device side in the foregoing method embodiments, and the processing module 801 is configured to perform processing-related operations on the terminal device side in the foregoing method embodiments.

Optionally, the transceiver module 802 may include a sending module and a receiving module. The sending module is configured to perform a sending operation in the foregoing method embodiments. The receiving module is configured to perform a receiving operation in the foregoing method embodiments.

It needs to be noted that the communication apparatus 800 may include the sending module but does not include the receiving module. Alternatively, the communication apparatus 800 may include the receiving module but does not include the sending module. This may be specifically determined based on whether the foregoing solution performed by the communication apparatus 800 includes a sending action and a receiving action.

In an example, the communication apparatus 800 is configured to perform the action performed by the network device in the embodiments shown in FIG. 4A and FIG. 4B.

For example, the communication apparatus 800 is configured to perform the following solution.

The processing module 801 is configured to determine first configuration information. The first configuration information is used to configure a first measurement resource set. The first measurement resource set includes at least one of the following: an identifier of at least one neighbor cell of a terminal device, a global identifier of a target measurement resource of the at least one neighbor cell, and a local identifier of the target measurement resource of the at least one neighbor cell. The transceiver module 802 is configured to send the first configuration information to the terminal device.

Optionally, the first configuration information further includes configuration information of a measurement resource of the at least one neighbor cell. The configuration information of the measurement resource of the at least one neighbor cell includes at least one of the following: the identifier of the at least one neighbor cell and configuration information of a reference signal of the at least one neighbor cell. The target measurement resource of the at least one neighbor cell belongs to the measurement resource of the at least one neighbor cell.

Optionally, when the reference signal is an SSB, the configuration information of the SSB of the at least one neighbor cell includes at least one of the following: a center frequency of the SSB, a subcarrier spacing of the SSB, an index of the SSB, a periodicity of the SSB, a system frame occupied by the SSB, an offset of the system frame occupied by the SSB, or a subframe offset of the SSB; or

when the reference signal is a CSI-RS, the configuration information of the CSI-RS of the at least one neighbor cell includes at least one of the following: an identifier of a CSI-RS resource occupied by the CSI-RS, frequency domain resource density of the CSI-RS, a subcarrier spacing, a center frequency, bandwidth, a position of a start RB, a scrambling sequence identifier, a periodicity, a slot offset, a power offset of the CSI-RS relative to an SSB, an index of an SSB associated with the CSI-RS, or an identifier of a cell to which the SSB associated with the CSI-RS belongs.

Optionally, the first configuration information is used to configure a plurality of measurement resource sets, and the first measurement resource set is one of the plurality of measurement resource sets. The transceiver module 802 is further configured to send indication information to the terminal device. The indication information indicates the first measurement resource set.

Optionally, the transceiver module 802 is further configured to send second configuration information to the terminal device. The second configuration information indicates whether to enable L1 cell quality measurement, and/or the second configuration information indicates whether to enable L1 filtering.

Optionally, if the second configuration information indicates to enable the L1 cell quality measurement, the second configuration information includes a cell quality calculation parameter, and the cell quality calculation parameter is used by the terminal device to calculate cell quality of each cell based on a measurement result of a reference signal of the cell in the first measurement resource set; and/or if the second configuration information indicates to enable the L1 cell quality measurement, the second configuration information includes N weights. N reference signals of each cell in the first measurement resource set are in one-to-one correspondence with the N weights in descending or ascending order of signal quality of the N reference signals, the signal quality of the N reference signals and the N weights are used to determine cell quality of each cell, and N is an integer greater than or equal to 1.

Optionally, the transceiver module 802 is further configured to receive a first measurement result from the terminal device.

Optionally, the processing module 801 may be configured to perform the processing operations in the embodiments shown in FIG. 4A and FIG. 4B. The transceiver module 802 is further configured to perform the receiving and sending operations in the embodiments shown in FIG. 4A and FIG. 4B. For details, refer to the related descriptions in the embodiments shown in FIG. 4A and FIG. 4B.

In an example, the communication apparatus 800 is configured to perform the action performed by the network device in the embodiment shown in FIG. 5A. The following solution is specifically implemented.

The processing module 801 is configured to determine first information. The first information is used to configure at least one measurement gap for a terminal device. In the at least one measurement gap, each measurement gap is corresponding to one or more neighbor cells of the terminal device, or each measurement gap is corresponding to one beam or one group of beams of the terminal device, or each measurement gap is corresponding to one or more measurement resource sets.

The transceiver module 802 is configured to send the first information to the terminal device.

Optionally, the transceiver module 802 is further configured to send first indication information to the terminal device. The first indication information indicates a target measurement gap and duration of the target measurement gap, and the target measurement gap belongs to the at least one measurement gap.

Optionally, the transceiver module 802 is further configured to send second indication information to the terminal device. The second indication information indicates whether to enable the measurement gap.

Optionally, the transceiver module 802 is further configured to send third indication information to the terminal device. The third indication information indicates whether to enable each of the at least one measurement gap.

Optionally, the transceiver module 802 is further configured to receive a first request from the terminal device. The first request is used to request the communication apparatus 800 to configure the measurement gap for the terminal device.

Optionally, the transceiver module 802 is further configured to receive capability information from the terminal device. The capability information indicates one or more of the following: whether the terminal device supports configuration of an L1 measurement gap, or whether the terminal device supports dynamic adjustment of the L1 measurement gap, or a quantity of configurable L1 measurement gaps supported by the terminal device, or whether the terminal device supports reporting of a request for the measurement gap.

Optionally, the processing module 801 may be configured to perform the processing operation in the embodiment shown in FIG. 5A. The transceiver module 802 is further configured to perform the receiving and sending operations in the embodiment shown in FIG. 5A. For details, refer to the related descriptions in the embodiment shown in FIG. 5A.

In an example, the communication 800 is configured to perform the action performed by the network device in the embodiment shown in FIG. 6.

The processing module 801 is configured to determine first indication information. The first indication information indicates a terminal device to enable a first measurement gap.

The transceiver module 802 is configured to send the first indication information to the terminal device.

Optionally, the processing module 801 may be configured to perform the processing operation in the embodiment shown in FIG. 6. The transceiver module 802 is further configured to perform the receiving and sending operations in the embodiment shown in FIG. 6. For details, refer to the related descriptions in the embodiment shown in FIG. 6.

It should be understood that specific processes in which the modules perform the foregoing corresponding steps have been described in detail in the foregoing method embodiments. For brevity, details are not described herein again.

The processing module 801 in the foregoing embodiment may be implemented by at least one processor or a processor-related circuit. The transceiver module 802 may be implemented by a transceiver or a transceiver-related circuit. The transceiver module 802 may also be referred to as a communication unit or a communication interface. The storage unit may be implemented by at least one memory.

An embodiment of this application further provides a communication apparatus 900. The communication apparatus 900 includes a processor 910. The processor 910 is coupled to a memory 920. The memory 920 is configured to store a computer program or instructions and/or data. The processor 910 is configured to execute the computer program or the instructions and/or the data stored in the memory 920, so that the method in the foregoing method embodiments is performed.

Optionally, the communication apparatus 900 includes one or more processors 910.

Optionally, as shown in FIG. 9, the communication apparatus 90 may further include the memory 920.

Optionally, the communication apparatus 900 may include one or more memories 920.

Optionally, the memory 920 and the processor 910 may be integrated together or separately disposed.

Optionally, as shown in FIG. 9, the communication apparatus 900 may further include a transceiver 930. The transceiver 930 is configured to receive and/or send a signal. For example, the processor 910 is configured to control the transceiver 930 to receive and/or send a signal.

In a solution, the communication apparatus 900 is configured to implement an operation performed by the terminal device in the foregoing method embodiments.

For example, the processor 910 is configured to implement a processing-related operation performed by the terminal device in the foregoing method embodiments, and the transceiver 930 is configured to implement receiving-related and sending-related operations performed by the terminal device in the foregoing method embodiments.

In another solution, the communication apparatus 900 is configured to implement an operation performed by the network device in the foregoing method embodiments.

For example, the processor 910 is configured to implement a processing-related operation performed by the network device in the foregoing method embodiments, and the transceiver 930 is configured to implement receiving-related and sending-related operations performed by the network device in the foregoing method embodiments.

It should be noted that the transceiver 903 may include a sending function, but does not include a receiving function. Alternatively, the transceiver 903 may include a receiving function, but does not include a sending function. This may be specifically determined based on whether the foregoing solution performed by the communication apparatus 900 includes a sending action and a receiving action.

An embodiment of this application further provides a communication apparatus 1000. The communication apparatus 1000 may be a terminal device or a chip. The communication apparatus 1000 may be configured to perform an operation performed by the terminal device in the foregoing method embodiments.

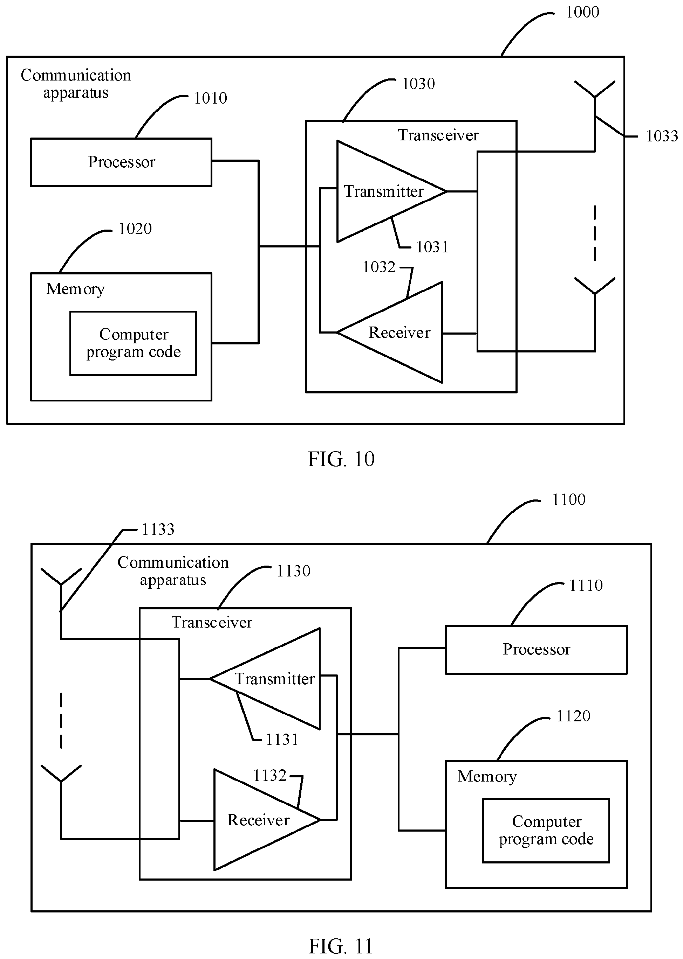

When the communication apparatus 1000 is a terminal device, FIG. 10 is a simplified diagram of a structure of the terminal device. As shown in FIG. 10, the terminal device includes a processor, a memory, and a transceiver. The memory may store computer program code. The transceiver includes a transmitter 1031, a receiver 1032, a radio frequency circuit (not shown in the figure), an antenna 1033, and an input/output apparatus (not shown in the figure).

The processor is mainly configured to: process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to: receive data entered by a user, and output data to the user. It should be noted that some types of terminal devices may have no input/output apparatus.

When data needs to be sent, after performing baseband processing on the to-be-sent data, the processor outputs a baseband signal to the radio frequency circuit. The radio frequency circuit performs radio frequency processing on the baseband signal, and sends a radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 10 shows merely one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna and the radio frequency circuit that have a transceiver function may be considered as a transceiver unit of the terminal device, and the processor that has a processing function may be considered as a processing unit of the terminal device.

As shown in FIG. 10, the terminal device includes a processor 1010, a memory 1020, and a transceiver 1030. The processor 1010 may also be referred to as a processing unit, a processing board, a processing module, a processing apparatus, or the like. The transceiver 1030 may also be referred to as a transceiver unit, a transceiver device, a transceiver apparatus, or the like.

Optionally, a component that is in the transceiver 1030 and that is configured to implement a receiving function may be considered as a receiving unit, and a component that is in the transceiver 1030 and that is configured to implement a sending function may be considered as a sending unit. In other words, the transceiver 1030 includes the receiver and the transmitter. The transceiver may also be sometimes referred to as a transceiver device, a transceiver unit, a transceiver circuit, or the like. The receiver sometimes may also be referred to as a receiver device, a receiving unit, a receiving circuit, or the like. The transmitter sometimes may also be referred to as a transmitting device, a transmitting unit, a transmitting circuit, or the like.

For example, in an implementation, the processor 1010 is configured to perform a processing action on a terminal device side in the embodiments shown in FIG. 4A and FIG. 4B, and the transceiver 1030 is configured to perform receiving and sending actions on the terminal device side in the embodiments shown in FIG. 4A and FIG. 4B. For example, the transceiver 1030 is configured to perform step 401 in the embodiments shown in FIG. 4A and FIG. 4B, and the processor 1010 is configured to perform step 402 in the embodiment shown in FIG. 4A. Optionally, the transceiver 1030 is further configured to perform step 401a, step 401b, and step 403 in the embodiment shown in FIG. 4.

For example, in an implementation, the processor 1010 is configured to perform a processing action on a terminal device side in the embodiment shown in FIG. 5A, and the transceiver 1030 is configured to perform receiving and sending actions on the terminal device side in the embodiment shown in FIG. 5A. For example, the transceiver 1030 is configured to perform step 501 in the embodiment shown in FIG. 5A, and the processor 1010 is configured to perform step 502 in the embodiment shown in FIG. 5A. Optionally, the transceiver 1030 is further configured to perform step 501a, step 501b, and step 502a in the embodiment shown in FIG. 5A, and the processor 1010 is configured to perform step 502b in the embodiment shown in FIG. 5A.

For example, in an implementation, the processor 1010 is configured to perform a processing action on a terminal device side in the embodiment shown in FIG. 6, and the transceiver 1030 is configured to perform receiving and sending actions on the terminal device side in the embodiment shown in FIG. 6. For example, the transceiver 1030 is configured to perform step 601 in the embodiment shown in FIG. 6, and the processor 1010 is configured to perform step 602 in the embodiment shown in FIG. 6. Optionally, the transceiver 1030 is further configured to perform step 601a in the embodiment shown in FIG. 6.

It should be understood that FIG. 10 is merely an example instead of a limitation. The terminal device including the transceiver unit and the processing unit may not depend on the structure shown in FIG. 10.

When the communication apparatus 1000 is the chip, the chip includes a processor, a memory, and a transceiver. The transceiver may be an input/output circuit or a communication interface. The processor may be a processing unit, a microprocessor, or an integrated circuit integrated on the chip. The sending operation of the terminal device in the foregoing method embodiments may be understood as an output of the chip, and the receiving operation of the terminal device in the foregoing method embodiments may be understood as an input of the chip.

An embodiment of this application further provides a communication apparatus 1100. The communication apparatus 1100 may be a network device or a chip. The communication apparatus 1100 may be configured to perform an operation performed by the network device in the foregoing method embodiments.

When the communication apparatus 1100 is the network device, for example, a base station, FIG. 11 is a simplified diagram of a structure of the base station. The base station includes a part 1110, a part 1120, and a part 1130. The part 1110 is mainly configured to: perform baseband processing, control the base station, and the like. The part 1110 is usually a control center of the base station, may be usually referred to as a processor, and is configured to control the base station to perform a processing operation on a network device side in the foregoing method embodiments. The part 1120 is mainly configured to store computer program code and data. The part 1130 is mainly configured to receive and send a radio frequency signal, and perform conversion between the radio frequency signal and a baseband signal. The part 1130 may be usually referred to as a transceiver unit, a transceiver device, a transceiver circuit, a transceiver, or the like. The transceiver unit in the part 1130 may also be referred to as a transceiver device, a transceiver, or the like, and includes an antenna 1133 and a radio frequency circuit (not shown in the figure). The radio frequency circuit is mainly configured to perform radio frequency processing. Optionally, in the part 1130, a component configured to implement a receiving function may be considered as a receiver, and a component configured to implement a sending function may be considered as a transmitter. In other words, the part 1130 includes a receiver 1132 and a transmitter 1131. The receiver may also be referred to as a receiving unit, a receiver device, a receiving circuit, or the like, and the transmitter may be referred to as a transmitting unit, a transmitter device, a transmitting circuit, or the like.

The part 1110 and the part 1120 may include one or more boards, and each board may include one or more processors and one or more memories. The processor is configured to read and execute a program in the memory, to implement a baseband processing function and control the base station. If there are a plurality of boards, the boards may be connected to each other, to enhance a processing capability. In an optional implementation, a plurality of boards may share one or more processors, or the plurality of boards share one or more memories, or the plurality of boards simultaneously share the one or more processors.

For example, in an implementation, the transceiver unit in the part 1130 is configured to perform receiving and sending-related steps performed by the network device in the embodiments shown in FIG. 4A, FIG. 4B, FIG. 5A, and FIG. 6. The processor in the part 1110 is configured to perform a processing-related step performed by the network device in the embodiments shown in FIG. 4A, FIG. 4B, FIG. 5A, and FIG. 6.

It should be understood that FIG. 11 is merely an example rather than a limitation, and the network device including the processor, the memory, and the transceiver may not depend on the structure shown in FIG. 11.

When the communication apparatus 1100 is the chip, the chip includes a transceiver, a memory, and a processor. The transceiver may be an input/output circuit or a communication interface. The processor is a processor, a microprocessor, or an integrated circuit integrated on the chip. The sending operation of the network device in the foregoing method embodiments may be understood as an output of the chip, and the receiving operation of the network device in the foregoing method embodiments may be understood as an input of the chip.

An embodiment of this application further provides a computer-readable storage medium. The computer-readable storage medium stores computer instructions for implementing the method performed by the terminal device or the method performed by the network device in the foregoing method embodiments.

For example, when the computer program is executed by a computer, the computer is enabled to implement the method performed by the terminal device or the method performed by the network device in the foregoing method embodiments.

An embodiment of this application further provides a computer program product including instructions. When the instructions are executed by a computer, the computer is enabled to implement the method performed by the terminal device or the method performed by the network device in the foregoing method embodiments.

An embodiment of this application further provides a communication system. The communication system includes the network device and the terminal device in the foregoing embodiments.

An embodiment of this application further provides a chip apparatus including a processor. The processor is configured to invoke a computer program or computer instructions stored in a memory, so that the processor performs a method in the embodiments shown in FIG. 4A, FIG. 4B, FIG. 5A, and FIG. 6.

In a possible implementation, an input of the chip apparatus is corresponding to a receiving operation in the embodiments shown in FIG. 4, FIG. 5A, and FIG. 6, and an output of the chip apparatus is corresponding to a sending operation in the embodiments shown in FIG. 4A, FIG. 4B, FIG. 5A and FIG. 6.

Optionally, the processor is coupled to the memory through an interface.

Optionally, the chip apparatus further includes the memory. The memory stores the computer program or the computer instructions.

The processor mentioned anywhere above may be a general-purpose central processing unit, a microprocessor, an application-specific integrated circuit (application-specific integrated circuit, ASIC), or one or more integrated circuits configured to control program execution of the method in the embodiments shown in FIG. 4A, FIG. 4B, FIG. 5A, and FIG. 6. The memory mentioned anywhere above may be a read-only memory (read-only memory, ROM), another type of static storage device that can store static information and instructions, a random access memory (random access memory, RAM), or the like.

It may be clearly understood by persons skilled in the art that, for the purpose of convenient and brief description, for detailed working processes of the foregoing system, apparatus, and unit, refer to corresponding processes in the foregoing method embodiments. Details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division during actual implementation. For example, a plurality of units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, a part that essentially contributes to the technical solutions of this application or all or some of the technical solutions may be implemented in a form of a software product. The computer software product is stored in a storage medium, and includes several instructions for enabling a computer device (which may be a personal computer, a server, a network device, or the like) to perform all or some steps of the method in embodiments of this application. The foregoing storage medium includes any medium that can store program code, for example, a USB flash drive, a removable hard disk, a ROM, a RAM, a magnetic disk, or an optical disc.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

**Claims**

1. A resource measurement method, wherein the method comprises:

   receiving, by a terminal device, first configuration information from a network device, wherein the first configuration information is used to configure a first measurement resource set, and the first measurement resource set comprises at least one of the following: an identifier of at least one candidate cell of the terminal device, a global identifier of a target measurement resource of the at least one candidate cell, or a local identifier of the target measurement resource of the at least one candidate cell; and

measuring, by the terminal device, the target measurement resource in the first measurement resource set, to obtain a first measurement result.

2. The method according to claim 1, wherein the first configuration information is further used to configure at least one second measurement resource set, the at least one second measurement resource set is in one-to-one correspondence with the at least one candidate cell, and one of the at least one second measurement resource set comprises a global identifier of a measurement resource of the candidate cell corresponding to the second measurement resource set.

3. The method according to claim 1 or 2, wherein the first configuration information further comprises configuration information of a measurement resource of the at least one candidate cell, and the configuration information of the measurement resource of the at least one candidate cell comprises at least one of the following: the identifier of the at least one candidate cell and configuration information of a reference signal of the at least one candidate cell, wherein the target measurement resource of the at least one candidate cell belongs to the measurement resource of the at least one candidate cell, and the identifier of the at least one candidate cell is a physical cell identifier PCI of the at least one candidate cell.

4. The method according to claim 3, wherein when the reference signal is a synchronization signal block SSB, the configuration information of the SSB of the at least one candidate cell comprises at least one of the following: a center frequency of the SSB, a subcarrier spacing of the SSB, an index of the SSB, a periodicity of the SSB, a system frame occupied by the SSB, an offset of the system frame occupied by the SSB, or a subframe offset of the SSB; or when the reference signal is a channel state information reference signal CSI-RS, the configuration information of the CSI-RS of the at least one candidate cell comprises at least one of the following: an identifier of a CSI-RS resource occupied by the CSI-RS, frequency domain resource density of the CSI-RS, a subcarrier spacing, a center frequency, bandwidth, a position of a start resource block RB, a scrambling sequence identifier, a periodicity, a slot offset, a power offset of the CSI-RS relative to an SSB, an index of an SSB associated with the CSI-RS, or an identifier of a cell to which the SSB associated with the CSI-RS belongs.

5. The method according to any one of claims 1 to 4, wherein the first configuration information is used to configure a plurality of measurement resource sets, and the first measurement resource set is one of the plurality of measurement resource sets; and

before the measuring, by the terminal device, the target measurement resource in the first measurement resource set, to obtain a first measurement result, the method further comprises:

receiving, by the terminal device, indication information from the network device, wherein the indication information indicates the first measurement resource set.

6. The method according to any one of claims 1 to 5, wherein the first measurement resource set further comprises an identifier of a serving cell of the terminal device, a global identifier of a target measurement resource of the serving cell, and a local identifier of the target measurement resource of the serving cell; and

the measuring, by the terminal device, the target measurement resource in the first measurement resource set, to obtain a first measurement result comprises:

measuring, by the terminal device, the target measurement resource of the at least one candidate cell and the target measurement resource of the serving cell, to obtain the first measurement result.

7. The method according to any one of claims 1 to 6, wherein the first configuration information further comprises configuration information of a measurement resource of the serving cell of the terminal device.

8. The method according to any one of claims 1 to 7, wherein the method further comprises:

receiving, by the terminal device, second configuration information from the network device, wherein the second configuration information indicates whether to enable layer 1 cell quality measurement, and/or the second configuration information indicates whether to enable layer 1 filtering; and

the measuring, by the terminal device, the target measurement resource in the first measurement resource set, to obtain a first measurement result comprises:

measuring, by the terminal device, the target measurement resource in the first measurement resource set based on the second configuration information, to obtain the first measurement result.

9. The method according to claim 8, wherein if the second configuration information indicates to enable the layer 1 cell quality measurement, the second configuration information comprises a cell quality calculation parameter, and the cell quality calculation parameter is used by the terminal device to calculate cell quality of each cell based on a measurement result of a reference signal of the cell in the first measurement resource set; and/or,

if the second configuration information indicates to enable the layer 1 cell quality measurement, the second configuration information comprises N weights, N reference signals of each cell in the first measurement resource set are in one-to-one correspondence with the N weights in descending or ascending order of signal quality of the N reference signals, the signal quality of the N reference signals and the N weights are used to determine the cell quality of the cell, and N is an integer greater than or equal to 1.

10. The method according to claim 8, wherein if the second configuration information indicates to enable the layer 1 filtering, the second configuration information comprises a layer 1 filtering coefficient, and the layer 1 filtering coefficient is used by the terminal device to perform layer 1 filtering on signal quality corresponding to a target measurement resource of each cell in the first measurement resource set.

11. The method according to claim 9 or 10, wherein the second configuration information is further used to configure a reporting quantity type of the terminal device.

12. The method according to any one of claims 1 to 11, wherein the method further comprises:

receiving, by the terminal device, third configuration information from the network device, wherein the third configuration information is used to configure a first reporting format; and
sending, by the terminal device, the first measurement result to the network device based on the first reporting format.

13. The method according to claim 12, wherein the first reporting format comprises: the terminal device reports at least signal quality of F target measurement resources with best signal quality in target measurement resources of each cell in the serving cell of the terminal device and the at least one candidate cell and a local identifier of the F target measurement resources with the best signal quality, wherein F is an integer greater than or equal to 1.

14. The method according to claim 12, wherein the first reporting format comprises: the terminal device reports at least signal quality of F target measurement resources with best signal quality in a target measurement resource of each of M cells and a local identifier of the F target measurement resources with the best signal quality, wherein the M cells are M cells with best cell quantity in the serving cell and the at least one candidate cell, and F is an integer greater than or equal to 1.

15. An activation method, wherein the method comprises:
receiving, by a terminal device, first indication information from a network device, wherein the first indication information is used to activate at least one first measurement resource set, or the first indication information is used to activate at least one second measurement resource set, or the first indication information is used to activate the at least one first measurement resource set and the at least one second measurement resource set, wherein each first measurement resource set comprises at least one of the following: an identifier of at least one candidate cell of the terminal device, a global identifier of a target measurement resource of the at least one candidate cell, or a local identifier of the target measurement resource of the at least one candidate cell; and each second measurement resource set comprises one or more measurement resources of a serving cell of the terminal device.

16. The method according to claim 15, wherein the first indication information is carried in a medium access control control element MAC CE.

17. The method according to claim 16, wherein 1 bit in the MAC CE indicates a type of a measurement resource set activated by using the MAC CE, and the type comprises the first measurement resource set or the second measurement resource set.

18. The method according to claim 16, wherein values of 4 bits in the MAC CE respectively indicate measurement resource sets corresponding to reporting configurations indicated by an S1 field to an S3 field in the MAC CE, and the measurement resource sets corresponding to the reporting configurations indicated by the S1 field to the S3 field comprise the first measurement resource set and/or the second measurement resource set.

19. The method according to claim 16, wherein the MAC CE comprises one or more new bits, the one or more bits indicate a type of a measurement resource set activated by using the MAC CE, and the type comprises the first measurement resource set or the second measurement resource set.

20. The method according to claim 16, wherein if the MAC CE is a first-type MAC CE, the MAC CE is used to activate the at least one first measurement resource set; or if the MAC CE is a second-type MAC CE, the MAC CE is used to activate the at least one second measurement resource set.

21. The method according to any one of claims 15 to 20, wherein the MAC CE is used to activate the at least one first measurement resource set, or the MAC CE is used to activate the at least one first measurement resource set and the at least one second measurement resource set; and the method further comprises: receiving, by the terminal device, at least one piece of first reporting configuration information from the network device, wherein the at least one piece of first reporting configuration information is used to configure a reporting format and a reporting type of a measurement result obtained by measuring a target measurement resource in the at least one first measurement resource set, and the reporting type is aperiodic reporting, semi-persistent reporting, or periodic reporting.

22. The method according to claim 21, wherein one piece of first reporting configuration information is corresponding to one first measurement resource set, each piece of first reporting configuration information comprises one reporting configuration identifier, and the reporting configuration identifier is corresponding to one reporting type.

23. The method according to claim 22, wherein when a reporting type corresponding to one reporting configuration identifier in the at least one piece of first reporting configuration information is semi-persistent reporting, the reporting configuration identifier is mapped to or associated with one codepoint in the first indication information.

24. The method according to claim 22, wherein when reporting types corresponding to a plurality of reporting configuration identifiers in the at least one piece of first reporting configuration information are semi-persistent reporting, the plurality of reporting configuration identifiers are mapped to or associated with a plurality of codepoints in the first indication information in ascending order, and the plurality of codepoints are sorted in ascending order.

25. The method according to claim 22, wherein the method further comprises: receiving, by the terminal device, at least one piece of second reporting configuration information from the network device, wherein the at least one piece of second reporting configuration information is used to configure a reporting format and a reporting type of a measurement result obtained by measuring the at least one second measurement resource set, and the reporting type is aperiodic reporting, semi-persistent reporting, or periodic reporting, wherein one piece of second reporting configuration information is corresponding to one second measurement resource set, each piece of second reporting configuration information comprises one reporting configuration identifier, and the reporting configuration identifier is corresponding to one reporting type.

26. The method according to claim 25, wherein when a reporting type corresponding to one reporting configuration identifier in the at least one piece of first reporting configuration information and the at least one piece of second reporting configuration information is semi-persistent reporting, the reporting configuration identifier is mapped to or associated with one codepoint in the first indication information.

27. The method according to claim 25, wherein when reporting types corresponding to a plurality of reporting configuration identifiers in the at least one piece of first reporting configuration information and the at least one piece of second reporting configuration information are semi-persistent reporting, the plurality of reporting configuration identifiers are mapped to or associated with a plurality of codepoints in the first indication information in ascending order, and the plurality of codepoints are sorted in ascending order.

28. The method according to claim 25, wherein when reporting types corresponding to a plurality of reporting configuration identifiers in the at least one piece of first reporting configuration information are semi-persistent reporting, the plurality of reporting configuration identifiers are mapped to or associated with a plurality of first codepoints in the first indication information in ascending order, and the plurality of first codepoints are sorted in ascending order; and when reporting types corresponding to a plurality of reporting configuration identifiers in the at least one piece of second reporting configuration information are semi-persistent reporting, the plurality of reporting configuration identifiers are mapped to or associated with a plurality of second codepoints in the first indication information in ascending order, and the plurality of second codepoints are sorted in ascending order.

29. The method according to any one of claims 21 to 28, wherein for a measurement result of one of the at least one first measurement resource set, the reporting format comprises: the terminal device reports at least signal quality of F target measurement resources with best signal quality in target measurement resources of each cell in the serving cell of the terminal device and the at least one candidate cell and a local identifier of the F target measurement resources with the best signal quality, wherein F is an integer greater than or equal to 1.

30. The method according to any one of claims 21 to 28, wherein for a measurement result of one of the at least one first measurement resource set, the reporting format comprises: the terminal device reports at least signal quality of F target measurement resources with best signal quality in a target measurement resource of each of M cells and a local identifier of the F target measurement resources with the best signal quality, wherein the M cells are M cells with best cell quantity in the serving cell and the at least one candidate cell, and F is an integer greater than or equal to 1.

31. The method according to any one of claims 21 to 30, wherein the method further comprises:
measuring, by the terminal device based on the reporting format configured by using the at least one piece of first reporting configuration information, the target measurement resource in the at least one first measurement resource set activated by using the first indication information, to obtain at least one first measurement result.

32. The method according to any one of claims 15 to 31, wherein the method further comprises:
receiving, by the terminal device, measurement resource set configuration information from the network device, wherein the measurement resource set configuration information is used to configure the at least one first measurement resource set.

33. A measurement gap configuration method, wherein the method comprises:

receiving, by a terminal device, first information from a network device, wherein the first information is used to configure at least one measurement gap for the terminal device, and in the at least one measurement gap, each measurement gap is corresponding to one or more neighbor cells of the terminal device, or each measurement gap is corresponding to one beam or one group of beams of the terminal device, or each measurement gap is corresponding to one or more measurement resource sets of the terminal device; and
measuring, by the terminal device, a reference signal based on the at least one measurement gap.

34. The method according to claim 33, wherein the first information comprises an identifier of the at least one measurement gap.

35. The method according to claim 33 or 34, wherein the method further comprises:

receiving, by the terminal device, indication information from the network device, wherein the indication information indicates a target measurement gap and duration of the target measurement gap, and the target measurement gap belongs to the at least one measurement gap; and
adjusting, by the terminal device, the duration of the target measurement gap based on the indication information.

36. The method according to any one of claims 33 to 35, wherein the measuring, by the terminal device, a reference signal based on the at least one measurement gap comprises one or more of the following:

when one of the at least one measurement gap overlaps an uplink time domain symbol in a time division duplex TDD configuration of the terminal device, preferentially measuring, by the terminal device, a reference signal in the measurement gap; or
when a cell-level signal of the terminal device occupies one of the at least one measurement gap, preferentially performing, by the terminal device, transmission of the cell-level signal, and skipping measuring a reference signal in the measurement gap; or
when one or more of a sounding reference signal, access point-channel state information, an uplink control channel, and a hybrid retransmission signal of the terminal device occupy one of the at least one measurement gap, preferentially performing, by the terminal device, transmission of the one or more of the sounding reference signal, the access point-channel state information, the uplink control channel, and the hybrid retransmission signal; or

when the at least one measurement gap comprises a first measurement gap and a second measurement gap, and the first measurement gap overlaps the second measurement gap, preferentially measuring, by the terminal device, a reference signal in a measurement gap with a higher priority in the first measurement gap and the second measurement gap.

37. The method according to any one of claims 33 to 36, wherein the method further comprises:
sending, by the terminal device, a first request to the network device, wherein the first request is used to request the network device to configure the measurement gap for the terminal device.

38. The method according to claim 37, wherein the first request is carried in layer 3 measurement reporting signaling, or carried in scheduling signaling.

39. The method according to claim 37 or 38, wherein the first request comprises one or a combination of the following: an identifier of a neighbor cell for which the measurement gap is requested to be configured, a reference signal identifier or a reference signal set identifier, duration of the measurement gap requested to be configured, a quantization unit of the measurement gap, adjustment duration needed by the terminal device to adjust an operating frequency or operating bandwidth of a radio frequency link, a first quantity of time domain symbols, or a second quantity of time domain symbols, wherein
the first quantity of time domain symbols is a quantity of time domain symbols that are before a start time domain symbol occupied by the terminal device to request a reference signal and that are consecutive to the start time domain symbol, and the second quantity of time domain symbols is a quantity of time domain symbols that are after an end time domain symbol occupied by the terminal device to request the reference signal and that are consecutive to the end time domain symbol.

40. The method according to any one of claims 33 to 39, wherein the method further comprises:
sending, by the terminal device, capability information to the network device, wherein the capability information indicates one or more of the following: whether the terminal device supports configuration of a layer 1 measurement gap, whether the terminal device supports dynamic adjustment of the layer 1 measurement gap, or a quantity of configurable layer 1 measurement gaps that are supported by the terminal device.

41. The method according to any one of claims 33 to 40, wherein the first information is carried in layer 1 measurement configuration information.

42. A communication apparatus, wherein the communication apparatus comprises a transceiver module and a processing module, wherein

the transceiver module is configured to perform a transceiver module of the method according to any one of claims 1 to 14, and the processing module is configured to perform a processing operation of the method according to any one of claims 1 to 14; or
the transceiver module is configured to perform a transceiver module of the method according to any one of claims 33 to 41, and the processing module is configured to perform a processing operation of the method according to any one of claims 33 to 41.

43. A communication apparatus, wherein the communication apparatus comprises a transceiver module, and the transceiver module is configured to perform receiving and sending operations of the method according to any one of claims 15 to 32.

44. The communication apparatus according to claim 43, wherein the communication apparatus further comprises a processing module, and the processing module is configured to perform a processing operation of the method according to any one of claims 15 to 32.

45. A communication apparatus, wherein the communication apparatus comprises a processor, and the processor is configured to execute a computer program or computer instructions in a memory, to perform the method according to any one of claims 1 to 14, the method according to any one of claims 15 to 32, or the method according to any one of claims 33 to 41.

46. A computer-readable storage medium, wherein the computer-readable storage medium stores a computer program,

EP 4 615 055 A1

and when the computer program is executed by a communication apparatus, the communication apparatus is enabled to perform the method according to any one of claims 1 to 14, the method according to any one of claims 15 to 32, or the method according to any one of claims 33 to 41.

FIG. 1

FIG. 2

Beam 1

Beam 2

Beam K

A

Layer 1 filtering

Layer 1 filtering

Layer 1 filtering

A1

Beam consolidation and beam selection

B

Cell quality

Perform layer 3 filtering on the cell quality

C

C1

Report standard evaluation

D

Layer 3 beam filtering

Layer 3 beam filtering

Layer 3 beam filtering

E

Beam selection report

F

FIG. 3A

60

Case 1

Measurement gap (4 milliseconds)

1 millisecond

SMTC window
(2 milliseconds)

SSB: #0    #1    #2    #3

Actual measurement window
(3 milliseconds)

Time needed by a radio frequency link

Case 2

Measurement gap (6 milliseconds)

1 millisecond

SMTC window
(4 milliseconds)

SSB: #0    #1    #2    #3    #4    #5    #6    #7

Actual measurement window (5 milliseconds)

Time needed by a radio frequency link

FIG. 3B

FIG. 4A

Terminal device

Network device

4001a: At least one piece of first reporting configuration information

4001b: At least one piece of second reporting configuration information

4001c: Measurement resource set configuration information

4001: First indication information

4002: Measure a target measurement resource in at least one first measurement resource set activated by using the first indication information, to obtain at least one first measurement result

4003: Send the at least one first measurement result based on a reporting format configured by using at least one piece of reporting configuration information

FIG. 4B

| R | Serving cell ID | | BWP ID | | Oct 1 |
| R | R | R | R | $S_3$ | $S_2$ | $S_1$ | $S_0$ | Oct 2 |

FIG. 4C

FIG. 5A

Timing of a
neighbor cell

RS

Timing of a
serving cell

0    1    2    3    4    5

FIG. 5B

Terminal
device

Network
device

601: First indication information
(indicating the terminal device to
enable a first measurement gap)

601a: Acknowledgment information
(used to acknowledge to enable the
first measurement gap)

602: The terminal device measures a
reference signal based on the first
measurement gap

FIG. 6

FIG. 7

FIG. 8

FIG. 9

FIG. 10

FIG. 11

## INTERNATIONAL SEARCH REPORT

| International application No. |
|---|
| **PCT/CN2023/129757** |

**A. CLASSIFICATION OF SUBJECT MATTER**

H04W 36/00(2009.01)i

According to International Patent Classification (IPC) or to both national classification and IPC

**B. FIELDS SEARCHED**

Minimum documentation searched (classification system followed by classification symbols)

IPC:H04W,H04L,H04B

Documentation searched other than minimum documentation to the extent that such documents are included in the fields searched

Electronic data base consulted during the international search (name of data base and, where practicable, search terms used)

3GPP, VEN, DWPI, ENTXT, CNTXT, ENTXTC: 编号, 标识, 标志, 触发, 候选集, 激活, 集合, 临近小区, 临区, 临小区, 邻近小区, 目标小区, 目的小区, 频点, 索引, 相邻小区, 子载波, 子帧, active, CSI, id, pci, RSRP, SSB, activ+, trigger+, cell, beam, resource, measurement, configuration, gap, frequency, target

**C. DOCUMENTS CONSIDERED TO BE RELEVANT**

| Category* | Citation of document, with indication, where appropriate, of the relevant passages | Relevant to claim No. |
|---|---|---|
| X | US 2021329512 A1 (HUAWEI TECHNOLOGIES CO., LTD.) 21 October 2021 (2021-10-21) description, paragraphs [0007]-[0025], [0051]-[0069], and [0083]-[0171] | 1-14, 42, 45-46 |
| X | WO 2021160028 A1 (ZTE CORP.) 19 August 2021 (2021-08-19) description, page 1, paragraph 3-page 2, paragraph 7, and page 17, paragraph 2-page 26, paragraph 6 | 15-32, 43-46 |
| X | WO 2021249001 A1 (HUAWEI TECHNOLOGIES CO., LTD.) 16 December 2021 (2021-12-16) description, page 1, line 10-page 6, line 5, and page 15, line 5-page 22, line 35 | 33-42, 45-46 |
| A | CN 114390611 A (DATANG MOBILE COMMUNICATIONS EQUIPMENT CO., LTD.) 22 April 2022 (2022-04-22) entire document | 1-46 |
| A | WO 2022120574 A1 (HUAWEI TECHNOLOGIES CO., LTD.) 16 June 2022 (2022-06-16) entire document | 1-46 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 January 2024** | **25 January 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| US | 2021329512 | A1 | 21 October 2021 | WO | 2021209012 | A1 | 21 October 2021 |
| | | | | EP | 4128890 | A1 | 08 February 2023 |
| | | | | CN | 115398982 | A | 25 November 2022 |
| WO | 2021160028 | A1 | 19 August 2021 | CA | 3171339 | A1 | 19 August 2021 |
| | | | | EP | 4138453 | A1 | 22 February 2023 |
| | | | | KR | 20220141336 | A | 19 October 2022 |
| | | | | US | 2023078059 | A1 | 16 March 2023 |
| | | | | CN | 111901837 | A | 06 November 2020 |
| | | | | IN | 202227052529 | A | 30 December 2022 |
| | | | | ZA | 202210203 | A | 31 May 2023 |
| WO | 2021249001 | A1 | 16 December 2021 | CN | 113810924 | A | 17 December 2021 |
| CN | 114390611 | A | 22 April 2022 | WO | 2022083583 | A1 | 28 April 2022 |
| | | | | EP | 4236435 | A1 | 30 August 2023 |
| WO | 2022120574 | A1 | 16 June 2022 | CN | 116547922 | A | 04 August 2023 |

Form PCT/ISA/210 (patent family annex) (July 2022)

**EP 4 615 055 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211379058